# EUROPEAN PATENT SPECIFICATION

(11) **EP 4 167 216 B1**
(45) Date of publication and mention of the grant of the patent: **02.09.2026**
(21) Application number: 21843027.0
(22) Date of filing: 09.07.2021
(51) Int. Cl.: G09F 9/30, G06F 1/16

(54) **ELECTRONIC DEVICE COMPRISING EXPANDABLE DISPLAY**
ELEKTRONISCHE VORRICHTUNG MIT ERWEITERBARER ANZEIGE
DISPOSITIF ÉLECTRONIQUE COMPRENANT UN ÉCRAN ÉTIRABLE

(30) Priority: 14.07.2020 KR 20200086846; 01.04.2021 KR 20210042762
(43) Date of publication of application: 19.04.2023
(73) Proprietor: Samsung Electronics Co., Ltd., Gyeonggi-do 16677 (KR)
(72) Inventor: KIM, Junhyuk, Suwon-si Gyeonggi-do 16677 (KR); HONG, Sungmin, Suwon-si Gyeonggi-do 16677 (KR); KIM, Youngseong, Suwon-si Gyeonggi-do 16677 (KR); KANG, Jooyoung, Suwon-si Gyeonggi-do 16677 (KR); KIM, Yangwook, Suwon-si Gyeonggi-do 16677 (KR); PARK, Gyeongtae, Suwon-si Gyeonggi-do 16677 (KR); HONG, Hyunju, Suwon-si Gyeonggi-do 16677 (KR)
(74) Representative: Nederlandsch Octrooibureau
(86) International application number: PCT/KR2021/008760
(87) International publication number: WO 2022/014958

(56) References cited:
- WO-A1-2018/186631
- WO-A1-2019/009542
- WO-A1-2019/146865
- WO-A1-2019/194520
- WO-A1-2019/245165
- CN-A- 110 246 422
- CN-A- 110 706 598
- CN-A- 111 243 438
- KR-A- 20160 141 255
- KR-A- 20170 025 520
- KR-A- 20180 039 799
- US-A1- 2018 081 473
- US-A1- 2021 135 151
- US-A1- 2021 135 492
- US-A1- 2022 039 273
- US-A1- 2022 130 287
- US-A1- 2023 109 963

## Description

### [Technical Field]

Embodiments of the disclosure relate to an electronic device including an extendable display.

### [Background Art]

An electronic device may provide various functions, such as playback of media contents, games, web surfing, and the like, as well as voice calls and short messages. In order for a user to conveniently use the various functions of the electronic device, a display of the electronic device needs to be wide. However, the portability of the electronic device may be lowered as the area of the display is increased. Accordingly, an electronic device equipped with a flexible display and having a variable display area, for example, a foldable electronic device, a rollable electronic device, or a slidable electronic device is being developed. The convenience of use may be improved by providing a wide screen as needed through a structure capable of extending or reducing the display area while maintaining excellent portability of the electronic device.
WO 2019/245165 A1 discloses an electronic device which employs a flexible display and, even when a housing is changed in size or shape, can keep an antenna at the same characteristic. The electronic device may comprise: a first side surface member, on one surface of which a plurality of conductive parts and at least one first non-conductive part disposed between the plurality of conductive parts are arranged; a second side surface member movable toward the one side of the first side surface member; a flexible display, the width of the exposed portion of which can be adjusted on the basis of the movement of the second side surface member; and a wireless communication circuit electrically connected to at least one of the plurality of conductive parts and configured to transmit or receive an RF signal, wherein the second side surface member comprises a sliding cover surface disposed to face the one surface of the first side sur face member, and the sliding cover surface has at least one second non-conductive part formed on a portion thereof facing the first non-conductive part, when the overlap between the second side surface member and the first side surface member is largest, and the sliding cover surface is formed not to face the first non-conductive part when the overlap between the second side surface member and the first side surface member is smallest or there is no overlap therebetween.
CN 110 706 598 A, CN 110 246 422 A, CN 111 243 438 A and WO 2019/194520 A1 relate to the use of rollers in order to accommodate parts of a flexible display that are slid under a fixed housing.

### [Disclosure]

### [Technical Problem]

In the implementation of an extendable display, a structure capable of overcoming a space limitation due to other electronic parts and mechanical parts in an electronic device while meeting user needs for a large screen may be required.

Since the electronic device including the extendable display is extended by a user's external physical force, the electronic device may be extended irrespective of the user's intention, or depending on users, it may be difficult to extend the electronic device.

Embodiments of the disclosure provide an electronic device including a flexible display that is extendable in opposite directions through a second housing structure and a third housing structure that are coupled to a first housing structure so as to slide.

According to the disclosure, magnet members and actuators may prevent the electronic device from being unintentionally extended, or may help the electronic device to be easily extended.

Unlike an electronic device having a fixed screen area, an electronic device including an extendable display may have various screen forms depending on usage conditions. Therefore, a layout configuration method used for a fixed screen may not be appropriate for the electronic device including the extendable display. In a case in which the size of a screen area is variable, a user interface (UI)/user experience (UX) different from that of the fixed screen area may be required.

Embodiments of the disclosure provide an electronic device for effectively displaying and transferring information desired by a user depending on a direction in which a display is extended and a distance by which the display is extended and a method for controlling a screen of the electronic device.

### [Technical Solution]

The invention is defined by the independent claims. Particular embodiments are defined in the dependent claims.

### [ Advantageous Effects]

According to the embodiments, a larger-area screen may be provided to a user through the display extendable in the opposite directions.

According to the embodiments, safety and user convenience may be improved by preventing unintended extension of the electronic device or assisting with easy extension of the electronic device.

According to the embodiments, user convenience may be improved by effectively displaying and transferring information desired by a user depending on a change in the size of the screen area.

In addition, the disclosure may provide various effects that are directly or indirectly recognized.

### [ Description of Drawings]

FIG. 1 is a perspective view illustrating an electronic device according to an embodiment.
FIG. 2 is an exploded perspective view of the electronic device according to an embodiment.
FIG. 3A illustrates first guide members and a first panel support member according to an embodiment.
FIG. 3B is a projection view when the first guide members and the first panel support member of FIG. 3A are viewed in a direction B.
FIG. 4A illustrates the electronic device in a normal state (or, a normal mode) according to an embodiment.
FIG. 4B is a sectional view illustrating the electronic device in the normal state according to an embodiment.
FIG. 4C is an enlarged sectional view illustrating a second housing illustrated in FIG. 4B.
FIG. 5A is a perspective view illustrating the electronic device in a first extended state (or, a first extended mode) according to an embodiment.
FIG. 5B is a sectional view illustrating the electronic device in the first extended state according to an embodiment.
FIG. 5C is a view illustrating extension or reduction of a second region of a display depending on a sliding motion of the second housing of the electronic device according to an embodiment.
FIG. 6A is a perspective view illustrating the electronic device in a second extended state (or, a second extended mode) according to an embodiment.
FIG. 6B is a sectional view illustrating the electronic device in the second extended state according to an embodiment.
FIG. 7A is a perspective view illustrating the electronic device in a third extended state (or, a third extended mode) according to an embodiment.
FIG. 7B is a sectional view illustrating the electronic device in the third extended state according to an embodiment.
FIG. 8A illustrates the electronic device including an actuator according to an embodiment.
FIG. 8B illustrates the electronic device including the actuator according to an embodiment.
FIG. 8C illustrates the electronic device including an actuator according to another embodiment.
FIG. 9 illustrates an electronic device according to another embodiment.
FIG. 10A is a perspective view illustrating a rear surface of an electronic device according to an embodiment.
FIG. 10B is a perspective view illustrating a rear surface of an electronic device according to another embodiment.
FIG. 10C is a perspective view illustrating a rear surface of an electronic device according to another embodiment.
FIG. 11 is a functional block diagram illustrating an exemplary configuration of an electronic device according to an embodiment.
FIG. 12A illustrates the electronic device according to an embodiment.
FIG. 12B illustrates the electronic device according to an embodiment.
FIG. 12C illustrates the electronic device according to an embodiment.
FIG. 12D illustrates the electronic device according to an embodiment.
FIG. 13A illustrates the electronic device according to an embodiment.
FIG. 13B illustrates the electronic device according to an embodiment.
FIG. 13C illustrates the electronic device according to an embodiment.
FIG. 14A illustrates a front surface of the electronic device according to an embodiment.
FIG. 14B illustrates a rear surface of the electronic device according to an embodiment.
FIG. 15A illustrates the electronic device according to an embodiment.
FIG. 15B illustrates the electronic device according to an embodiment.
FIG. 16A illustrates the electronic device according to an embodiment.
FIG. 16B illustrates the electronic device according to an embodiment.
FIG. 17A illustrates the electronic device according to an embodiment.
FIG. 17B illustrates the electronic device according to an embodiment.
FIG. 18A illustrates the electronic device according to an embodiment.
FIG. 18B illustrates the electronic device according to an embodiment.
FIG. 19A illustrates the electronic device according to an embodiment.
FIG. 19B illustrates the electronic device according to an embodiment.
FIG. 20A illustrates the electronic device according to an embodiment.
FIG. 20B illustrates the electronic device according to an embodiment.
FIG. 21A illustrates the electronic device according to an embodiment.
FIG. 21B illustrates the electronic device according to an embodiment.
FIG. 21C illustrates the electronic device according to an embodiment.
FIG. 22A illustrates the electronic device according to an embodiment.
FIG. 22B illustrates the electronic device according to an embodiment.
FIG. 23A illustrates the electronic device according to an embodiment.
FIG. 23B illustrates the electronic device according to an embodiment.
FIG. 23C illustrates the electronic device according to an embodiment.
FIG. 23D illustrates the electronic device according to an embodiment.
FIG. 24A illustrates the electronic device according to an embodiment.
FIG. 24B illustrates the electronic device according to an embodiment.
FIG. 24C illustrates the electronic device according to an embodiment.
FIG. 24D illustrates the electronic device according to an embodiment.
FIG. 25A illustrates the electronic device according to an embodiment.
FIG. 25B illustrates the electronic device in which a display is extended by a first distance according to an embodiment.
FIG. 25C illustrates the electronic device in which the display is extended by a second distance greater than the first distance according to an embodiment.
FIG. 26A illustrates the electronic device according to an embodiment.
FIG. 26B illustrates the electronic device according to an embodiment.
FIG. 27A illustrates the electronic device according to an embodiment.
FIG. 27B illustrates the electronic device according to an embodiment.
FIG. 28A illustrates the electronic device according to an embodiment.
FIG. 28B illustrates the electronic device according to an embodiment.
FIG. 28C illustrates the electronic device according to an embodiment.
FIG. 29A illustrates the electronic device according to an embodiment.
FIG. 29B illustrates the electronic device according to an embodiment.
FIG. 29C illustrates the electronic device according to an embodiment.
FIG. 30A illustrates the electronic device according to an embodiment.
FIG. 30B illustrates the electronic device according to an embodiment.
FIG. 31 is a flowchart illustrating operations performed by the electronic device according to an embodiment.
FIG. 32 is a block diagram of an electronic device in a network environment according to various embodiments.
FIG. 33 is a block diagram of a display module according to various embodiments.

With regard to description of the drawings, identical or similar reference numerals may be used to refer to identical or similar components.

### [ Mode for Invention]

Hereinafter, various embodiments of the disclosure may be described with reference to accompanying drawings. Accordingly, those of ordinary skill in the art will recognize that modification, and/or alternative on the various embodiments described herein can be variously made without departing from the scope of the disclosure.

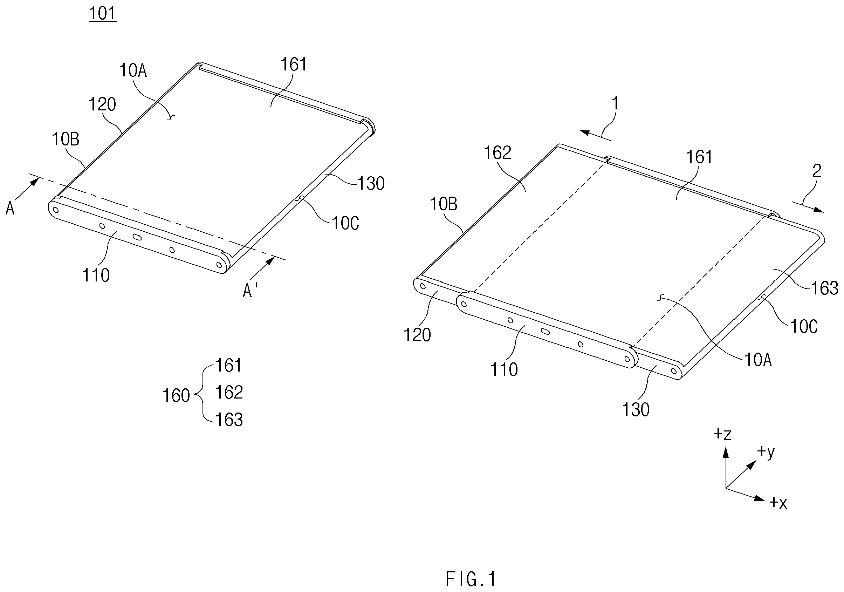

FIG. 1 is a perspective view illustrating an electronic device according to an embodiment.

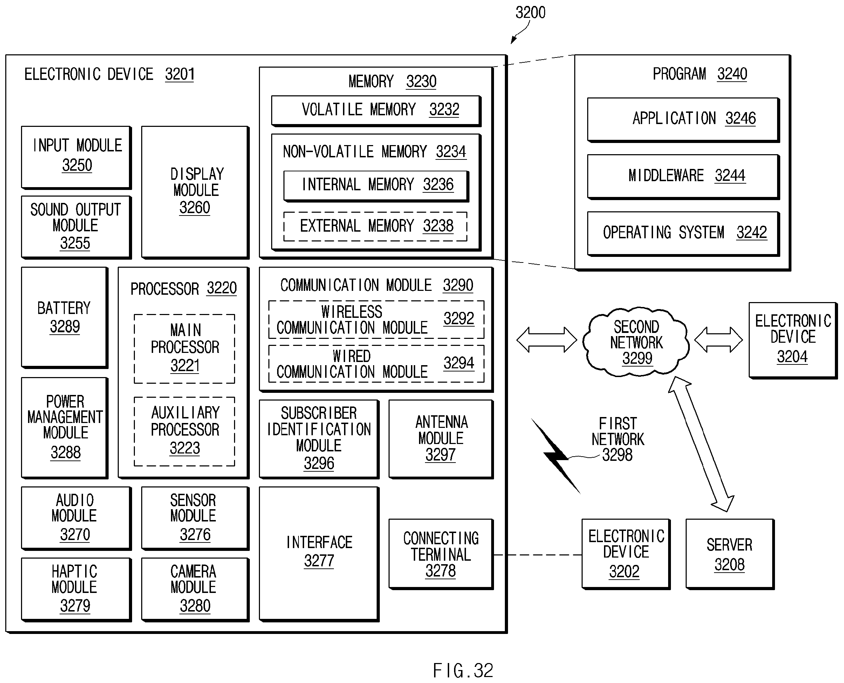

Referring to FIG. 1, the electronic device 101 according to the wording of the independent claims (e.g., an electronic device 3201 of FIG. 32) includes a first housing (or, a first housing structure) 110, a second housing (or, a second housing structure) 120, a third housing (or, a third housing structure) 130, and a display (or, a flexible display or a rollable display) 160.

According to the wording of the independent claims, at least a portion of the second housing 120 is disposed in the first housing 110. The second housing 120 may at least partially overlap the first housing 110. The second housing 120 is coupled to the first housing 110 such that at least a portion is movable to the outside of the first housing 110. For example, the second housing 120 may be coupled to the first housing 110 so as to be movable in a direction away from the center of the first housing 110. The second housing 120 is coupled to the first housing 110 so as to be movable in a first direction 1. The first direction 1 is a direction in which a first side surface 10B of the electronic device 101 formed by the second housing 120 faces. In an embodiment, the second housing 120 may move in the first direction 1 or the direction opposite to the first direction 1. For example, the second housing 120 may reciprocate in the -x direction or the +x direction.

According to the wording of the independent claims, at least a portion of the third housing 130 is disposed in the first housing 110. The third housing 130 at least partially overlaps the first housing 110. The third housing 130 is coupled to the first housing 110 such that at least a portion is movable to the outside of the first housing 110. For example, the third housing 130 may be coupled to the first housing 110 so as to be movable in a direction away from the center of the first housing 110. The third housing 130 is coupled to the first housing 110 so as to be movable in a second direction 2. The second direction 2 is a direction in which a second side surface 10C of the electronic device 101 formed by the third housing 130 faces. In an embodiment, the third housing 130 may move in the second direction 2 or the direction opposite to the second direction 2. For example, the third housing 130 may reciprocate in the -x direction or the +x direction.

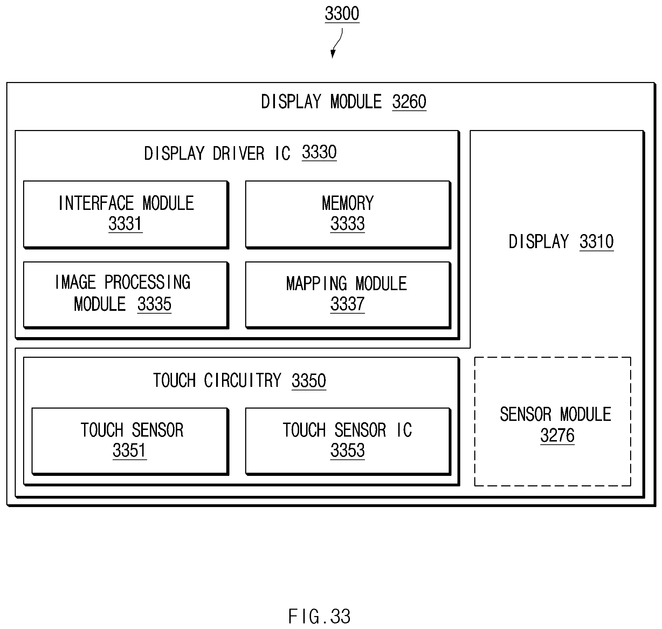

According to the wording of the independent claims, the display 160 (e.g., a display module 3260 of FIG. 32) is provided in a form in which at least a portion (e.g., a second region 162 and a third region 163) is flexible. According to an embodiment, the display 160 may include a panel layer that has a plurality of pixels disposed therein in a matrix form and that displays a screen and an external protective layer disposed on the panel layer. The external protective layer may be formed of a polymer structure (e.g., polyimide) and/or glass. The external protective layer may be formed to be substantially transparent such that light emitted from the panel layer is visible to a user. Additionally, the display 160 may include a touch panel layer (e.g., touch circuitry 3350 of FIG. 33).

According to the wording of the independent claims, the display 160 includes a first region 161, the second region 162, and the third region 163. In an embodiment, the first region 161 of the display 160 may be located between the second region 162 and the third region 163 and may extend from the second region 162 to the third region 163.

In an embodiment, the display 160 may be disposed on the first housing 110, the second housing 120, and the third housing 130. In an embodiment, the first region 161 of the display 160 may be at least partially accommodated in a space formed by the first housing 110. In an embodiment, the first region 161 of the display 160 disposed in the first housing 110 may form a front surface (or, a first surface) 10A of the electronic device 101.

In an embodiment, the second region 162 of the display 160 may extend from the first region 161. For example, the second region 162 of the display 160 may extend from one side of the first region 161. For example, the second region 162 of the display 160 may extend from the first region 161 in the first direction 1 (e.g., the -x direction). In an embodiment, the second region 162 of the display 160 may extend from the first region 161 into the second housing 120.

According to the wording of the independent claims,, at least a portion of the second region 162 of the display 160 is disposed in the second housing 120. In an embodiment, the second region 162 of the display 160 at least partially disposed in the second housing 120 may not be exposed outside the electronic device 101. In an embodiment, when the second housing 120 moves in the first direction 1, at least a portion of the second region 162 located in the second housing 120 may be exposed to the outside. In an embodiment, the second region 162 of the display 160 exposed outside the electronic device 101 depending on the movement of the second housing 120 may form the front surface 10A of the electronic device 101 together with the first region 161. In an embodiment, the front surface 10A of the electronic device 101 formed by the display 160 may be extended (e.g., the area of the front surface 10A may be increased) depending on the movement of the second housing 120.

In an embodiment, the third region 163 of the display 160 may extend from the first region 161. For example, the third region 163 of the display 160 may extend from an opposite side of the first region 161. For example, the third region 163 of the display 160 may extend from the first region 161 in the second direction 2 (e.g., the +x direction). In an embodiment, the third region 163 of the display 160 may extend from the first region 161 into the third housing 130.

According to the wording of the independent claims, at least a portion of the third region 163 of the display 160 is disposed in the third housing 130. In an embodiment, the third region 163 of the display 160 at least partially disposed in the third housing 130 may not be exposed outside the electronic device 101. In an embodiment, when the third housing 130 moves in the second direction 2, at least a portion of the third region 163 located in the third housing 130 may be exposed to the outside. In an embodiment, the third region 163 of the display 160 exposed outside the electronic device 101 depending on the movement of the third housing 130 may form the front surface 10A of the electronic device 101 together with the first region 161. In an embodiment, the front surface 10A of the electronic device 101 formed by the display 160 may be extended depending on the movement of the third housing 130.

In an embodiment, when the second housing 120 and the third housing 130 move in the first direction 1 and the second direction 2, the second region 162 and the third region 163 of the display 160 may form the front surface 10A of the electronic device 101 together with the first region 161. In an embodiment, the front surface 10A of the electronic device 101 formed by the display 160 may be extended depending on movement of the second housing 120 and the third housing 130. In an embodiment, the extended front surface 10A of the electronic device 101 may be reduced depending on movement of the second housing 120 and/or the third housing 130.

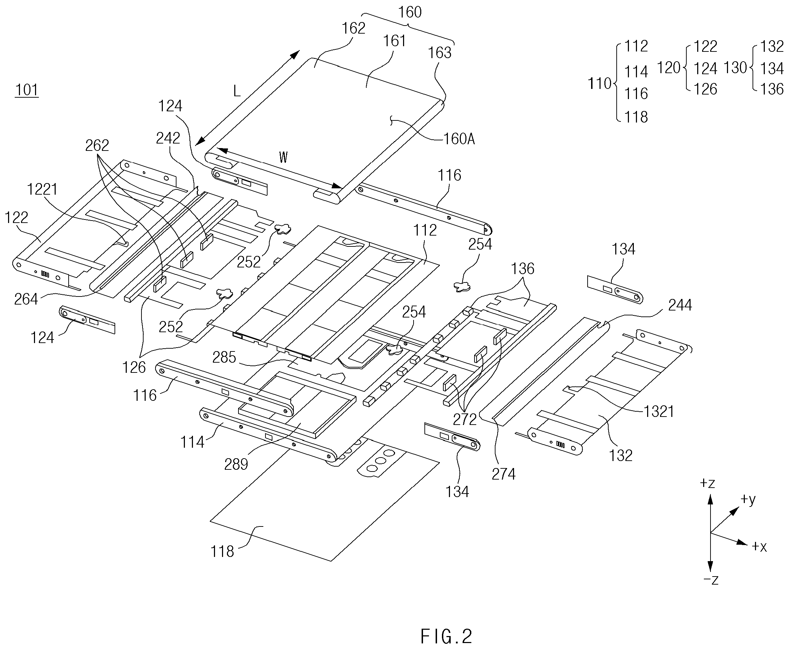

FIG. 2 is an exploded perspective view of the electronic device according to an embodiment.

In FIG. 2, repetitive descriptions of components having the same reference numerals as those illustrated in FIG. 1 will be omitted.

Referring to FIG. 2, the electronic device 101 according to an embodiment may include a printed circuit board (PCB) 285 and a battery 289 (e.g., a battery 3289 of FIG. 32).

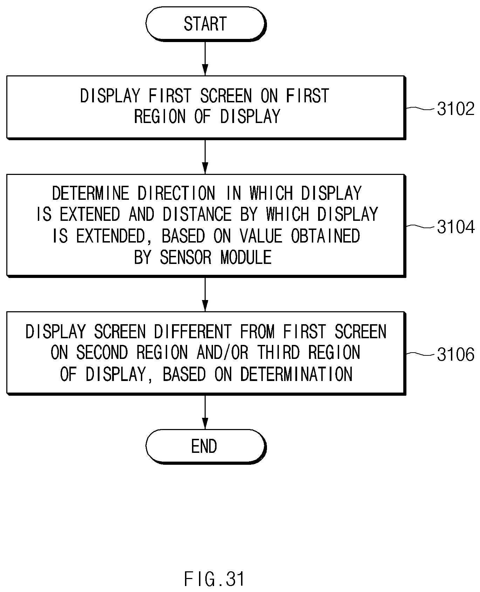

In an embodiment, at least one of a processor (e.g., a processor 3220 of FIG. 32), a memory (e.g., a memory 3230 of FIG. 32), or an interface (e.g., an interface 3277 of FIG. 32) may be mounted on the PCB 285. The processor may include, for example, at least one of a central processing unit, an application processor, a graphic processing unit, an image signal processor, a sensor hub processor, or a communication processor. The memory may include, for example, at least one of a volatile memory or a non-volatile memory. The interface may include, for example, at least one of a high definition multimedia interface (HDMI), a universal serial bus (USB) interface, an SD card interface, or an audio interface. For example, the interface may electrically or physically connect the electronic device 101 with an external electronic device and may include at least one of a USB connector, an SD card/MMC connector, or an audio connector. In another example, at least one of the components of the electronic device 3201 illustrated in FIG. 31 may be disposed on the PCB 285.

In an embodiment, the battery 289, which is a device for supplying power to at least one component of the electronic device 101, may include, for example, a primary cell that is not rechargeable, a secondary cell that is rechargeable, or a fuel cell. At least a portion of the battery 289, for example, may be disposed on substantially the same plane as the PCB 285. The battery 289 may be integrally disposed inside the electronic device 101, or may be disposed so as to be detachable from the electronic device 101.

In an embodiment, the electronic device 101 may include a first support structure 242 and a second support structure 244 that are disposed under the display 160.

In an embodiment, the first support structure 242 may be disposed on a rear surface of the second region 162 of the display 160 (e.g., a surface facing away from a front surface 160A). In an embodiment, the first support structure 242 may be disposed on the rear surface of the second region 162 of the display 160 through an adhesive member (e.g., a double-sided tape).

In an embodiment, the first support structure 242 may include a first plurality of bars. The first plurality of bars may extend in a lengthwise direction L of the display 160 (e.g., the y-axis direction) and may be arranged in a width direction W of the display 160 (e.g., the x-axis direction). The first plurality of bars may be coupled to operate in conjunction with each other such that each of the first plurality of bars is rotatable relative to an adjacent bar in a specified angle range. In an embodiment, the first support structure 242 may be bent depending on a rotation angle provided by the first plurality of bars. In an embodiment, the first support structure 242 may be referred to as a first multi-bar 242 in that the first support structure 242 includes the plurality of bars. However, the first support structure 242 is not necessarily limited to including the plurality of bars. The first support structure 242 may include various structures (e.g., a lattice structure) that are at least partially bendable while supporting the display 160.

In an embodiment, the second support structure 244 may be disposed on a rear surface of the third region 163 of the display 160. In an embodiment, the second support structure 244 may be disposed on the rear surface of the third region 163 of the display 160 through an adhesive member (e.g., a double-sided tape).

In an embodiment, the second support structure 244 may include a second plurality of bars. The second plurality of bars may extend in the lengthwise direction L of the display 160 (e.g., the y-axis direction) and may be arranged in the width direction W of the display 160 (e.g., the x-axis direction). The second plurality of bars may be coupled to operate in conjunction with each other such that each of the second plurality of bars is rotatable relative to an adjacent bar in a specified angle range. In an embodiment, the second support structure 244 may be bent depending on a rotation angle provided by the second plurality of bars. In an embodiment, the second support structure 244 may be referred to as a second multi-bar 244 in that the second support structure 244 includes the plurality of bars. However, the second support structure 244 is not necessarily limited to including the plurality of bars. The second support structure 244 may include various structures (e.g., a lattice structure) that are at least partially bendable while supporting the display 160.

In an embodiment, the first support structure 242 and/or the second support structure 244 may be formed of metal, but is not limited thereto.

The first housing 110 of the electronic device 101 according to an embodiment may include a first support member (or, a front case) 112, a second support member (or, a rear case) 114, side members 116, and a back plate (or, a rear window) 118.

In an embodiment, the first support member 112 may be substantially formed in a plate shape and may be disposed under the display 160 (e.g., in the -z direction). In an embodiment, the display 160 may be partially disposed on the first support member 112. For example, the first region 161 of the display 160 may be disposed on the first support member 112. In an embodiment, at least a portion of the first region 161 of the display 160 may be attached to the first support member 112 through an adhesive member (e.g., a double-sided tape). In an embodiment, the first support member 112 may be formed of a metallic material and/or a non-metallic material (e.g., a polymer) and may have a stiffness required to support the display 160.

In an embodiment, the second support member 114 may be disposed between the first support member 112 and the back plate 118. In an embodiment, the PCB 285 and the battery 289 may be disposed on one surface (e.g., a surface facing in the +z direction) of the second support member 114, and the back plate 118 may be disposed on an opposite surface (e.g., a surface facing away from the one surface) of the second support member 114. In an embodiment, the second support member 114 may support the PCB 285, the battery 289, and the back plate 118. In an embodiment, the second support member 114 may be formed of a metallic material and/or a nonmetallic material (e.g., a polymer).

In an embodiment, the back plate 118 may be disposed under the second support member 114 (e.g., in the -z direction). In an embodiment, the back plate 118 may be coupled with the second support member 114. In an embodiment, a partial region of the back plate 118 may be formed to be substantially transparent. In an embodiment, the back plate 118 may be formed of a metallic material and/or a nonmetallic material (e.g., a polymer and/or glass).

In an embodiment, the side members 116 may be disposed on opposite sides of the second support member 114. For example, the side members 116 may be disposed in the +y direction and the -y direction from the second support member 114. In an embodiment, the side members 116 may be coupled with the second support member. In an embodiment, the side members 116 may be formed of a metallic material and/or a nonmetallic material (e.g., a polymer).

The second housing 120 according to the wording of the independent claims includes a first panel support member 126, and may include a first cover 122 and first guide members 124.

In an embodiment, the first cover 122 may form at least a portion of the exterior of the second housing 120. In an embodiment, the first cover 122 may form the first side surface of the electronic device 101 (e.g., the first side surface 10B of FIG. 1). In an embodiment, the first cover 122 may be coupled with the first housing 110. For example, the first cover 122 may be coupled with the side members 116 and/or the second support member 114 of the first housing 110. In an embodiment, the first cover 122 may be coupled to the first housing 110 to slide relative to the first housing 110. For example, for the sliding of the first cover 122, a protrusion 1221 having a step formed on an end portion thereof may be formed on the first cover 122. For reciprocation, the first protrusion 1221 of the first cover 122 may be at least partially accommodated in a receiving recess (not illustrated) formed by the side members 116 and/or the second support member 114 of the housing 110. The first cover 122 may reciprocate along the receiving space. Although not illustrated, a stopping structure corresponding to the step formed on the end portion of the first protrusion 1221 may be formed on the side members 116 and/or the second support member 114 of the first housing 110 to limit a moving distance of the second housing 120 or prevent separation of the second housing 120 from the first housing 110. The above description may be substantially identically, similarly, or correspondingly applied to a second cover 132 and a second protrusion 1321 of the second cover 132. However, a structure for reciprocation of the first cover 122 and the second cover 132 is not limited by the above-described example, and various structures available to those skilled in the art may be applied.

In an embodiment, the first guide members 124 may be disposed on opposite sides of the first panel support member 126. For example, the first guide members 124 may be disposed in the +y direction and the -y direction of the first panel support member 126. In an embodiment, the first guide members 124 may be coupled with the first panel support member 126 and the first cover 122. In an embodiment, the first guide members 124 may be fixedly disposed in the first cover 122 and may move together with the first cover 122.

According to the wording of the independent claims,, the first panel support member 126 is disposed in the second housing 120. For example, the first panel support member 126 may be disposed in a space formed by the first cover 122. In an embodiment, the first panel support member 126 may be coupled with the first cover 122 with the first guide members 124 therebetween. In an embodiment, the first panel support member 126 may be fixedly disposed in the first cover 122 and may move together with the first cover 122. In an embodiment, the first panel support member 126 may support the display 160 and the first support structure 242. In an embodiment, the first support structure 242 and the second region 162 of the display 160 may be disposed to at least partially surround the first panel support member 126.

The third housing 130 according to the wording of the independent claims includes a second panel support member 136 and may include the second cover 132and second guide members 134.

In an embodiment, the above descriptions of the first cover 122, the first panel support member 126, and the first guide members 124 of the second housing 120 may be correspondingly applied to the second cover 132, the second panel support member 136, and the second guide members 134 of the third housing 130. For example, the second cover 132 may form the second side surface of the electronic device 101 (e.g., the second side surface 10C of FIG. 1). For example, the second cover 132 may be coupled to the first housing 110 so as to slide. For example, the second panel support member 136 may be coupled with the second cover 132 with the second guide members 134 therebetween. For example, the second panel support member 136 and the second guide members 134 may move together with the second cover 132.

The electronic device 101 according to an embodiment may include a first actuator 252 and a second actuator 254. In an embodiment, the first actuator 252 and the second actuator 254 may be disposed on the first support member 112. In an embodiment, the first actuator 252 may be disposed on the first support member 112 so as to be adjacent to the second housing 120 and may provide, to the second housing 120, a physical force for supporting movement. In an embodiment, the second actuator 254 may be disposed on the first support member 112 so as to be adjacent to the third housing 130 and may provide, to the third housing 130, a physical force for supporting movement.

In an embodiment, various types of driving devices available to those skilled in the art may be applied to the first actuator 252 and the second actuator 254. For example, the first actuator 252 and/or the second actuator 254 may include an electric actuator or a piezoelectric actuator capable of a linear motion in the width direction W of the display 160, but is not limited thereto.

In an embodiment, two first actuators 252 and two second actuators 254 are illustrated in FIG. 2. However, the number of first actuators 252 and the number of second actuators 254 are not limited by the illustrated example. For example, one first actuator 252 and/or one second actuator 254 may be provided, and in another example, three or more first actuators 252 and/or three or more second actuators 254 may be provided.

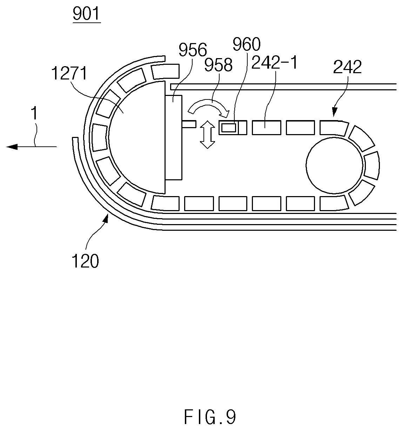

The electronic device 101 according to an embodiment may include a first variable magnet member 262 and a first magnet member 264. In an embodiment, an attractive or repulsive force may act between the first variable magnet member 262 and the first magnet member 264. In an embodiment, the first variable magnet member 262 may be disposed on the first panel support member 126, and the first magnet member 264 may be disposed at one end of the first support structure 242. In an embodiment, the first magnet member 264 may have a bar shape extending in the lengthwise direction L, but is not limited thereto. For example, the first magnet member 264 may be segmented into a plurality of pieces and may be coupled with the first support structure 242. In this case, for example, a striker member 960 illustrated in FIG. 9 may be disposed in a space formed by the segmentation of the first magnet member 264.

In an embodiment, a plurality of first variable magnet members 262 may be formed. In this case, the first variable magnet members 262 may be arranged at predetermined intervals in a lengthwise direction of the first magnet member 264 (e.g., a direction parallel to the lengthwise direction L). Unlike that illustrated in FIG. 2, one first variable magnet member 262 may be formed. In this case, the first variable magnet member 262 may have substantially the same length as the first magnet member 264. In another embodiment, the number and/or shape of first variable magnet members 262 may vary depending on a required attractive or repulsive force with the first magnet member 264.

The electronic device 101 according to an embodiment may include a second variable magnet member 272 and a second magnet member 274. The above descriptions of the first variable magnet member 262 and the first magnet member 264 may be substantially identically, similarly, or correspondingly applied to the second variable magnet member 272 and the second magnet member 274. For example, the second variable magnet member 272 may be disposed on the second panel support member 136, and the second magnet member 274 may be disposed at one end of the second support structure 244. For example, an attractive or repulsive force may act between the second variable magnet member 272 and the second magnet member 274. For example, the second magnet member 274 may have a bar shape extending in the lengthwise direction L. For example, similarly to the first variable magnet member 262, the number and/or shape of second variable magnet members 272 may vary depending on a required attractive or repulsive force with the second magnet member 274.

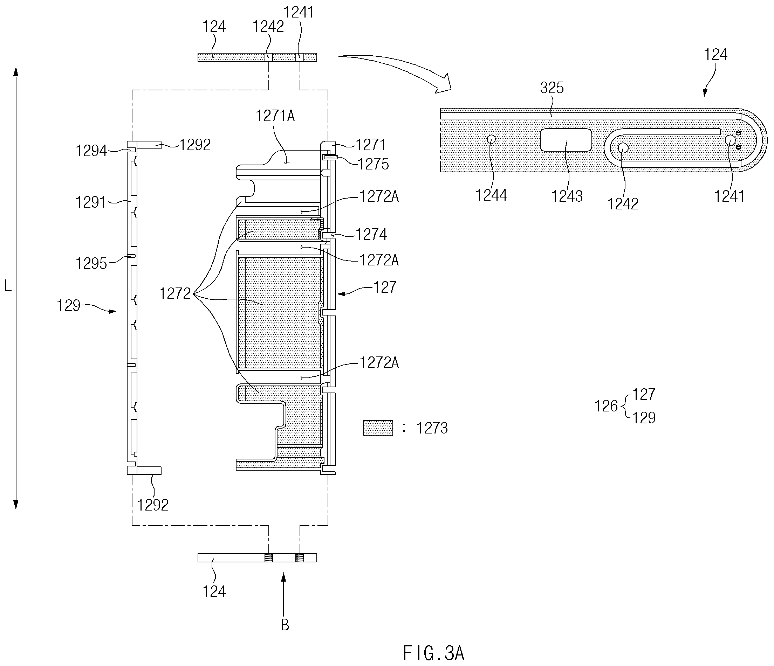

FIG. 3A illustrates the first guide members and the first panel support member according to an embodiment. A lengthwise direction L illustrated in FIG. 3A may be a direction parallel to the lengthwise direction L of the display 160 illustrated in FIG. 2.

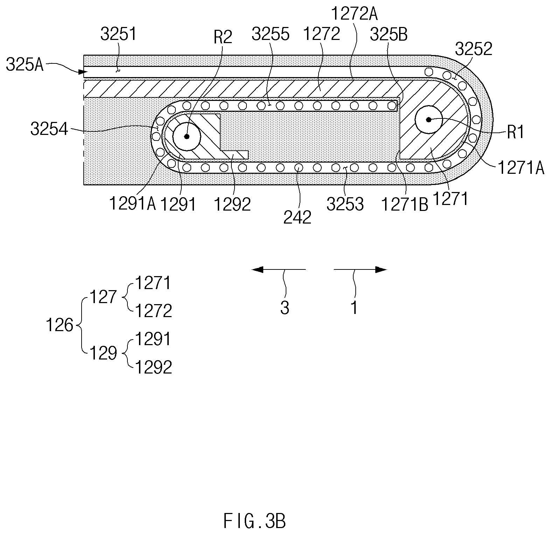

FIG. 3B is a projection view when the first guide members and the first panel support member of FIG. 3A are viewed in a direction B. For convenience of description, the first support structure 242 accommodated in a guide rail 325 of the first guide member 124 is illustrated together in FIG. 3B.

Referring to FIGS. 3A and 3B, the first panel support member 126 according to an embodiment may include a first member 127 and a second member 129.

In an embodiment, the first member 127 of the first panel support member 126 may include a first roll bar 1271 and a first extension 1272. In an embodiment, the first roll bar 1271 may extend in the lengthwise direction L. For example, the first roll bar 1271 may extend in a direction perpendicular to the first direction 1 of FIG. 1. In an embodiment, at least a portion of the first roll bar 1271 may be formed of a curved surface. For example, a section of the first roll bar 1271 taken in a direction perpendicular to the lengthwise direction L may include a curved surface. For example, the first roll bar 1271 may include a curved surface 1271A facing toward the first side surface of the electronic device 101 (e.g., the first side surface 10B of FIG. 1).

In an embodiment, the first guide members 124 may be disposed on opposite sides of the first roll bar 1271. For example, the first guide members 124 may be disposed at opposite ends of the first roll bar 1271 with respect to the lengthwise direction L. In an embodiment, screws (not illustrated) that pass through first fastening holes 1241 may be fastened to the first roll bar 1271 to couple the first roll bar 1271 and the first guide members 124. However, the disclosure is not limited thereto.

In an embodiment, the first extension 1272 may extend from the first roll bar 1271 in a direction toward the second member 129 (e.g., the direction opposite to the first direction 1 of FIG. 1). For example, the first extension 1272 may extend from the first roll bar 1271 in a direction (e.g., the second direction 2) toward the third housing (e.g., the third housing 130 of FIG. 2). In an embodiment, the first extension 1272 may have a plate shape extending in the direction perpendicular to the lengthwise direction L (e.g., the width direction W of FIG. 2). In an embodiment, the first extension 1272 may have slits 1272A formed therein for preventing interference of movement of the second housing (e.g., the second housing 120 of FIG. 2).

In an embodiment, the first extension 1272 may overlap the second member 129. For example, the first extension 1272 may include a first portion extending from the first roll bar 1271 to a second roll bar 1291 to overlap the second member 129 and a second portion extending from the first portion toward the third housing beyond the second roll bar 1291.

In an embodiment, the second member 129 disposed under the first extension 1272 may include the second roll bar 1291 and a second extension 1292. In an embodiment, the second roll bar 1291 substantially parallel to the first member 127 may extend in the lengthwise direction L. For example, the second roll bar 1291 may extend in a direction perpendicular to the width direction W of FIG. 2. For example, the second roll bar 1291 may extend in a direction perpendicular to the first direction 1 of FIG. 1.

In an embodiment, at least a portion of the second roll bar 1291 may be formed of a curved surface. In an embodiment, a section of the second roll bar 1291 taken in the direction perpendicular to the lengthwise direction L may include a curved surface. For example, the second roll bar 1291 may include a curved surface 1291A facing toward the second side surface of the electronic device 101 (e.g., the second side surface 10C of FIG. 1). In another example, the second roll bar 1291 may include the curved surface 1291A facing toward the third housing. In an embodiment, the curved surface 1291A of the second roll bar 1291 may have a smaller radius of curvature than the curved surface 1271A of the first roll bar 1271.

In an embodiment, the first guide members 124 may be disposed on opposite sides of the second roll bar 1291. For example, the first guide members 124 may be disposed at opposite ends of the second roll bar 1291 with respect to the lengthwise direction L. In an embodiment, screws (not illustrated) that pass through second fastening holes 1242 may be fastened to the second roll bar 1291 to couple the second roll bar 1291 and the first guide members 124. However, the disclosure is not limited thereto.

In an embodiment, the second extension 1292 of the second member 129 may extend from the second roll bar 1291. For example, the second extension 1292 may extend from the second roll bar 1291 toward the first roll bar 1271. In an embodiment, the second extension 1292 may extend at a height lower than the height of the first extension 1272 in the second housing (e.g., the second housing 120 of FIG. 2). For example, under the first extension 1272, the second extension 1292 may extend in a direction (e.g., the first direction 1) away from the first housing (e.g., the first housing 110 of FIG. 2). In an embodiment, the second extension 1292 may be substantially parallel to the first extension 1272.

In an embodiment, each of the first guide members 124 may have openings 1243 and 1244 formed therein. For example, a receptacle of a non-illustrated connector may be disposed in the opening 1243. For example, the opening 1244 may be a microphone hole of a non-illustrated speaker module (e.g., an audio module 3270 of FIG. 32). However, the disclosure is not limited by the above example.

In an embodiment, the first guide member 124 may have the guide rail 325 formed therein in which the first support structure 242 is accommodated. In an embodiment, the guide rail 325 may include a first section 3251, a second section 3252, a third section 3253, and a fourth section 3254.

In an embodiment, the first section 3251 may extend from one end 325A of the guide rail 325 to the second section 3252. In an embodiment, over the first extension 1272, the first section 3251 may extend along a first surface 1272A of the first extension 1272. In an embodiment, the first section 3251 may be parallel to the first extension 1272. In an embodiment, the first section 3251 may be formed substantially straight.

In an embodiment, the second section 3252 may extend from the first section 3251 to the third section 3253. In an embodiment, the second section 3252 may extend around the first roll bar 1271 along the curved surface 1271A of the first roll bar 1271. For example, based on FIG. 3B, the second section 3252 may extend from the first section 3251 to the third section 3253 while being bent in the clockwise direction. In an embodiment, the second section 3252 may be bent to correspond to the curved surface 1271A of the first roll bar 1271.

In an embodiment, the third section 3253 may extend from the second section 3252 to the fourth section 3254. In an embodiment, under the second extension 1292, the third section 3253 may extend parallel to the first extension 1272. In an embodiment, the third section 3253 may be formed substantially straight.

In an embodiment, the fourth section 3254 may extend from the third section 3253 to a fifth section 3255. In an embodiment, the fourth section 3254 may extend around the second roll bar 1291 along the curved surface 1291A of the second roll bar 1291. For example, based on FIG. 3B, the fourth section 3254 may extend from the third section 3253 to the fifth section 3255 while being bent in the clockwise direction. In an embodiment, the fourth section 3254 may be bent to correspond to the curved surface 1291A of the second roll bar 1291.

In an embodiment, the fifth section 3255 may extend from the fourth section 3254 to an opposite end 325B of the guide rail 325. In an embodiment, the fifth section 3255 may extend from the fourth section 3254 toward the second section 3252. In an embodiment, under the first extension 1272, the fifth section 3255 may extend parallel to the first extension 1272. In an embodiment, the fifth section 3255 may be located between the first extension 1272 and the second roll bar 1291 (or, the second extension 1292). In an embodiment, the fifth section 3255 may be located between the first section 3251 and the third section 3253.

In an embodiment, the first support structure 242 may move along a path provided by the guide rail 325 of the first guide member 124 and the first panel support member 126. In an embodiment, the first support structure 242 may perform a sliding motion along a circumferential surface of the first panel support member 126 (e.g., the first surface 1272A of the first extension 1272, the curved surface 1271A of the first roll bar 1271, and the curved surface 1291A of the second roll bar 1291) while being guided along the path of the guide rail 325. In an embodiment, the first support structure 242 may move toward the one end 325A or the opposite end 325B of the guide rail 325 along the path of the guide rail 325.

In an embodiment, the guide rail 325 may have a shape bent about at least two axes. For example, the second section 3252 of the guide rail 325 may be bent about a first axis R1, and the fourth section 3254 may be bent about a second axis R2. Correspondingly, the first panel support member 126 may include a curved surface bent about the at least two axes. For example, the first panel support member 126 may include the curved surface 1271A of the first roll bar 1271 bent about the first axis R1 and the curved surface 1291A of the second roll bar 1291 bent about the second axis R2. In an embodiment, the curved surface 1271A of the first roll bar 1271 and the curved surface 1291A of the second roll bar 1291 may face away from each other.

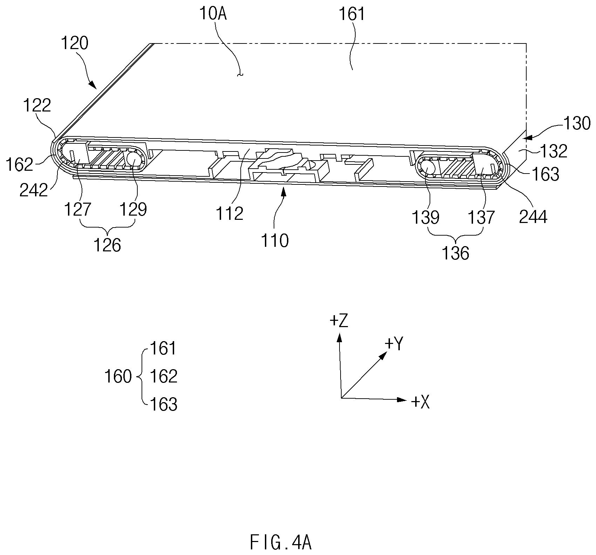

In an embodiment, the first support structure 242 that is accommodated in the guide rail 325 and that at least partially surrounds the first panel support member 126 may also have a bent or unbent shape to correspond to the guide rail 325. For example, as illustrated in FIG. 3B, the first support structure 242 may have a shape bent about the first axis R1 and the second axis R2 in a state (e.g., a normal state of FIG. 4A to be described below) in which the first support structure 242 is moved to the opposite end 325B of the guide rail 325. For example, in the state in which the first support structure 242 is moved to the opposite end 325B of the guide rail 325, the first support structure 242 may include a portion corresponding to the second section 3252 of the guide rail 325, a portion corresponding to the third section 3253 of the guide rail 325, a portion corresponding to the fourth section 3254 of the guide rail 325, and a portion corresponding to the fifth section 3255 of the guide rail 325. Although not illustrated, the first region (e.g., the first region 161 of FIG. 2) of the display (e.g., the display 160 of FIG. 2) to which the first support structure 242 is attached may also include portions corresponding to the second section 3252, the third section 3253, the fourth section 3254, and the fifth section 3255 of the guide rail 325, respectively, in the state in which the first support structure 242 is moved to the opposite end 325B of the guide rail 325.

In an embodiment, the guide rail 325 may be formed to be a groove and/or an opening. In an embodiment, the one end 325A of the guide rail 325 is illustrated as being open, but is not limited thereto. For example, the one end 325A of the guide rail 325 may be closed to limit movement of the first structure 242 to the one end 325A.

In an embodiment, a sliding member 1273 for reducing a frictional force with the first support structure 242 may be disposed on at least a portion of the first surface 1272A of the first extension 1272. In an embodiment, the sliding member 1273 may include, for example, a tape (e.g., a Teflon tape) and/or a coating layer that has a lower coefficient of friction than the first extension 1272.

In an embodiment, at least one first groove 1274 may be formed on the first roll bar 1271. In an embodiment, at least one first roller 1275 may be disposed in the at least one first groove 1274 to enable the first support structure 242 to easily slide along the curved surface 1271A of the first roll bar 1271. The at least one first roller 1275 may include a bearing, but is not limited thereto. In an embodiment, in a case in which a plurality of first grooves 1274 and a plurality of first rollers 1275 are implemented, the plurality of first grooves 1274 and the plurality of first rollers 1275 may be arranged in the lengthwise direction L of the first roll bar 1271 at specified intervals.

In an embodiment, at least one second groove 1294 may be formed on the second roll bar 1291. In an embodiment, at least one second roller 1295 may be disposed in the at least one second groove 1294 to enable the first support structure 242 to easily slide along the curved surface 1291A of the second roll bar 1291. The at least one second roller 1295 may include a bearing, but is not limited thereto. In an embodiment, in a case in which a plurality of second grooves 1294 and a plurality of second rollers 1295 are implemented, the plurality of second grooves 1294 and the plurality of second rollers 1295 may be arranged in the lengthwise direction L of the second roll bar 1291 at specified intervals.

In an embodiment, the first panel support member 126 is illustrated as being divided into the first member 127 and the second member 129, but is not limited thereto. In another embodiment, the first member 127 and the second member 129 may be integrally formed with each other.

The descriptions of the first guide members 124, the first panel support member 126, and the first support structure 242 of the second housing 120, which have been given with reference to FIGS. 3A and 3B, may be substantially identically, similarly, or correspondingly applied to the second guide members 134, the second panel support member 136, and the second support structure 244 of the third housing 130 that are not illustrated.

FIG. 4A illustrates the electronic device in a normal state (or, a normal mode) according to an embodiment. FIG. 4A may be a sectional perspective view of the electronic device 101 of FIG. 1 taken along line A-A'.

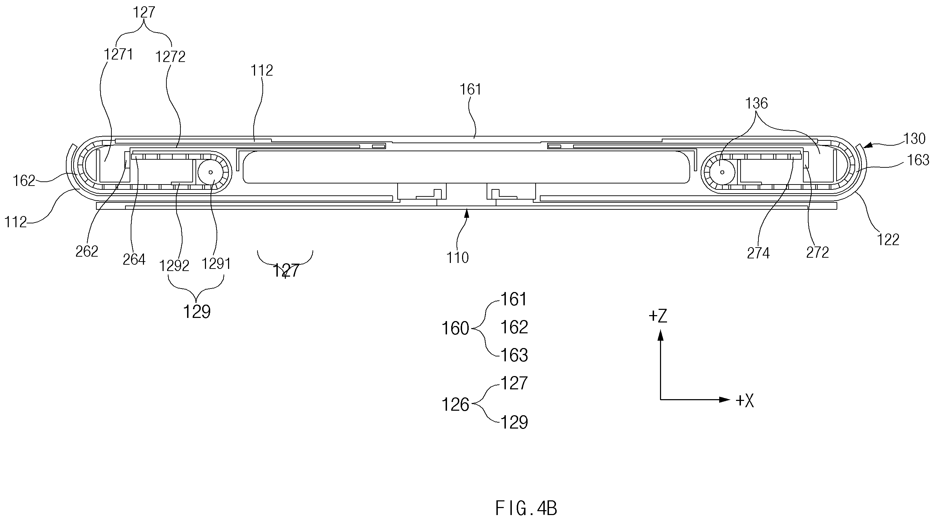

FIG. 4B is a sectional view illustrating the electronic device in the normal state according to an embodiment. FIG. 4B may be a sectional view of the electronic device 101 of FIG. 1 taken along line A-A'.

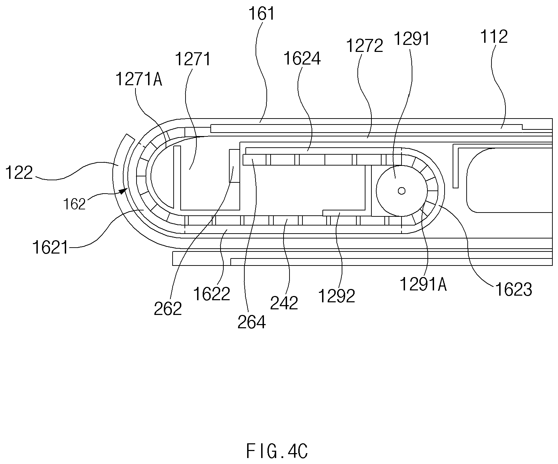

FIG. 4C is an enlarged sectional view illustrating the second housing illustrated in FIG. 4B.

The normal state of the electronic device 101 according to an embodiment may refer to a state in which the second housing 120 and the third housing 130 of the electronic device 101 are completely slid into the first housing 110.

The normal state of the electronic device 101 according to an embodiment may refer to a state in which only the first region 161 of the display 160 is exposed outside the electronic device 101 and the second region 162 and the third region 163 of the display 160 are not exposed outside the electronic device 101.

The normal state of the electronic device 101 according to an embodiment may refer to a state in which the front surface 10A of the electronic device 101 is formed by only the first region 161 of the display 160.

The following description will be given based on the electronic device 101 in the normal state with reference to FIGS. 4A, 4B, and 4C.

Referring to FIGS. 4A, 4B, and 4C, the first region 161 of the display 160 according to an embodiment may be exposed to the outside. For example, the first region 161 of the display 160 may form the front surface 10A of the electronic device 101. In an embodiment, the first region 161 of the display 160 may be at least partially supported by the first support member 112. In an embodiment, the first region 161 supported by the first support member 112 may form a substantially flat surface.

At least a portion of the first support structure 242 according to an embodiment may be located in the second housing 120. In an embodiment, the first support structure 242 may be disposed in the second housing 120 to at least partially surround the first panel support member 126. In an embodiment, the second region 162 of the display 160 to which the first support structure 242 is attached may also be bent to correspond to the first support structure 242. In an embodiment, the second region 162 of the display 160 may be at least partially disposed in the second housing 120. In an embodiment, the second region 162 of the display 160 may include a first portion 1621 extending from the first region 161 in the counterclockwise direction (based on FIG. 4C) along the curved surface 1271A of the first roll bar 1271, a second portion 1622 extending from the first portion 1621 toward the second roll bar 1291, a third portion 1623 extending from the second portion 1622 in the counterclockwise direction (based on FIG. 4C) along the curved surface 1291A of the second roll bar 1291, and a fourth portion 1624 extending from the third portion 1623 toward the first roll bar 1271. In an embodiment, the second region 162 of the display 160 may overlap the first region 161. For example, the second portion 1622, the third portion 1623, and the fourth portion 1624 of the second region 162 may overlap the first region 161. In an embodiment, the second portion 1622 of the second region 162 may overlap the fourth portion 1624. In an embodiment, the first portion 1621 and the second portion 1622 of the second region 162 may be located between the first cover 122 and the first panel support member 126. In an embodiment, the fourth portion 1624 of the second region 162 may be located between the first extension 1272 and the second roll bar 1291. In an embodiment, the second region 162 of the display 160 may be hidden by the first cover 122 and may not be exposed outside the electronic device 101.

In an embodiment, the above descriptions of the second housing 120, the first support structure 242, and the second region 162 of the display 160 may be correspondingly applied to the third housing 130, the second support structure 244, and the third region 163 of the display 160 that are located on the opposite side with respect to the first housing 110. For example, at least a portion of the second support structure 244 may be located in the third housing 130. For example, the second support structure 244 may be disposed in the third housing 130 to at least partially surround the second panel support member 136. For example, the third region 163 of the display 160 attached with the second support structure 244 may also be bent to correspond to the second support structure 244 and may be disposed in the third housing 130. For example, the third region 163 of the display 160 may be hidden by the second cover 132 and may not be exposed outside the electronic device 101.

In an embodiment, when the electronic device 101 is in the normal state, the display 160 may be exposed to the outside by a first area. For example, the first area may be substantially the same as the area of the front surface 10A formed by the first region 161.

In an embodiment, when the electronic device 101 is in the normal state, the first variable magnet member 262 and the first magnet member 264 may face each other, and the distance therebetween may be a first distance. In an embodiment, when the electronic device 101 is in the normal state, the first variable magnet member 262 and the first magnet member 264 may make contact with each other, but are not limited thereto. In another embodiment, when the electronic device 101 is in the normal state, the first variable magnet member 262 and the first magnet member 264 may be spaced apart from each other.

In an embodiment, when the electronic device 101 is in the normal state, the second variable magnet member 272 and the second magnet member 274 may face each other, and the distance therebetween may be the first distance. In an embodiment, when the electronic device 101 is in the normal state, the second variable magnet member 272 and the second magnet member 274 may make contact with each other, but are not limited thereto. In another embodiment, when the electronic device 101 is in the normal state, the second variable magnet member 272 and the second magnet member 274 may be spaced apart from each other.

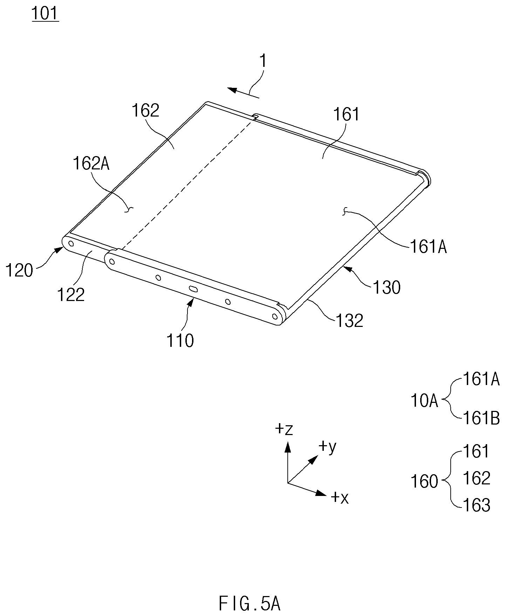

FIG. 5A is a perspective view illustrating the electronic device in a first extended state (or, a first extended mode) according to an embodiment.

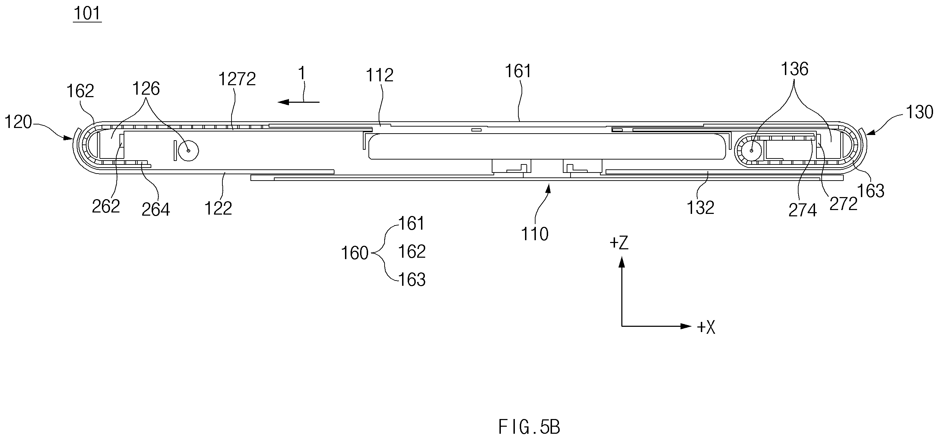

FIG. 5B is a sectional view illustrating the electronic device in the first extended state according to an embodiment.

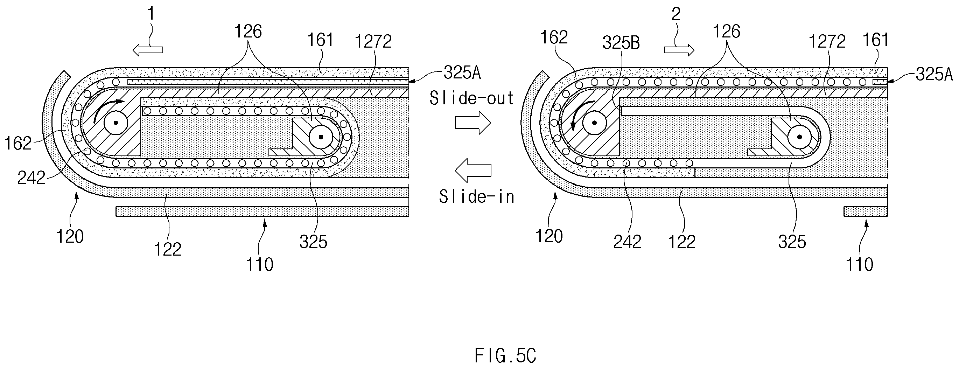

FIG. 5C is a view illustrating extension or reduction of the second region of the display depending on a sliding motion of the second housing of the electronic device according to an embodiment. In an embodiment, when the second region 162 of the display 160 is extended or reduced, it may mean that a region (or, an area) where the second region 162 of the display 160 is exposed to the outside is increased or decreased.

In an embodiment, the first extended state of the electronic device 101 may refer to a state in which at least a portion of the second housing 120 is slid outside the first housing 110 and the third housing 130 is completely slid into the first housing 110.

In an embodiment, the first extended state of the electronic device 101 may refer to a state in which at least a portion of the second region 162 of the display 160 is exposed outside the electronic device 101 and the third region 163 is not exposed outside the electronic device 101.

The following description will be given based on the electronic device 101 in the first extended state with reference to FIGS. 5A and 5B.

Referring to FIGS. 5A and 5B, the second housing 120 according to an embodiment may slide outside the first housing 110. In an embodiment, the second region 162 of the display 160 may be exposed to the outside as the second housing 120 is moved. For example, referring to FIG. 5C, the second housing 120 may move in the first direction 1 away from the center of the first housing 110. In an embodiment, the first cover 122, the first guide member (not illustrated) (e.g., the first guide member 124 of FIG. 3A), and the first panel support member 126 of the second housing 120 may move in the first direction 1. In this case, the first support structure 242 may move along the path facing toward the one end 325A of the guide rail 325. In an embodiment, the second region 162 of the display 160 attached with the first support structure 242 may move along the guide rail 325 together with the first support structure 242. In an embodiment, as the second region 162 of the display 160 moves together with the guide rail 325, the second region 162 of the display 160 may be exposed outside the second housing 120 (or, may be withdrawn outside the second housing 120). In an embodiment, the second region 162 exposed outside the second housing 120 may be supported by the first extension 1272 of the first panel support member 126. In an embodiment, the second region 162 exposed to the outside may form a substantially flat surface together with the first region 161. In an embodiment, the display 160 may be extended in the first direction 1 as the second housing 120 slides outside the first housing 110.

Referring to FIGS. 5A and 5B, in an embodiment, the third region 163 of the display 160 may not be exposed outside the electronic device 101. In an embodiment, the descriptions of the third housing 130 and the third region 163 of the display 160 in the normal state, which have been given with reference to FIGS. 4A, 4B, and 4C, may be substantially identically applied to descriptions of the third housing 130 and the third region 163 of the display 160 in the first extended state of FIGS. 5A and 5B.

In an embodiment, the distance between the first variable magnet member 262 and the first magnet member 264 may be a second distance greater than the first distance. In an embodiment, the first variable magnet member 262 and the first magnet member 264 may not face each other.

In an embodiment, the distance between the second variable magnet member 272 and the second magnet member 274 may be the first distance. In an embodiment, the second variable magnet member 272 and the second magnet member 274 may face each other.

In an embodiment, when the electronic device 101 is in the first extended state, the display 160 may be exposed to the outside by a second area greater than the first area. For example, the second area may be substantially the same as the area of the front surface 10A formed by a surface 161A on which the first region 161 of the display 160 is exposed to the outside and a surface 162A on which the second region 162 is exposed to the outside.

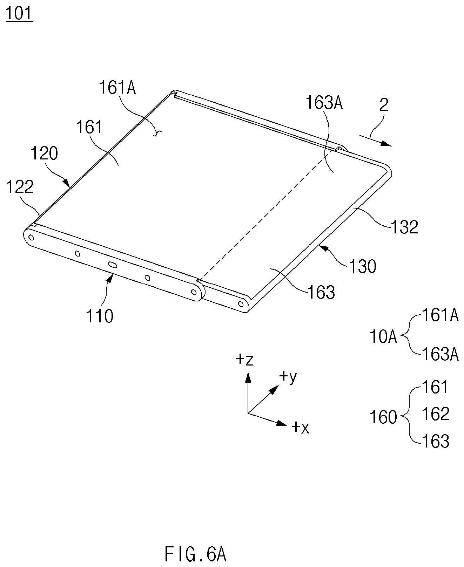

FIG. 6A is a perspective view illustrating the electronic device in a second extended state (or, a second extended mode) according to an embodiment.

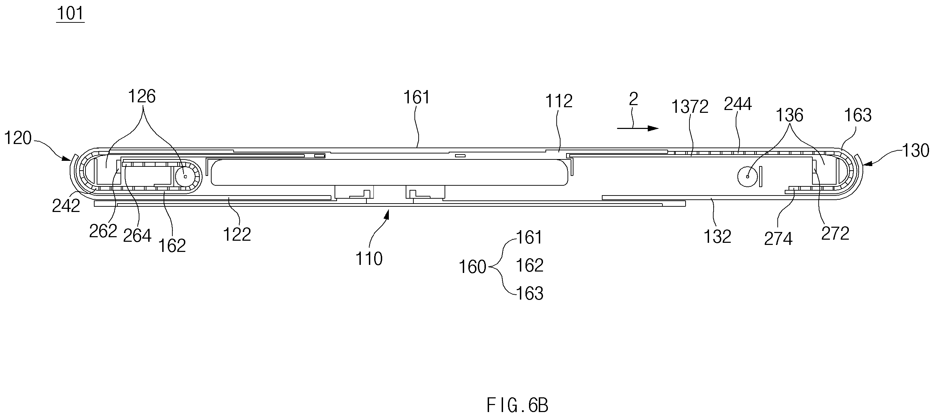

FIG. 6B is a sectional view illustrating the electronic device in the second extended state according to an embodiment.

When the electronic device 101 according to an embodiment is in the second extended state, at least a portion of the third housing 130 may be slid outside the first housing 110, and the second housing 120 may be completely slid into the first housing 110.

In an embodiment, in the second extended state, at least a portion of the third region 163 of the display 160 may be exposed outside the electronic device 101, and the second region 162 may not be exposed outside the electronic device 101.

The following description will be given based on the electronic device 101 in the second extended state with reference to FIGS. 6A and 6B together with FIG. 5C.

Referring to FIGS. 6A and 6B, in an embodiment, the second region 162 of the display 160 may not be exposed outside the electronic device 101. In an embodiment, the descriptions of the second housing 120 and the second region 162 of the display 160 in the normal state, which have been given with reference to FIGS. 4A, 4B, and 4C, may be substantially identically applied to descriptions of the second housing 120 and the second region 162 of the display 160 in the second extended state of FIGS. 6A and 6B.

When the electronic device 101 according to an embodiment is changed from the first extended state to the second extended state, the second housing 120 may slide into the first housing 110. In an embodiment, the second region 162 of the display 160 exposed to the outside may be inserted into the second housing 120 as the second housing 120 is moved into the first housing 110. For example, referring to FIG. 5C, the second housing 120 may move in the second direction 2 toward the first housing 110. In an embodiment, the first cover 122, the first guide member (not illustrated) (e.g., the first guide member 124 of FIG. 3A), and the first panel support member 126 of the second housing 120 may move in the second direction 2. In this case, the first support structure 242 may move along the path facing toward the opposite end 325B of the guide rail 325. In an embodiment, the second region 162 of the display 160 attached with the first support structure 242 may move along the guide rail 325 together with the first support structure 242. In an embodiment, as the second region 162 of the display 160 moves together with the guide rail 325, the second region 162 of the display 160 may be inserted into the second housing 120 (or, may not be exposed outside the second housing 120). In an embodiment, the display 160 may be reduced as the second housing 120 slides into the first housing 110.

Referring to FIGS. 6A and 6B, the third housing 130 according to an embodiment may slide outside the first housing 110. In an embodiment, the display 160 may be extended in the second direction 2 as the second housing 120 slides. The descriptions of the first housing 110 and the second region 162 of the display 160, which have been given with reference to FIGS. 5A, 5B, and 5C, may be correspondingly applied to descriptions of the third housing 130 and the third region 163 of the display 160 in the second extended state. For example, the third housing 130 may move in the second direction 2 away from the first housing 110. In an embodiment, the second cover 132, the second guide member (not illustrated) (e.g., the second guide member 134 of FIG. 2), and the second panel support member 136 of the third housing 130 may move in the second direction 2. In this case, the second support structure 244 may move along the path of the guide rail (not illustrated), and the third region 163 of the display 160 attached with the second support structure 244 may also move together with the second support structure 244. In an embodiment, as the third region 163 of the display 160 moves together with the guide rail 325, the third region 163 of the display 160 may be exposed outside the third housing 130 (or, may be withdrawn outside the third housing 130). In an embodiment, the third region 163 exposed outside the third housing 130 may be supported by the second panel support member 136. In an embodiment, the third region 163 exposed to the outside may form a substantially flat surface together with the first region 161.

In an embodiment, the distance between the first variable magnet member 262 and the first magnet member 264 may be the first distance. In an embodiment, the first variable magnet member 262 and the first magnet member 264 may face each other.

In an embodiment, the distance between the second variable magnet member 272 and the second magnet member 274 may be a third distance greater than the first distance. In an embodiment, the second variable magnet member 272 and the second magnet member 274 may not face each other.

In an embodiment, when the electronic device 101 is in the second extended state, the display 160 may be exposed to the outside by a third area greater than the first area. For example, the third area may be the area of the front surface 10A formed by the surface 161A on which the first region 161 of the display 160 is exposed and a surface 163A on which the third region 163 is exposed.

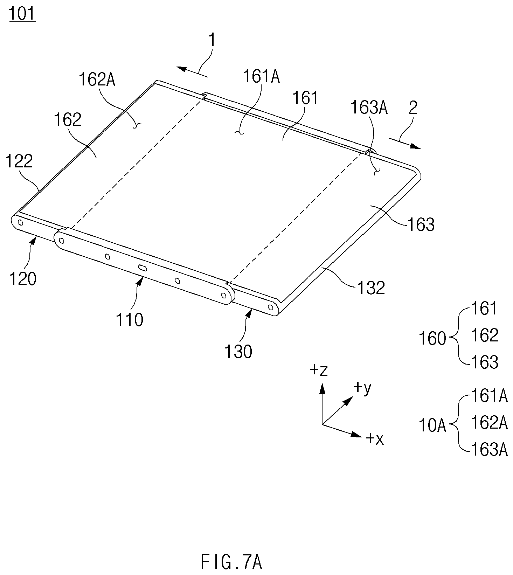

FIG. 7A is a perspective view illustrating the electronic device in a third extended state (or, a third extended mode) according to an embodiment.

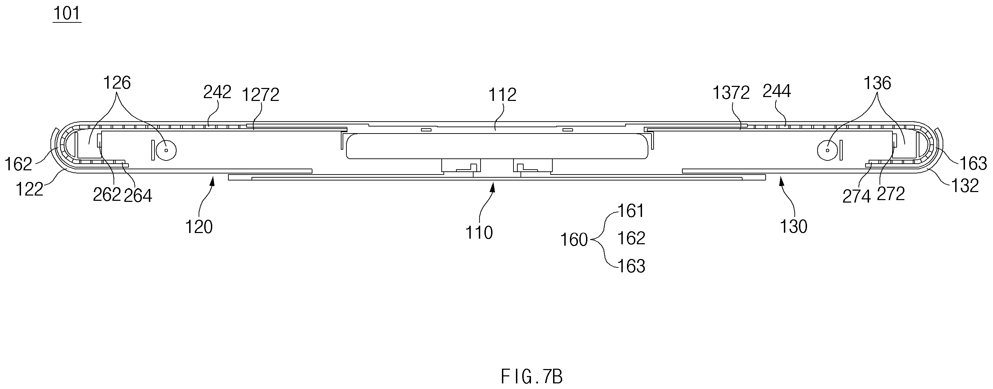

FIG. 7B is a sectional view illustrating the electronic device in the third extended state according to an embodiment.

Referring to FIGS. 7A and 7b, when the electronic device 101 according to an embodiment is in the third extended state, at least a portion of the second housing 120 may be slid outside the first housing 110. In an embodiment, in the third extended state, at least a portion of the second region 162 of the display 160 may be exposed outside the electronic device 101. The descriptions of the second housing 120 and the second region 162 of the display 160 in the first extended state, which have been given with reference to FIGS. 5A, 5B, and 5C, may be substantially identically applied to descriptions of the second housing 120 and the second region 162 of the display 160 in the third extended state.

In an embodiment, when the electronic device 101 is in the third extended state, at least a portion of the third housing 130 may be slid outside the first housing 110. In an embodiment, in the third extended state, at least a portion of the third region 163 of the display 160 may be exposed outside the electronic device 101. The descriptions of the third housing 130 and the third region 163 of the display 160 in the second extended state, which have been given with reference to FIGS. 6A and 6B, may be substantially identically applied to descriptions of the third housing 130 and the third region 163 of the display 160 in the third extended state.

In an embodiment, the distance between the first variable magnet member 262 and the first magnet member 264 may be the second distance. In an embodiment, the first variable magnet member 262 and the first magnet member 264 may not face each other.

In an embodiment, the distance between the second variable magnet member 272 and the second magnet member 274 may be the third distance. In an embodiment, the second variable magnet member 272 and the second magnet member 274 may not face each other.

In an embodiment, when the electronic device 101 is in the third extended state, the display 160 may be exposed to the outside by a fourth area that is greater than the first area, the second area, and the third area. For example, the fourth area may be the area of the front surface 10A formed by the surface 161A on which the first region 161 of the display 160 is exposed, the surface 162A on which the second region 162 is exposed, and the surface 163A on which the third region 163 is exposed.

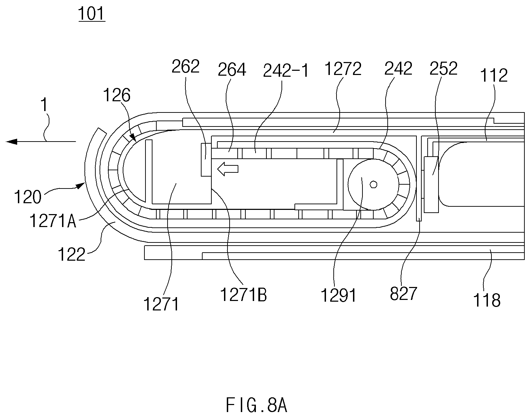

FIG. 8A illustrates the electronic device including an actuator according to an embodiment.

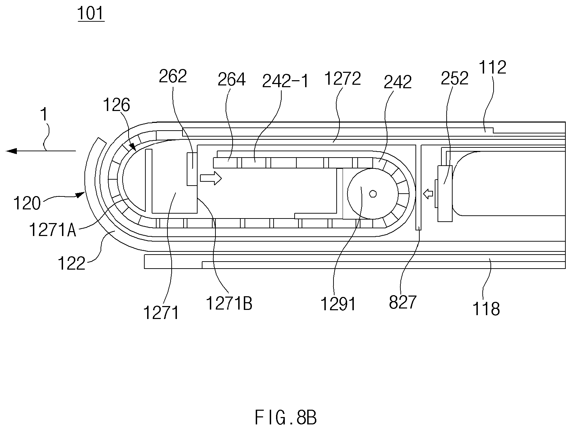

FIG. 8B illustrates the electronic device including the actuator according to an embodiment.

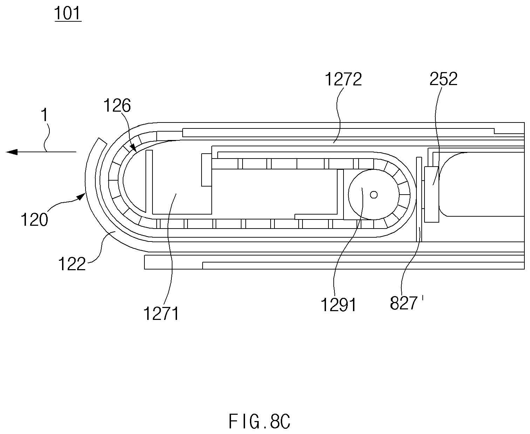

FIG. 8C illustrates the electronic device including an actuator according to another embodiment.

Referring to FIGS. 8A and 8B, in an embodiment, the first panel support member 126 may include the first variable magnet member 262 disposed on the first roll bar 1271. For example, the first variable magnet member 262 may be disposed on an opposite surface 1271B facing away from the first curved surface 1271A of the first roll bar 1271. For example, the first variable magnet member 262 may be at least partially accommodated in a groove formed on the opposite surface 1271B of the first roll bar 1271.

In an embodiment, the first magnet member 264 may be coupled to one end of the first support structure 242 (e.g., an end closer to the opposite end 325B of the guide rail 325 within the path of the guide rail 325 of FIG. 3B). For example, the first magnet member 264 may be disposed adjacent to a first bar 242-1 located at the one end of the first support structure 242. For example, the first magnet member 264 may be coupled with the first bar 242-1 so as to be rotatable within a specified angle range.

In an embodiment, the first variable magnet member 262 may include an electromagnet having a coil wound around an iron core or a hybrid electromagnet having a coil wound around a permanent magnet. In an embodiment, the direction and/or intensity of a magnetic field formed by the first variable magnet member 262 may vary depending on an electric current applied to the first variable magnet member 262. In an embodiment, the first magnet member 264 may include a permanent magnet.

In an embodiment, the distance between the first variable magnet member 262 and the first magnet member 264 may vary depending on movement of the first support structure 242. For example, in the normal state of the electronic device 101, the distance between the first variable magnet member 262 and the first magnet member 264 may be a first distance. However, physical contact between the first variable magnet member 262 and the first magnet member 264 is not excluded. For example, when the first distance is equal to 0, the first variable magnet member 262 and the first magnet member 264 may make physical contact with each other. For example, in the first extended state or the third extended state of the electronic device 101, the distance between the first variable magnet member 262 and the first magnet member 264 may be a second distance greater than the first distance.

In an embodiment, in the normal state or the second extended state of the electronic device 101, the first variable magnet member 262 may be controlled such that opposite poles of the first variable magnet member 262 and the first magnet member 264 face each other. In an embodiment, in the normal state or the second extended state of the electronic device 101, an attractive force may act between the first variable magnet member 262 and the first magnet member 264. The attractive force may suppress movement of the second housing 120, may prevent the second housing 120 from being extended in a way that is not intended by a user, and may prevent an injury to the user due to unintended extension of the second housing 120.

However, when the user wants to extend the second housing 120, the second housing 120 may be required to be easily extended. For example, the electronic device 101 according to an embodiment may detect movement of the second housing 120 in the normal state or the second extended state and may allow the same poles of the first variable magnet member 262 and the first magnet member 264 to face each other. In this case, a repulsive force may act between the first variable magnet member 262 and the first magnet member 264. The repulsive force may support an operation in which the second housing 120 moves in the first direction 1. In another example, the electronic device 101 may include a lock mode (or, a child safety mode) in which a first state in which an attractive force acts between the first variable magnet member 262 and the first magnet member 264 is maintained. For example, the lock mode may be enabled or disabled through a user operation. For example, when the lock mode is disabled, the electronic device may be changed from the first state to a second state in which a repulsive force acts between the first variable magnet member 262 and the first magnet member 264. In another example, when the lock mode is disabled, the electronic device 101 may be changed from the first state to the second state in response to detection of movement of the second housing 120 while the electronic device 101 is in the normal state or the second extended state.

The descriptions of the first variable magnet member 262 and the first magnet member 264, which have been given with reference to FIGS. 8A and 8B, may be substantially identically, similarly, or correspondingly applied to the second variable magnet member (e.g., the second variable magnet member 272 of FIG. 7B) and the second magnet (e.g., the second magnet member 274 of FIG. 7B) that are not illustrated. For example, the second variable magnet member may include an electromagnet or a hybrid electromagnet, and the second magnet member may include a permanent magnet. For example, the distance between the second variable magnet member and the second magnet member in the normal state may be a third distance, and the distance between the second variable magnet member and the second magnet member in the second extended state or the third extended state may be a fourth distance greater than the third distance. For example, an attractive or repulsive force may act between the second variable magnet member and the second magnet member depending on a state of the electronic device 101, and thus the second variable magnet member and the second magnet member may limit or support movement of the third housing 130. For example, when the electronic device 101 is in the normal state or the first extended state or the lock mode is enabled by the user, the electronic device 101 may control the second variable magnet member such that an attractive force acts between the second variable magnet member and the second magnet member. In another example, when movement of the third housing 130 is detected while the electronic device 101 is in the normal state or the first extended state, the electronic device 101 may control the second variable magnet member such that a repulsive force acts between the second variable magnet member and the second magnet member. In another example, when the electronic device 101 in the normal state or the first extended state detects movement of the third housing after the user disables the lock mode, the electronic device 101 may control the second variable magnet member such that a repulsive force acts between the second variable magnet member and the second magnet member.

In an embodiment, the first panel support member 126 may include a first support part 827 extending from the fist extension 1272. In an embodiment, the first support part 827 may extend from the first extension 1272 into the space between the second roll bar 1291 and the first actuator 252. In an embodiment, the first support part 827 may extend from the first extension 1272 toward the back plate 118.

In an embodiment, the first actuator 252 may provide a physical force to the first support part 827 in a direction (e.g., the first direction 1) in which the second housing 120 slides outside the first housing 110. In an embodiment, the physical force provided from the first actuator 252 may be transmitted, through the first support part 827, to the first panel support member 126 and the second housing 120 coupled with the first panel support member 126.

In an embodiment, the physical force provided from the first actuator 252 may enable the second housing 120 to easily slide outside the first housing 110 or may enable the second region 162 of the display 160 to be easily extended.

In an embodiment, in the normal state or the second extended state, the electronic device 101 may detect movement of the second housing 120. In an embodiment, in response to the detection, the electronic device 101 may control the first actuator 252 to apply a force to the second housing 120.

The descriptions of the first support part 827 and the first actuator 252, which have been given with reference to FIGS. 8A and 8B, may be correspondingly applied to the second actuator (e.g., the second actuator 254 of FIG. 2) disposed in the third housing (e.g., the third housing 130 of FIG. 2) and a second support part (not illustrated) extending from the second panel support member (e.g., the second panel support member 136 of FIG. 2). The second actuator 254 may apply a force to the second support part in a direction (e.g., the second direction 2) in which the third housing 130 slides. Accordingly, the third housing 130 may easily slide. For example, in the normal state or the first extended state, the electronic device 101 may detect movement of the third housing 130. For example, in response to the detection, the electronic device 101 may control the second actuator 254 to apply a force to the third housing 130.

In another embodiment, referring to FIG. 8C, a first support part 827' may extend from the first cover 122 into the space between the second roll bar 1291 and the first actuator 252. The first support part 827' may extend from the first cover 122 toward the first extension 1272. In this case, the first actuator 252 may provide a physical force to the first support part 827' in a direction (e.g., the first direction 1) in which the second housing 120 slides outside the first housing 110. In an embodiment, the physical force provided from the first actuator 252 may be transmitted to the first cover 122 of the second housing 120 through the first support part 827'.

FIG. 9 illustrates an electronic device according to another embodiment.

Referring to FIG. 9, the electronic device 101 according to an embodiment may include a third actuator 956, a latch member 958, and the striker member 960.

In an embodiment, the third actuator 956 may be disposed on an opposite surface of a first roll bar 1271 (e.g., the opposite surface 1271B of FIG. 3B). In an embodiment, the third connector 956 may be operationally coupled with the first latch member 958.

In an embodiment, the first striker member 960 may be disposed at one end of the first support structure 242. For example, the first striker member 960 may be coupled with a first bar 242-1 of the first support structure 242.

In an embodiment, the first latch member 958 may be selectively coupled to the first striker member 960 by power provided from the third actuator 956. In an embodiment, when the first latch member 958 is coupled with the first striker member 960, movement of the first support structure 242 and a second housing 120 may be limited.

Although not illustrated, the third actuator 956, the first latch member 958, and the first striker member 960 according to an embodiment may be symmetrically disposed in a third housing 130 located on the opposite side to the second housing 120 with respect to a first housing 110 and may be referred to as a fourth actuator, a second latch member, and a second striker, respectively. Although not illustrated, the electronic device 101 according to an embodiment may selectively limit movement of the third housing 130 using the fourth actuator, the second latch member, and the second striker member in the same way as the third actuator 956, the first latch member 958, and the first striker member 960.

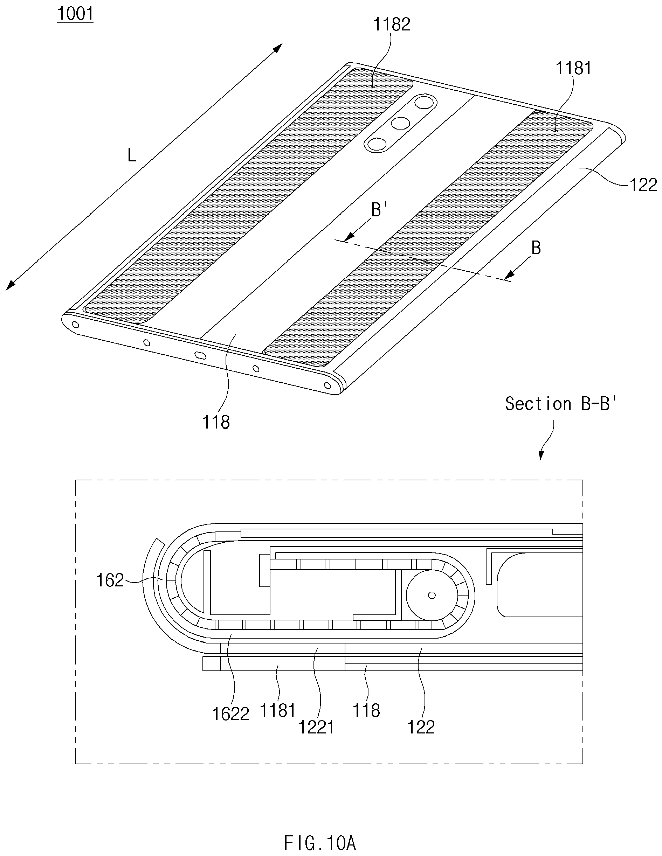

FIG. 10A is a perspective view illustrating a rear surface of an electronic device according to an embodiment.

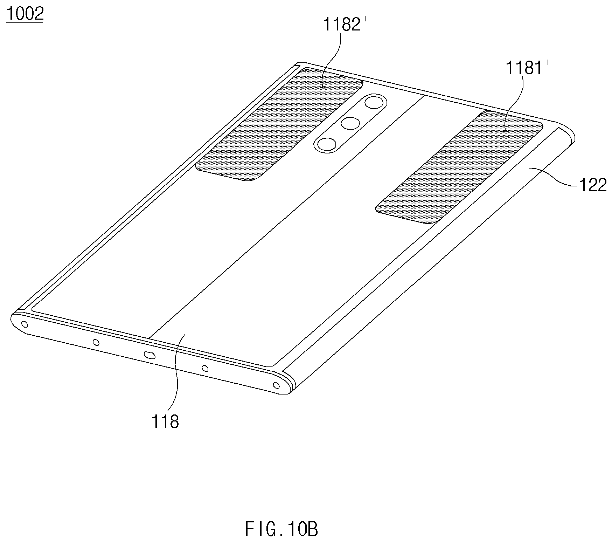

FIG. 10B is a perspective view illustrating a rear surface of an electronic device according to another embodiment.

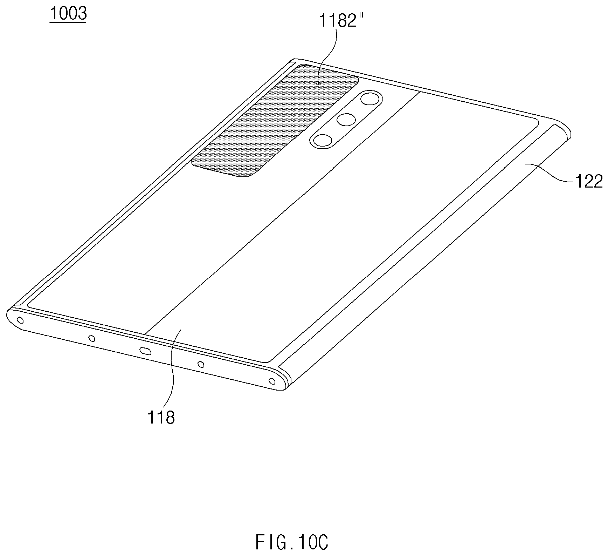

FIG. 10C is a perspective view illustrating a rear surface of an electronic device according to another embodiment.

Referring to FIG. 10A, a portion of a back plate 118 according to an embodiment may be formed to be substantially transparent. For example, the back plate 118 may include a first specified region 1181 and a second specified region 1182 that are substantially transparent. In an embodiment, the first specified region 1181 and the second specified region 1182 may extend in a lengthwise direction L of the back plate 118 and may have a length similar to the length of the back plate 118. In an embodiment, based on a normal state of the electronic device 101, the first specified region 1181 may have a width corresponding to a portion of a second region 162 of a display 160 that faces the back plate 118 and is substantially parallel to the back plate 118. For example, the first specified region 1181 may overlap the portion of the second region 162 of the display 160. In an embodiment, a portion 1181 of a first cover 122 that overlaps the first specified region 1181 may be formed to be substantially transparent.

Similarly to the first specified region 1181, the second specified region 1182 according to an embodiment may overlap a portion of a third region (not illustrated) of the display 160 (e.g., the third region 163 of FIG. 4A) that faces the back plate 118 and is substantially parallel to the back plate 118. Similarly to the portion 1181 of the first cover 122, a second portion (not illustrated) of the first cover 122 that overlaps the second specified region 1182 may be substantially transparent.

In an embodiment, in the normal state of the electronic device 101, a screen displayed on the second region 162 and the third region 163 of the display 160 may be visible through the first specified region 1181 and the second specified region 1182 of the back plate 118.

In another embodiment, referring to FIG. 10B, a first specified region 1281' and a second specified region 1282' of a back plate 118 may be shorter than the first specified region 1181 and the second specified region 1182 illustrated in FIG. 10A.

In another embodiment, referring to FIG. 10C, only a second specified region 1182" of a back plate 118 may be formed to be substantially transparent, and the remaining portion may be formed to be opaque. For example, the first specified region 1181' illustrated in FIG. 10B may be omitted.

An electronic device according to the invention is provided by the independent claim.

In an embodiment, the first panel support member may include a first roll bar (e.g., the first roll bar 1271 of FIG. 3A) that forms the first curved surface and extends in a direction perpendicular to the first direction and a second roll bar (e.g., the second roll bar 1291 of FIG. 3A) that forms the second curved surface and extends in the direction perpendicular to the first direction, the second roll bar being spaced apart from the first roll bar.

In an embodiment, the electronic device may include a normal state (e.g., the state of the electronic device 101 illustrated in FIG. 4A) in which the second region of the flexible display is located in the second housing and the third region of the flexible display is located in the third housing. In the normal state, the second region of the flexible display may include a first portion (e.g., the first portion 1621 of FIG. 4C) that extends in the counterclockwise direction along the first curved surface of the first roll bar, a second portion (e.g., the second portion 1622 of FIG. 4C) that extends from the first portion to the second roll bar, a third portion (e.g., the third portion 1623 of FIG. 4C) that extends from the second portion in the counterclockwise direction along the second curved surface of the second roll bar, and a fourth portion (e.g., the fourth portion 1624 of FIG. 4C) that extends from the third portion toward the first roll bar.

In an embodiment, in the normal state, the second portion and the third portion of the second region and the first region may overlap each other.

In an embodiment, the electronic device may further include a first extension (e.g., the first extension 1272 of FIG. 3A) that extends from the first roll bar toward the second roll bar and a second extension (e.g., the second extension 1292 of FIG. 3A) that extends from the second roll bar toward the first roll bar. The first extension may support at least a portion of the second region of the flexible display as the second housing moves in the first direction.

In an embodiment, in the normal state, the second portion of the second region may extend under the second extension to the second roll bar, and the fourth portion of the second region may extend under the first extension toward the first roll bar.

In an embodiment, the electronic device may further include a first multi-bar (e.g., the first support structure 242 of FIG. 2) attached to a rear surface of the second region of the flexible display and a second multi-bar (e.g., the second support structure 244 of FIG. 2) attached to a rear surface of the third region of the flexible display. The first multi-bar may at least partially surround the first roll bar and the second roll bar, and the second multi-bar may at least partially surround the third roll bar and the fourth roll bar.

In an embodiment, the electronic device may further include first guide members (e.g., the first guide member 124 of FIG. 2) coupled to opposite ends of the first roll bar and opposite ends of the second roll bar. Opposite ends of the first multi-bar may be accommodated in guide rails (e.g., the guide rails 325 of FIG. 3A) formed in the first guide members, and the first multi-bar may pull the second region of the flexible display while moving in the guide rails.

In an embodiment, the electronic device may further include a first actuator (e.g., the first actuator 252 of FIG. 2) disposed in the first housing so as to be adjacent to the second housing and a second actuator (e.g., the second actuator 254 of FIG. 2) disposed in the first housing so as to be adjacent to the third housing. The first actuator may apply a force to the second housing in the first direction, and the second actuator may apply a force to the third housing in the second direction.

In various embodiments, the first panel support member may include a first roll bar (e.g., the first roll bar 1271 of FIG. 3A) that forms the first curved surface and extends in a direction perpendicular to the first direction, a second roll bar (e.g., the second roll bar 1291 of FIG. 3A) that forms the second curved surface and extends in the direction perpendicular to the first direction and that is spaced apart from the first roll bar, a first extension (e.g., the first extension 1272 of FIG. 3A) that extends from the first roll bar toward the third housing beyond the second roll bar, and a first support part (e.g., the first support part 827 of FIG. 8A) that extends from the first extension into a space between the second roll bar and the first actuator. The first actuator may apply a force to the first support part in the first direction.

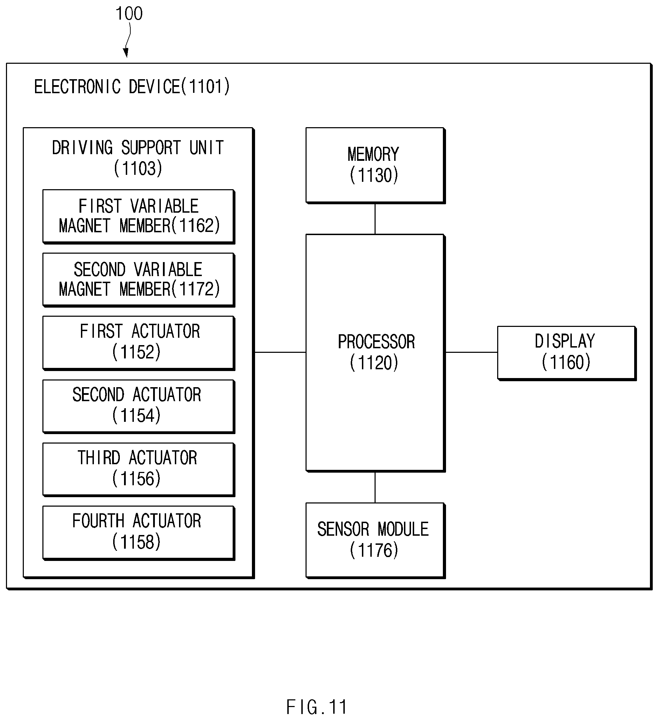

In an embodiment, the electronic device may further include at least one sensor (e.g., a sensor module 1176 of FIG. 11) and at least one processor (e.g., a processor 1120 of FIG. 11) operationally connected with the first actuator, the second actuator, and the at least one sensor. The at least one processor may detect movement of the second housing and the third housing using the at least one sensor, may control the first actuator to apply a force to the second housing in the first direction in response to detection of movement of the second housing in the first direction, and may control the second actuator to apply a force to the third housing in the second direction in response to detection of movement of the third housing in the second direction.

In various embodiments, the electronic device may further include a first variable magnet member (e.g., the first variable magnet member 262 of FIG. 2) disposed on the first roll bar, a first magnet member (e.g., the first magnet member 264 of FIG. 2) disposed on a rear surface of the second region of the flexible display, a second variable magnet member (e.g., the second variable magnet member 272 of FIG. 2) disposed on the second roll bar, and a second magnet member (e.g., the magnet member 274 of FIG. 2) disposed on a rear surface of the third region of the flexible display. The first magnet member may move away from the first variable magnet member as the second housing moves, and the second magnet member may move away from the second variable magnet member as the third housing moves.

In an embodiment, the electronic device may include at least one sensor (e.g., the sensor module 1176 of FIG. 11) and at least one processor (e.g., the processor 1120 of FIG. 11) operationally connected with the first variable magnet member, the second variable magnet member, and the at least one sensor. The electronic device may include a normal state (e.g., the state of the electronic device 101 of FIG. 4A) in which the second region of the flexible display is located in the second housing and the third region of the flexible display is located in the third housing. The at least one processor may detect whether the electronic device is in the normal state, by using the at least one sensor, may control the first variable magnet member such that opposite poles of the first magnet member and the first variable magnet member face each other while the electronic device is in the normal state, and may control the second variable magnet member such that opposite poles of the second magnet member and the second variable magnet member face each other while the electronic device is in the normal state.

In an embodiment, the first housing may include a back plate (e.g., the back plate 118 of FIG. 10A) that forms a rear surface of the electronic device, and the back plate may include a first specified region (e.g., the first specified region 1181 of FIG. 10A) and a second specified region (e.g., the second specified region 1182 of FIG. 10A) that are formed to be substantially transparent.

In an embodiment, the electronic device may include a normal state in which the second region of the flexible display is located in the second housing and the third region of the flexible display is located in the third housing. In the normal state, the first specified region may at least partially overlap the second region of the flexible display, and in the normal state, the second specified region may at least partially overlap the third region of the flexible display.

An electronic device according to various embodiments (e.g., the electronic device 101 of FIG. 1) may include a first housing (e.g., the first housing 110 of FIG. 1), a second housing (e.g., the second housing 120 of FIG. 1) that forms a first side surface of the electronic device (e.g., the first side surface 10B of FIG. 1) and that is coupled to the first housing so as to be movable in a first direction (e.g., the first direction 1 of FIG. 1) from the first housing toward the first side surface, at least a portion of the second housing being disposed in the first housing, a third housing (e.g., the third housing 130 of FIG. 1) that forms a second side surface of the electronic device (e.g., the second side surface 10C of FIG. 1) and that is coupled to the first housing so as to be movable in a second direction (e.g., the second direction 2 of FIG. 1) from the first housing toward the second side surface, at least a portion of the third housing being disposed in the first housing, a first panel support member (e.g., the first panel support member 126 of FIG. 2) that is fixedly disposed in the second housing and that extends in a direction perpendicular to the first direction, a second panel support member (e.g., the second panel support member 136 of FIG. 2) that is fixedly disposed in the second housing and that extends in a direction perpendicular to the second direction, a flexible display (e.g., the display 160 of FIG. 1) including a first region (e.g., the first region 161 of FIG. 1) disposed in the first housing and exposed outside the electronic device, a second region (e.g., the second region 162 of FIG. 1) that extends from the first region and at least partially surrounds the first panel support member and that is at least partially located in the second housing or is exposed outside the electronic device as the second housing moves in the first direction, and a third region (e.g., the third region 163 of FIG. 1) that at least partially surrounds the second panel support member from the first region and that is at least partially located in the third housing or is exposed outside the electronic device as the third housing moves in the second direction, a first variable magnet member (e.g., the first variable magnet member 262 of FIG. 2) fixedly disposed on the first panel support member, a first magnet member (e.g., the first magnet member 264 of FIG. 2) that is attached to the second region of the flexible display and that moves away from the first variable magnet member as the second housing moves in the first direction, a second variable magnet member (e.g., the second variable magnet member 272 of FIG. 2) fixedly disposed on the second panel support member, and a second magnet member (e.g., the second magnet member 274 of FIG. 2) attached to the third region of the flexible display such that a distance from the second variable magnet member varies as the third housing moves. The second magnet member may move away from the second variable magnet member as the third housing moves in the second direction.

In an embodiment, the electronic device may further include at least one sensor (e.g., the sensor module 1176 of FIG. 11) and at least one processor (e.g., the processor 1120 of FIG. 11) operationally connected with the first variable magnet member, the second variable magnet member, and the at least one sensor. The electronic device may include a normal state in which the second region of the flexible display is located in the second housing and the third region is located in the third housing. The at least one processor may detect whether the electronic device is in the normal state, by using the at least one sensor, may control the first variable magnet member such that opposite poles of the first magnet member and the first variable magnet member face each other in the normal state, and may control the second variable magnet member such that opposite poles of the second magnet member and the second variable magnet member face each other in the normal state.

In an embodiment, the electronic device may further include a first actuator (e.g., the first actuator 252 of FIG. 2) disposed in the first housing so as to be adjacent to the second housing and a second actuator (e.g., the second actuator 254 of FIG. 2) disposed in the first housing so as to be adjacent to the third housing. The at least one processor may detect movement of the second housing and the third housing using the at least one sensor, may control the first actuator to apply a force to the second housing in the second direction in response to detection of movement of the second housing in the first direction, and may control the second actuator to apply a force to the third housing in the second direction in response to detection of movement of the third housing in the second direction.

In an embodiment, the at least one processor may detect movement of the second housing and the third housing using the at least one sensor, may control the first variable magnet member such that the same poles of the first magnet member and the first variable magnet member face each other, in response to detection of movement of the second housing in the first direction, and may control the second variable magnet member such that the same poles of the second magnet member and the second variable magnet member face each other, in response to detection of movement of the third housing in the second direction.

In an embodiment, the electronic device may further include a first multi-bar (e.g., the first support structure 242 of FIG. 2) that is disposed on a rear surface of the second region of the flexible display and that performs a sliding motion along a circumference of the first panel support member. The first magnet member may be disposed at one end of the first multi-bar. The first panel support member may include a first roll bar (e.g., the first roll bar 1271 of FIG. 3A) that extends in a direction perpendicular to the first direction and that is fixedly disposed in the second housing, a second roll bar (e.g., the second roll bar 1291 of FIG. 3A) that extends parallel to the first roll bar and that is fixedly disposed in the second housing and spaced apart from the first roll bar in the second direction, a first extension (e.g., the first extension 1272 of FIG. 3A) that extends from the first roll bar toward the second roll bar, and a second extension (e.g., the second extension 1292 of FIG. 3A) that extends from the second roll bar toward the first roll bar.

FIG. 11 is a functional block diagram 100 illustrating an exemplary configuration of an electronic device according to an embodiment.

Referring to FIG. 11, the electronic device 1101 according to the wording of the independent claims (e.g., the electronic device 101 of FIG. 1 or the electronic device 3201 of FIG. 32) includes a display 1160 and a housing and may include the processor 1120, a memory 1130, the sensor module 1176, a driving support unit 1103. The housing (not illustrated) (e.g., the first housing 110, the second housing 120, and the third housing 130 of FIG. 1) accommodates the aforementioned components.

In an embodiment, the processor 1120 (e.g., the processor 3220 of FIG. 32) may be operationally connected with the memory 1130, the display 1160, the sensor module 1176, and the driving support unit 1103. In an embodiment, the processor 1120 may execute instructions stored in the memory 1130. The electronic device 1101 according to an embodiment may control the display 1160, the sensor module 1176, and the driving support unit 1103 and may perform various operations, by executing the instructions stored in the memory 1130 using the processor 1120. Operations described as operations of the electronic device 1101 in the disclosure may be referred to as operations of the processor 1120.

According to the wording of the independent claims, the display 1160includes a rollable display (or, a flexible display). In an embodiment, the display 1160 may be referred to as the display 160 of FIG. 1. The display 1160 includes a second region (e.g., the second region 162 of FIG. 4A) that is able to be extended or reduced depending on a sliding motion of a second housing (e.g., the second housing 120 of FIG. 4A), a third region (e.g., the third region 163 of FIG. 4A) that is able to be extended or reduced depending on a sliding motion of a third housing (e.g., the third housing 130 of FIG. 4A), and a first region (e.g., the first region 161 of FIG. 4A) that extends from the first region to the third region and that is exposed to the outside irrespective of a state of the electronic device 101.

In an embodiment, the sensor module 1176 (e.g., a sensor module 3276 of FIG. 32) may include at least one sensor. For example, the sensor module 1176 may include at least one of a grip sensor, a proximity sensor, an acceleration sensor, a gyro sensor, an acoustic wave sensor, a radio wave sensor (e.g., a radar sensor), a magnetic sensor (e.g., a Hall sensor), and/or an optical sensor (e.g., an infrared sensor or a LIDAR sensor).

In an embodiment, the sensor module 1176 may sense a state of the electronic device 1110 or an external state and may output a value corresponding to the sensed state and provide the value to the processor 1120. For example, the sensor module 1176 may sense the positions of the second housing and the third housing of the electronic device 1110 and may provide values corresponding to the positions to the processor 1120. The processor 1120 may determine the directions of movement and/or the moving distances of the second housing and the third housing, based on the values obtained from the sensor module 1176.

For example, the sensor module 1176 may include a plurality of contact points disposed in a first housing and arranged to correspond to a path along which the second housing moves and a conductive member disposed in the second housing. When the second housing moves, the conductive member may sequentially make contact with the plurality of contact points along the moving path, and the sensor module 1176 may output an electrical signal (e.g., a voltage) corresponding thereto. The processor 1120 may determine the direction of movement and/or the moving distance of the second housing, based on the signal provided from the sensor module 1176.

In another example, a plurality of contact points may be disposed in a guide rail (e.g., the guide rail 325 of FIG. 3B) of a first guide member (e.g., the first guide member 124 of FIG. 3B). At least a portion of a first multi-bar (e.g., the first support structure 242 of FIG. 3B) may be formed of a conductive material. The first multi-bar may make electrical contact with the plurality of contact points while moving a path of the guide rail, and the sensor module 1176 may output a signal corresponding thereto.

In another example, the sensor module 1176 may include a proximity sensor and may output a value corresponding to a distance from the second housing using the proximity sensor.

However, a method of determining, by the electronic device 1101, the directions of movement and the moving distances of the second housing and the third housing is not limited by the above-described examples. For example, a method available to those skilled in the art may be applied to identify the directions of movement and the moving distances of the second housing and the third housing.

The electronic device 1101 according to an embodiment may determine whether a first side surface of the second housing (e.g., the first side surface 10B of FIG. 1) and/or a second side surface of the third housing (e.g., the second side surface 10C of FIG. 1) is gripped by a user, based on a value obtained by the sensor module 1176. For example, the sensor module 1176 may include a grip sensor. For example, the grip sensor may sense a change (or, the amount of change) in permittivity that occurs when the user grips the housing of the electronic device 1101 and may output a value corresponding thereto. The processor 1120 may determine whether the second housing and/or the third housing is gripped, by using the sensor module 1176. However, without being limited thereto, various methods available to those skilled in the art may be applied. In the disclosure, for convenience of description, a case in which the second housing (or, the first side surface) is gripped by the user may be described as a case in which the electronic device 1101 is gripped by the user's left hand. In the disclosure, for convenience of description, a case in which the third housing (or, the second side surface) is gripped by the user may be described as a case in which the electronic device 1101 is gripped by the user's right hand. In the disclosure, for convenience of description, a case in which the second housing and the third housing are gripped by the user may be described as a case in which the electronic device 101 is gripped by the user's hands.

In an embodiment, the driving support unit 1103 may include a first variable magnet member 1162, a second variable magnet member 1172, a first actuator 1152, a second actuator 1154, a third actuator 1156, and a fourth actuator 1158.

In an embodiment, the first variable magnet member 1162 and the second variable magnet member 1172 may correspond to the first variable magnet member 262 and the second variable magnet member 272 of FIG. 2, respectively.

In an embodiment, the first actuator 1152 and the second actuator 1154 may correspond to the first actuator 252 and the second actuator 254 of FIG. 2, respectively.

In an embodiment, the third actuator 1156 may correspond to the third actuator 956 of FIG. 9.

In an embodiment, the fourth actuator 1158 may correspond to the fourth actuator (not illustrated) that has been described with reference to FIG. 9.

The electronic device 1101 according to an embodiment may determine a direction in which the display 1160 is extended and/or an area by which the display 1160 is extended, by using the sensor module 1176. In an embodiment, the direction in which the display 1160 is extended and/or the area by which the display 1160 is extended may be determined based on the moving distance and/or the direction of movement of the second housing and/or the third housing. In an embodiment, the electronic device 1101 may determine the area by which the display 1160 is exposed outside the electronic device 1101, based on extension information of the housing (e.g., the direction of movement and/or the moving distance of the first housing and/or the second housing) and/or extension information of the display 1160 (e.g., the extension direction and/or the extension distance of the display 1160) obtained by using the sensor module 1176. In an embodiment, based on the determination, the electronic device 1101 may display a screen having a size and/or resolution corresponding to the area by which the display 1160 is exposed to the outside. In the following description, a screen displayed through the display 1160 will be described based on the first region, the second region, and the third region without distinction of a region actually exposed to the outside. However, this is only for the convenience of description. For example, in a case in which the second region of the display 1160 is partially exposed to the outside, displaying a screen on the second region may not mean that the screen is displayed on the entire second region, but may mean that the screen is displayed only on a portion of the second region exposed to the outside. In another example, as illustrated in FIG. 10A, the second region may be visible through a transparent region of a back plate (e.g., the first specified region 1181 of FIG. 10A) even though the entire second region of the display 1160 is located in the second housing. In this case, displaying a screen on the second region may not mean that the screen is displayed on the entire second region, but may mean that the screen is displayed on a portion of the second region that is visible from the outside (e.g., the second portion 1622 of FIG. 10A).

The description of the method of determining the extension direction and/or the extension distance of the display 1160 may correspond to operation 3104 of FIG. 31 to be described below.

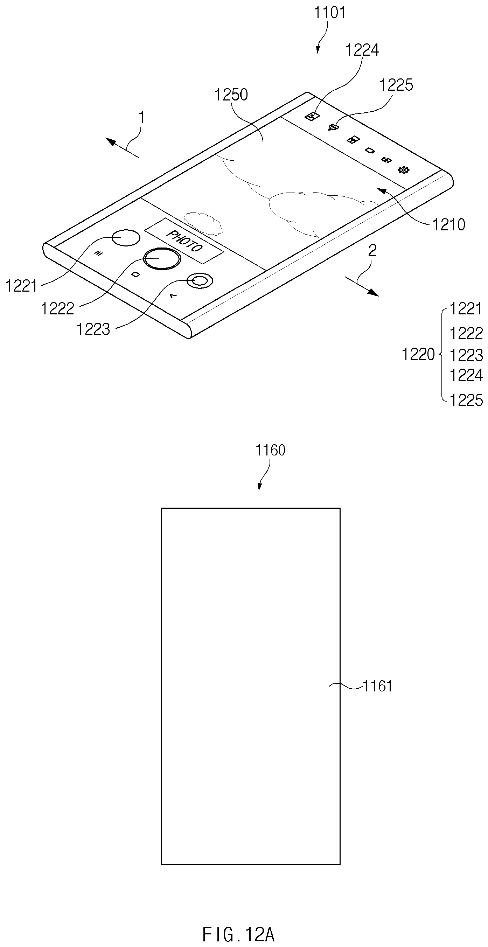

Hereinafter, various operations of the electronic device 1101 will be described with reference to FIGS. 12A to 31 together with FIG. 11.

FIG. 12A illustrates the electronic device according to an embodiment.

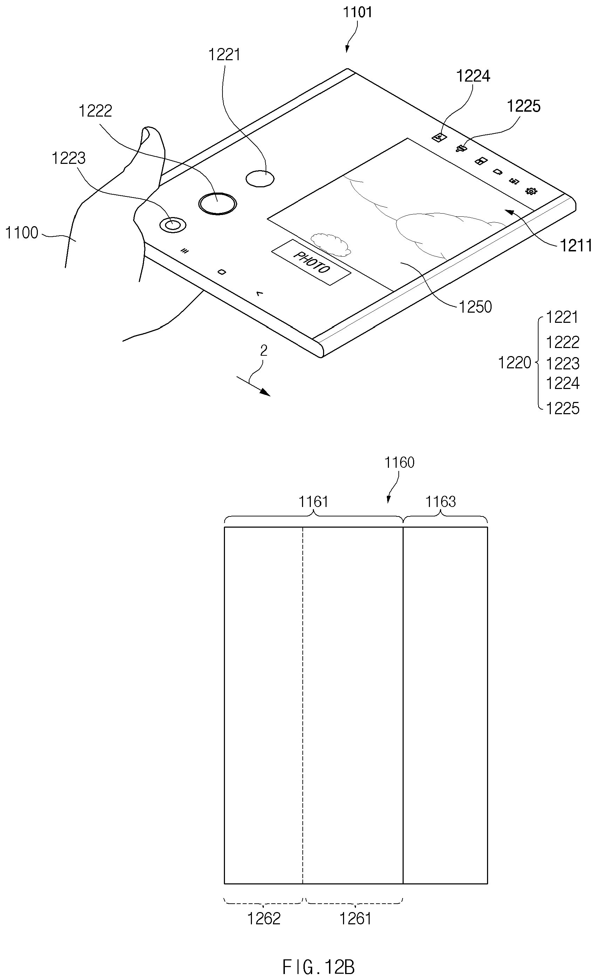

FIG. 12B illustrates the electronic device according to an embodiment.

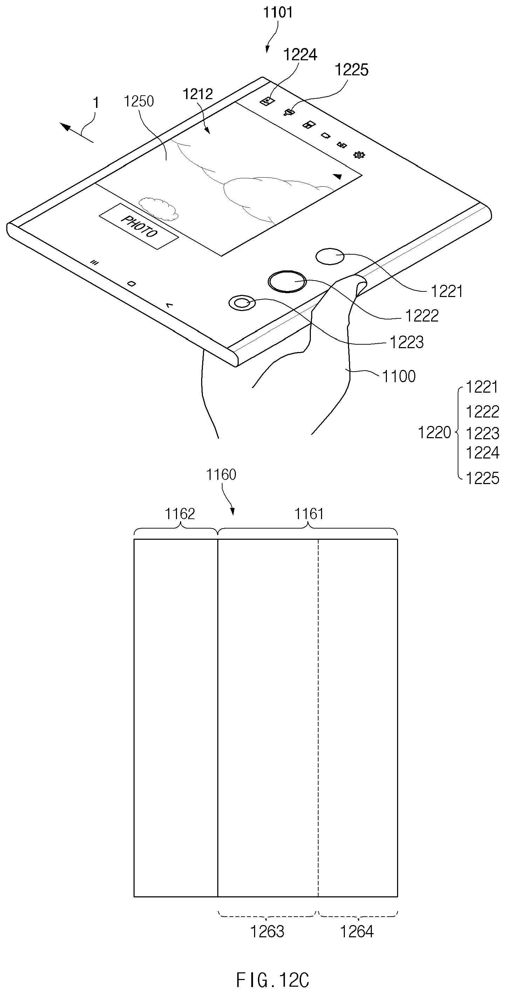

FIG. 12C illustrates the electronic device according to an embodiment.

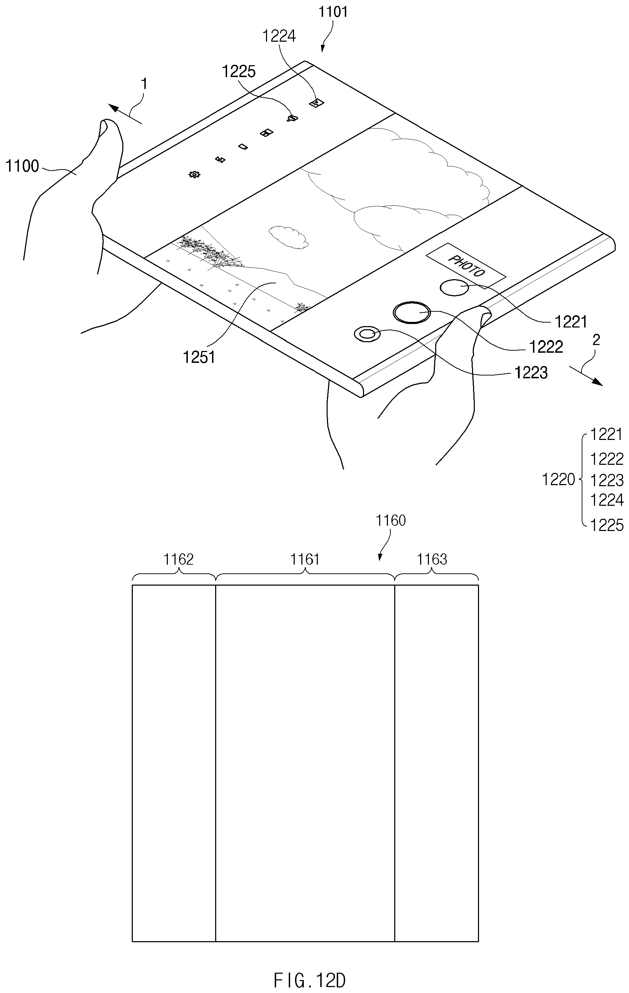

FIG. 12D illustrates the electronic device according to an embodiment.

Referring to FIG. 12A, the electronic device 1101 according to an embodiment may display a first screen 1210 on the first region 1161 of the display 1160. In an embodiment, the first screen 1210 may be an execution screen of a camera application. In an embodiment, the first screen 1210 may include a preview image 1250 based on at least some of images obtained from at least one camera of the electronic device 1101 (e.g., a camera module 3280 of FIG. 32) and a plurality of objects 1220 for controlling the at least one camera. The plurality of objects 1220 may include a first object 1221, a second object 1222, a third object 1223, a fourth object 1224, and a fifth object 1225. In an embodiment, each of the plurality of objects 1220 may correspond to at least one of control functions of the at least one camera, for example, a shutter, a flash setting, a sensitivity setting, a focus setting, a white balance setting, a timer setting, an exposure setting, access to a setting menu, and/or access to a gallery, but is not limited by the above-described examples.

The electronic device 1101 according to an embodiment may determine whether the electronic device 1101 is gripped by a left hand, a right hand, or both hands of a user 1100. In an embodiment, the electronic device 1101 may detect whether the display 1160 is extended in a first direction 1 and/or a second direction 2.

Referring to FIG. 12B, in an embodiment, when the electronic device 1101 is gripped by the left hand of the user 1100 and the display 1160 is extended in the second direction 2, the electronic device 1101 may display a second screen 1211 on the third region 1163 and a partial region 1261 of the first region 1161 extending from the third region 1163. In an embodiment, the second screen 1211 may include the remaining objects other than at least some of the plurality of objects 1220. For example, the second screen 1211 may include the fourth object 1224 and the fifth object 1225 other than the first object 1221, the second object 1222, and the third object 1223 among the plurality of objects 1220. In an embodiment, when the electronic device 1101 is gripped by the left hand of the user 1100 and the display 1160 is extended in the second direction 2, the electronic device 1101 may display the at least some objects excluded from the second screen 1221 on the remaining region 1262 of the first region 1161. For example, the at least some objects may include the first object 1221, the second object 1222, and the third object 1223. In an embodiment, the partial region 1261 and the remaining region 1262 may be regions obtained by dividing the first region 1161 into left and right portions at a specified ratio.

In an embodiment, when it is determined that the display 1160 is extended in the second direction 2, the electronic device 1101 may control the second variable magnet member 1172 such that a repulsive force acts between a second magnet member (e.g., the second magnet member 274 of FIG. 2) and the second variable magnet member 1172.

In an embodiment, when it is determined that the display 1160 is extended in the second direction 2, the electronic device 1101 may control the second actuator 1154 to apply a force to the third housing (e.g., the third housing 130 of FIG. 4A) in the second direction 2.

Referring to FIG. 12C, when the electronic device 1101 is gripped by the right hand of the user 1100 and the display 1160 is extended in the first direction 1, the electronic device 1101 according to an embodiment may display a third screen 1222 on the second region 1162 and a partial region 1263 of the first region 1161 extending from the second region 1162. In an embodiment, the third screen 1221 may include the remaining objects (e.g., the fourth object 1224 and the fifth object 1225) other than at least some objects (e.g., the first to third objects 1221 to 1223) among the plurality of objects 1220. When the electronic device 1101 is gripped by the right hand of the user 1100 and the display 1160 is extended in the first direction 1, the electronic device 1101 according to an embodiment may display the at least some objects (e.g., the objects 1221, 1222, and 1223) excluded from the second screen 1221 on the remaining region 1264 of the first region 1161. In an embodiment, the partial region 1263 and the remaining region 1264 may be regions obtained by dividing the first region 1161 into left and right portions at a specified ratio.

In an embodiment, when it is determined that the display 1160 is extended in the first direction 1, the electronic device 1101 may control the first variable magnet member 1162 such that a repulsive force acts between a first magnet member (e.g., the first magnet member 274 of FIG. 8A) and the first variable magnet member 1162.

In an embodiment, when it is determined that the display 1160 is extended in the first direction 1, the electronic device 1101 may control the second actuator 1154 to apply a force to the second housing (e.g., the second housing 120 of FIG. 4A) in the second direction 2.

Referring to FIG. 12D, when the electronic device 1101 is gripped by both the hands of the user 1100 and the display 1160 is extended in the first direction 1 and the second direction 2, the electronic device 1101 according to an embodiment may display a first group of objects (e.g., the fourth object 1224 and the fifth object 1225) among the plurality of objects 1220 on the second region 1162 and may display a second group of objects (e.g., the first to third objects 1221 to 1223) among the plurality of objects 1220 on the third region 1163. In an embodiment, the electronic device 1101 may magnify a preview image 1151 obtained by using the at least one camera such that the preview image 1151 corresponds to the area of the first region 1161.

The description given with reference to FIG. 12A may correspond to operation 3102 of FIG. 31.

The descriptions given with reference to FIGS. 12B, 12C, and 12D may correspond to operation 3106 of FIG. 31.

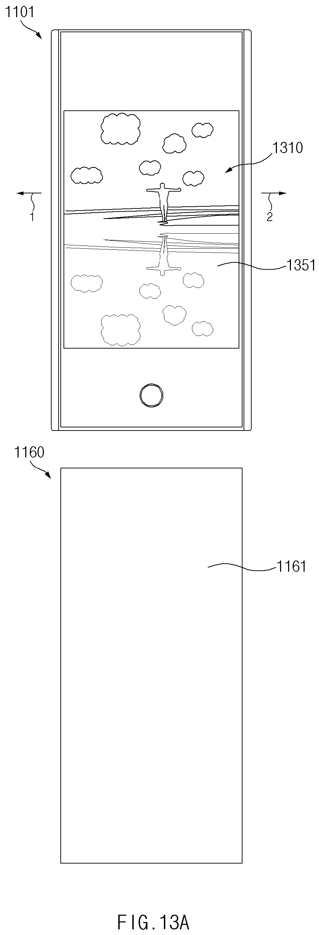

FIG. 13A illustrates the electronic device according to an embodiment.

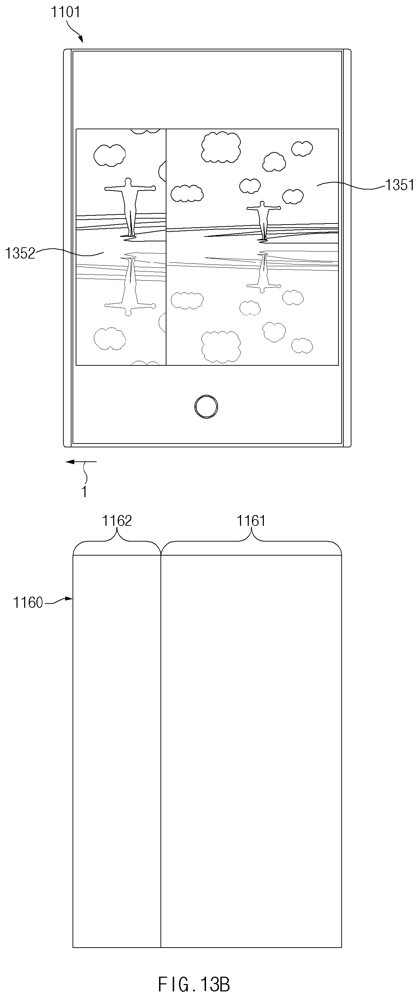

FIG. 13B illustrates the electronic device according to an embodiment.

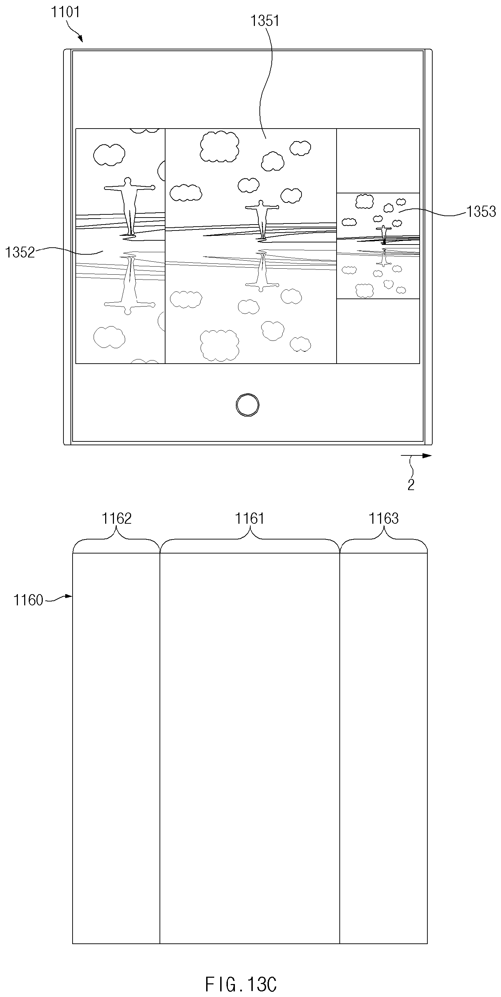

FIG. 13C illustrates the electronic device according to an embodiment.

Referring to FIG. 13A, the electronic device 1101 according to an embodiment may display a first screen 1310 including a first preview image 1351 on the first region 1161 of the display 1160. In an embodiment, the electronic device 1101 may obtain the first preview image 1351, based on at least some of images obtained from a first camera.

Referring to FIG. 13B, when the display 1160 is extended in the first direction 1, the electronic device 1101 according to an embodiment may display a second preview image 1352 based on images obtained from a second camera on the second region 1162 of the display 1160.

Referring to FIG. 13C, when the display 1160 is extended in the second direction 2, the electronic device 1101 according to an embodiment may display a third preview image 1353 based on images obtained from a third camera on the third region 1163 of the display 1160. In an embodiment, the third camera may differ from the first camera and the second camera. In an embodiment, the second camera may differ from the first camera. For example, the third camera may have a larger field of view (FOV) than the first camera. For example, the first camera may have a larger field of view than the second camera.

In an embodiment, the electronic device 1101 may determine a camera to display a preview image depending on the area of an exposed region of the display. For example, the electronic device 1101 according to an embodiment may detect the area by which the display 160 is exposed and may display a preview image based on the detection. For example, unlike in FIG. 13C, the electronic device 1101 may display a preview image (e.g., the third preview image 1353) of the third camera having a larger field of view than the first camera on the first region 1161 having a larger area than the third region 1163. In another example, the electronic device 1101 may display a preview image (e.g., the second preview image 1352) of the second camera having a smaller field of view than the first camera on the second region 1162 having a smaller area than the first region 1161.

The description given with reference to FIG. 13A may correspond to operation 3102 of FIG. 31.

The descriptions given with reference to FIGS. 13B and 13C may correspond to operation 3106 of FIG. 31.

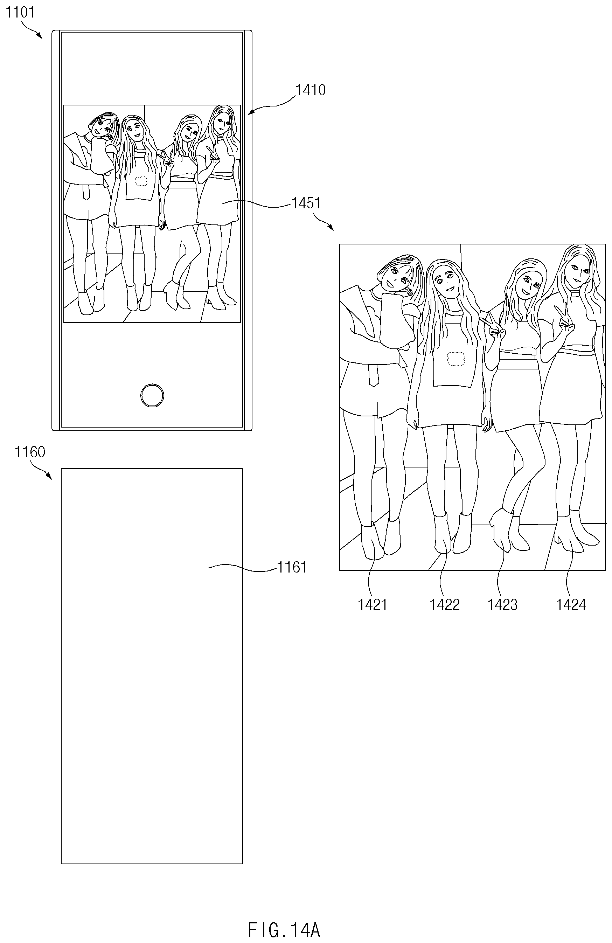

FIG. 14A illustrates the front surface of the electronic device according to an embodiment.

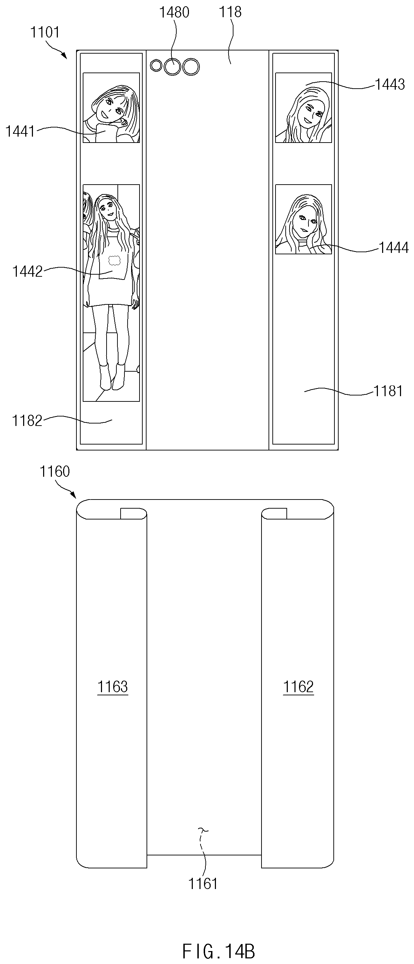

FIG. 14B illustrates the rear surface of the electronic device according to an embodiment.

Referring to FIGS. 14A and 14B, the electronic device 1101 according to an embodiment may display, on the first region 1161 of the display 1160, a first screen 1410 including a first preview image 1451 based on at least some of images obtained through at least one camera 1480.

The electronic device 1101 according to an embodiment may identify subjects 1421, 1422, 1423, and 1424 included in the first preview image 1451. The electronic device 1101 according to an embodiment may obtain images 1441, 1442, 1443, and 1444 corresponding to the subjects 1421, 1422, 1423, and 1424, based on the identification. For example, the electronic device 1101 may obtain the first image 1441 corresponding to a face of the identified first subject 1421. In another example, the electronic device 1101 may obtain the second image 1442 corresponding to a whole body of the identified second subject 1422.

When the display 1600 is not extended (or, while the electronic device 1101 is in a normal state), the electronic device 1101 according to an embodiment may display the images 1441, 1442, 1443, and 1444 on the first region 1611 and/or the second region 1612 of the display 1600. For example, the electronic device 1101 may display the third image 1443 corresponding to the third subject 1423 on the second region 1162. In another example, the electronic device 1101 may display the second image 1442 corresponding to the second subject 1422 on the third region 1163.

In an embodiment, the images 1441, 1442, 1443, and 1444 displayed on the second region 1162 and/or the third region 1163 of the display 1160 may be visible through a first specified region 1181 and a second specified region 11182 of the back plate 118 that is substantially transparent.

Although the plurality of subjects included in the first preview image 1451 and the plurality of images corresponding to the subjects are illustrated in FIGS. 14A and 14B, the disclosure is not limited thereto. For example, the electronic device 1101 may identify only one subject from the first preview image 1451 and may obtain only one image corresponding to the one subject, based on the identification. In this respect, the subjects 1421, 1422, 1423, and 1424 may be referred to as at least one subject, and the images 1441, 1442, 1443, and 1444 may be referred to as at least one image.

The description given with reference to FIG. 14A may correspond to operation 3102 of FIG. 31.

The description given with reference to FIG. 14B may correspond to operation 3106 of FIG. 31.

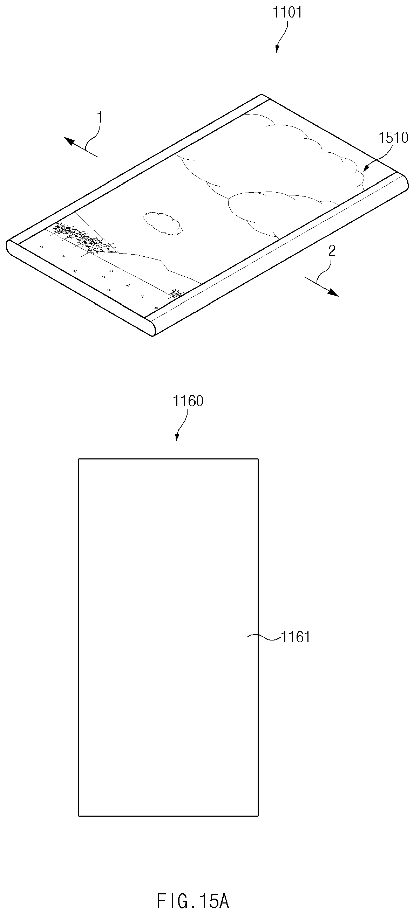

FIG. 15A illustrates the electronic device according to an embodiment.

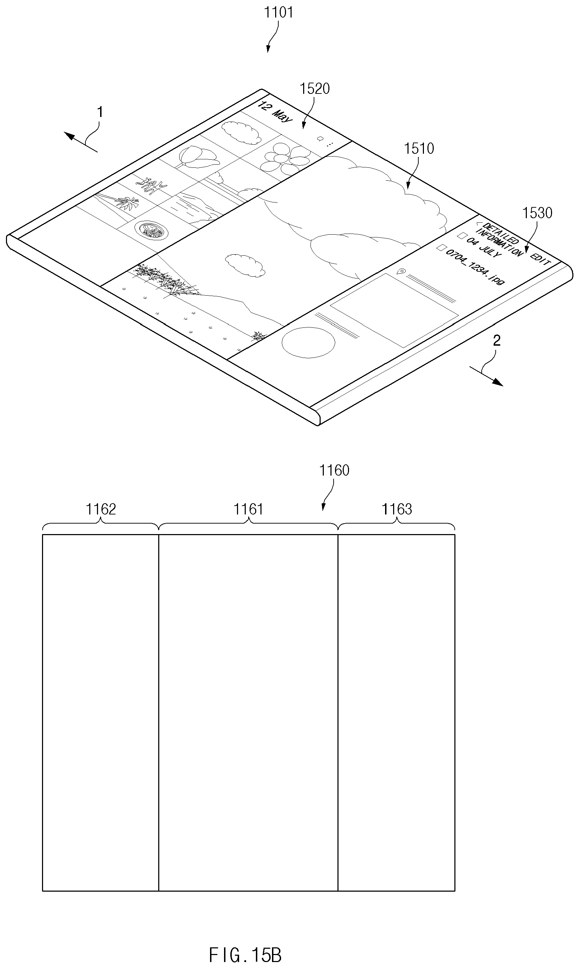

FIG. 15B illustrates the electronic device according to an embodiment.

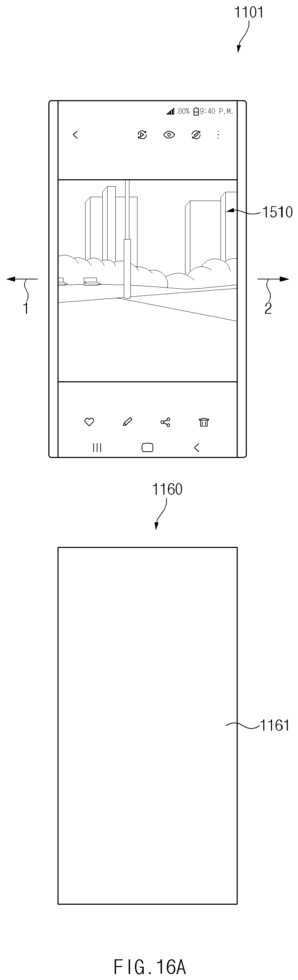

FIG. 16A illustrates the electronic device according to an embodiment.

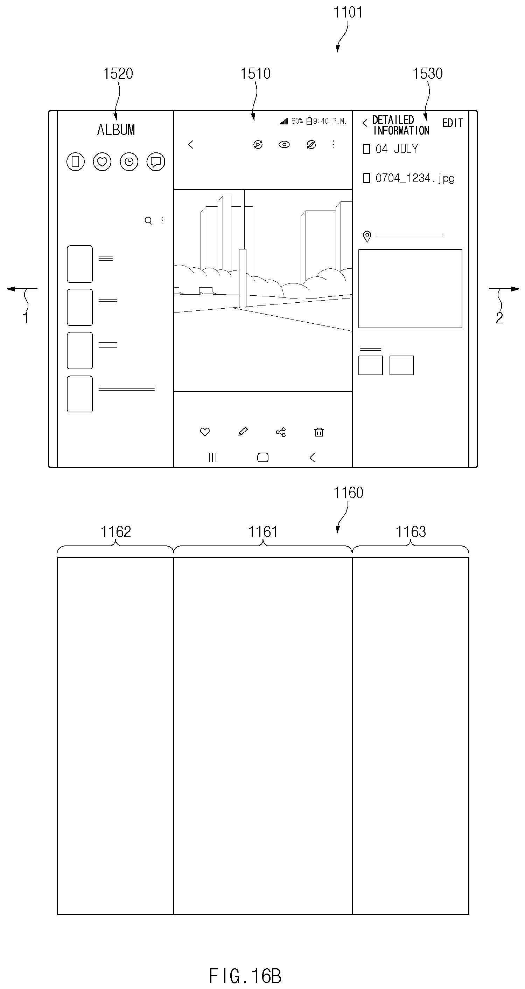

FIG. 16B illustrates the electronic device according to an embodiment.

Referring to FIGS. 15A and 16A, the electronic device 1101 according to an embodiment may display, on the first region 1161 of the display 1160, a first screen 1510 representing first content among contents stored in the electronic device 1101. For example, the first content may be an image or a video stored in the memory 1103 of the electronic device 1101, and the first screen 1510 may be a playback screen of the image or the video. In another example, the first screen 1510 may be an execution screen of an application for managing the contents stored in the electronic device 1101.

Referring to FIGS. 15B and 16B, when the display 1160 is extended in the first direction 1, the electronic device 1101 according to an embodiment may display, on the second region 1162, a first user interface (UI) 1520 representing first information related to the contents. For example, the first information may be information representing the list of the contents stored in the electronic device 1101.

When the display 11620 is extended in the second direction 2, the electronic device 1101 according to an embodiment may display, on the third region 1163, a second UI 1530 representing second information that is related to the first content displayed on the first screen 1510 and that differs from the first information. For example, the second information may include detailed information of the first content. For example, in a case in which the first content is a photo file, the second information may include the name and size of the photo file, the date and time when the photo was taken, and the location where the photo was taken. However, the disclosure is not limited by the above example. For example, the first information and the second information provided through the first UI 1520 and the second UI 1530 may be previously defined, and the pre-defined first information and the pre-defined second information may differ from the above example.

The descriptions given with reference to FIGS. 15A and 16A may correspond to operation 3102 of FIG. 31.

The descriptions given with reference to FIGS. 15B and 16B may correspond to operation 3106 of FIG. 31.

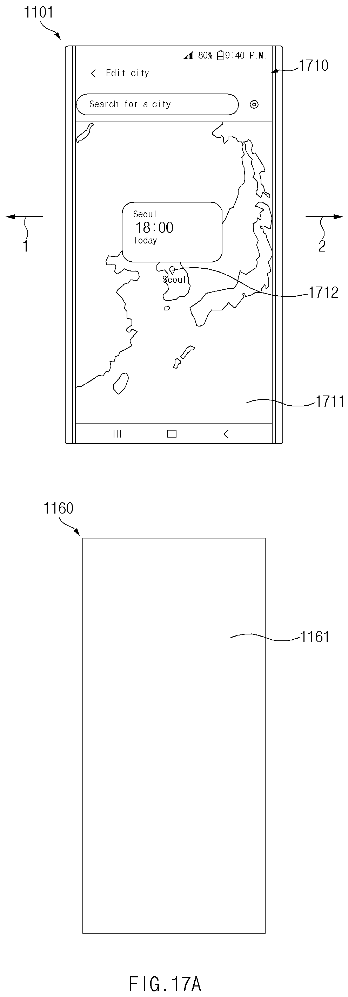

FIG. 17A illustrates the electronic device according to an embodiment.

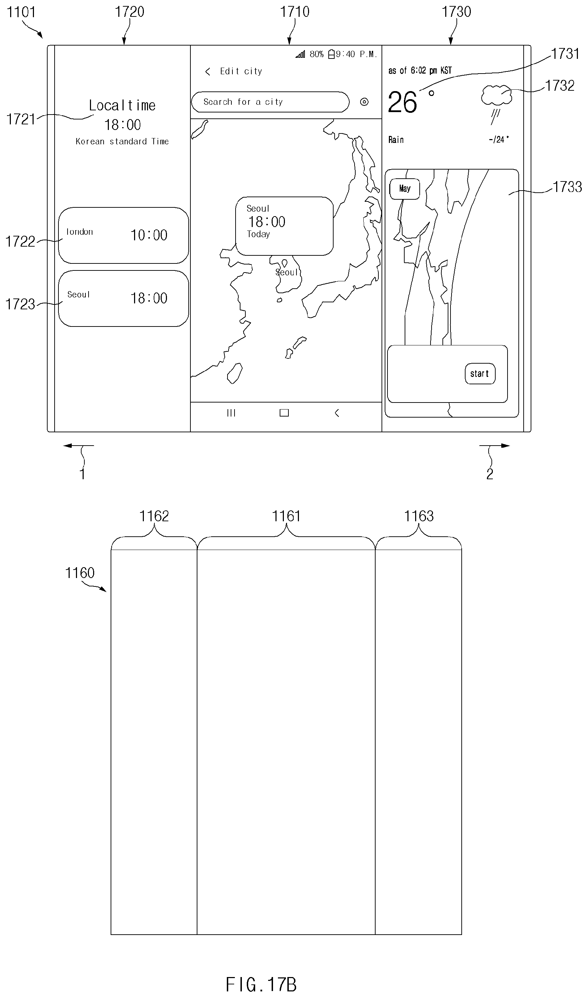

FIG. 17B illustrates the electronic device according to an embodiment.

Referring to FIG. 17A, the electronic device 1101 according to an embodiment may display, on the first region 1161 of the display 1160, a first screen 1710 that is an execution screen of a map application. The electronic device 1101 according to an embodiment may display, on the first region 1161 of the display 1160, a map 1711 and an object 1712 representing the current location of the electronic device 101 on the map 1711.

Referring to FIG. 17B, when the display 1160 is extended in the first direction 1, the electronic device 1101 according to an embodiment may display a first UI 1720 representing first information on the second region 1162. For example, the first information may include time information of several locations. For example, the first UI 1720 may include an object 1721 representing the time at the current location of the electronic device 1101 and objects 1722 and 1723 representing the time at preset locations.

When the display 1160 is extended in the second direction 2, the electronic device 1101 according to an embodiment may display, on the third region 1163, a second UI 1730 representing second information that is related to the current location of the electronic device 101 and that differs from the first information. For example, the second information may include an object 1731 representing the temperature at the current location of the electronic device 1101 and an object 1732 representing a weather condition, and a weather map 1733. However, the disclosure is not limited by the above example. For example, the first information and the second information provided through the first UI 1720 and the second UI 1730 may be previously defined, and the pre-defined first information and the pre-defined second information may differ from the above example.

The description given with reference to FIG. 17A may correspond to operation 3102 of FIG. 31.

The description given with reference to FIG. 17B may correspond to operation 3106 of FIG. 31.

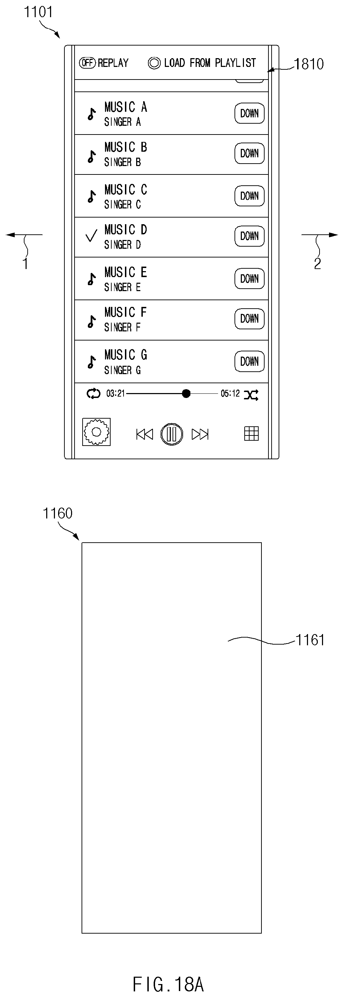

FIG. 18A illustrates the electronic device according to an embodiment.

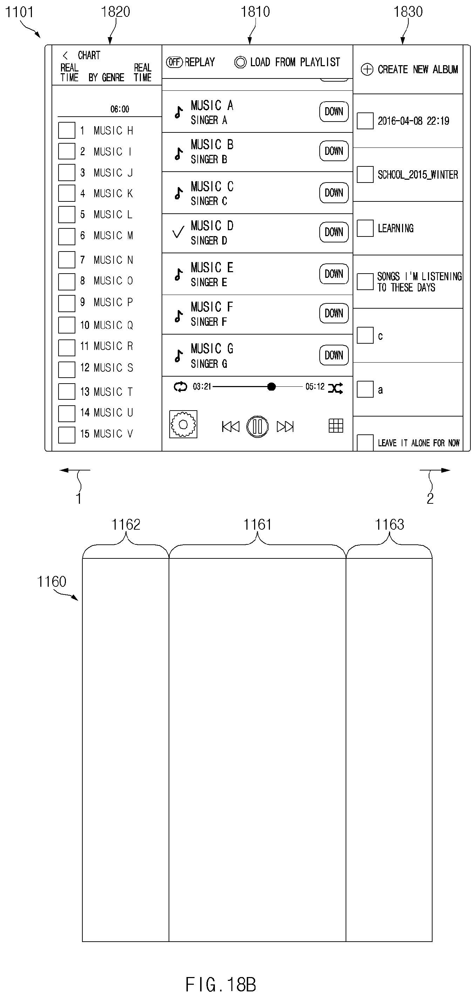

FIG. 18B illustrates the electronic device according to an embodiment.

Referring to FIG. 18A, the electronic device 1101 according to an embodiment may display, on the first region 1161 of the display 1160, a first screen 1810 that is an execution screen of a music application. In an embodiment, the first screen 1810 may include objects representing a playlist and objects (e.g., a progress bar) for controlling music being currently played.

Referring to FIG. 18B, when the display 1160 is extended in the first direction 1, the electronic device 1101 according to an embodiment may display a first UI 1820 representing first information on the second region 1162. In an embodiment, the first information may include a music chart provided from a server.

When the display 11620 is extended in the second direction 2, the electronic device 1101 according to an embodiment may display, on the third region 1163, a second UI 1830 representing second information different from the first information. For example, the second information may include a music list stored in the electronic device 1101. However, the disclosure is not limited by the above example. For example, the first information and the second information provided through the first UI 1820 and the second UI 1830 may be previously defined, and the pre-defined first information and the pre-defined second information may differ from the above example.

The description given with reference to FIG. 18A may correspond to operation 3102 of FIG. 31.

The description given with reference to FIG. 18B may correspond to operation 3106 of FIG. 31.

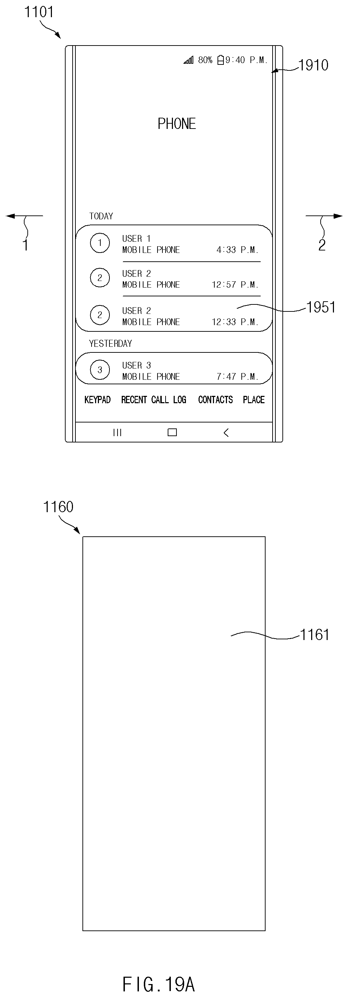

FIG. 19A illustrates the electronic device according to an embodiment.

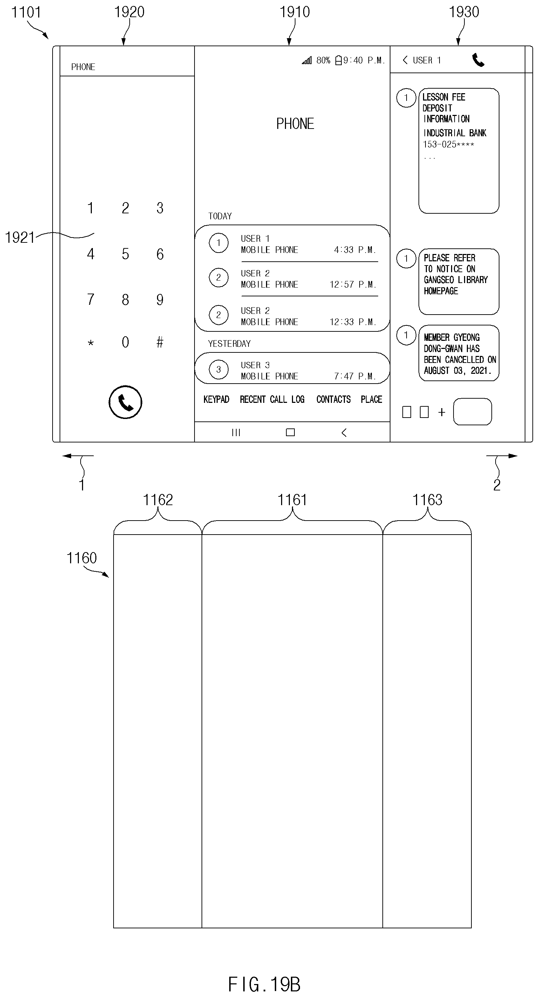

FIG. 19B illustrates the electronic device according to an embodiment.

Referring to FIG. 19A, the electronic device 1101 according to an embodiment may display, on the first region 1161 of the display 1160, a first screen 1910 that is an execution screen of a phone application. In an embodiment, the first screen 1910 may include a first UI 1951 representing a history of calls with other users.

Referring to FIG. 19B, when the display 1160 is extended in the first direction 1, the electronic device 1101 according to an embodiment may display, on the second region 1162 of the display 1160, a second UI 1920 including a keypad 1921 for entering a phone number.

In an embodiment, when the display 1160 is extended in the second direction 2, the electronic device 1101 may display an execution screen of an SMS application on the third region 1163 of the display 1160. In an embodiment, when the display 1160 is extended in the second direction 2, the electronic device 1101 may display a third UI 1920 representing an SMS history with a specific user (e.g., user 1) on the third region 1163.

The description given with reference to FIG. 19A may correspond to operation 3102 of FIG. 31.

The description given with reference to FIG. 19B may correspond to operation 3106 of FIG. 31.

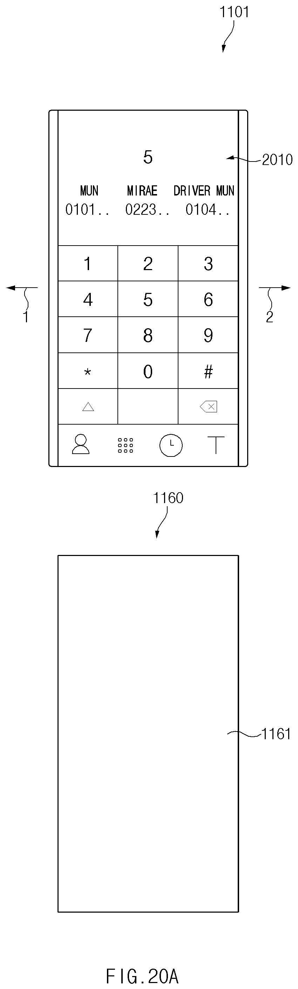

FIG. 20A illustrates the electronic device according to an embodiment.

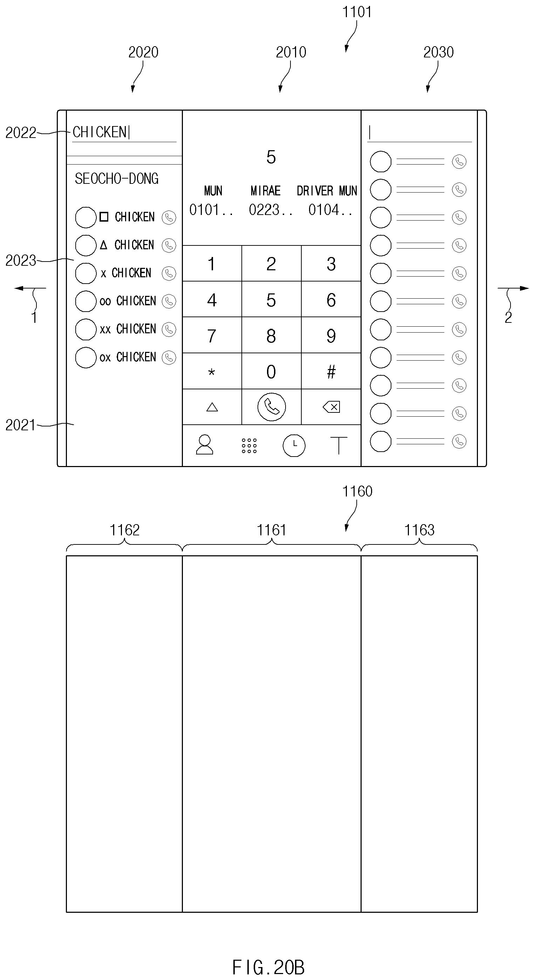

FIG. 20B illustrates the electronic device according to an embodiment.

Referring to FIG. 20A, the electronic device 1101 according to an embodiment may display, on the first region 1161 of the display 1160, a first screen 2010 that is an execution screen of a phone application. In an embodiment, the first screen 1910 may include a keypad for entering a phone number.

Referring to FIG. 20B, when the display 1160 is extended in the first direction 1, the electronic device 1101 according to an embodiment may display, on the second region 1162 of the display 1160, a first UI 2020 for searching for contacts stored in the electronic device 1101 (or, a server). In an embodiment, the first UI 2020 may include a keyboard 2021 for text input, a region 2022 on which text input through the keyboard 2021 is displayed, and a region 2023 on which found contacts are displayed.

In an embodiment, when the display 1160 is extended in the second direction 2, the electronic device 1101 may display a second UI 2030 representing a history of calls with other users on the third region 1163 of the display 1160.

The description given with reference to FIG. 20A may correspond to operation 3102 of FIG. 31.

The description given with reference to FIG. 20B may correspond to operation 3106 of FIG. 31.

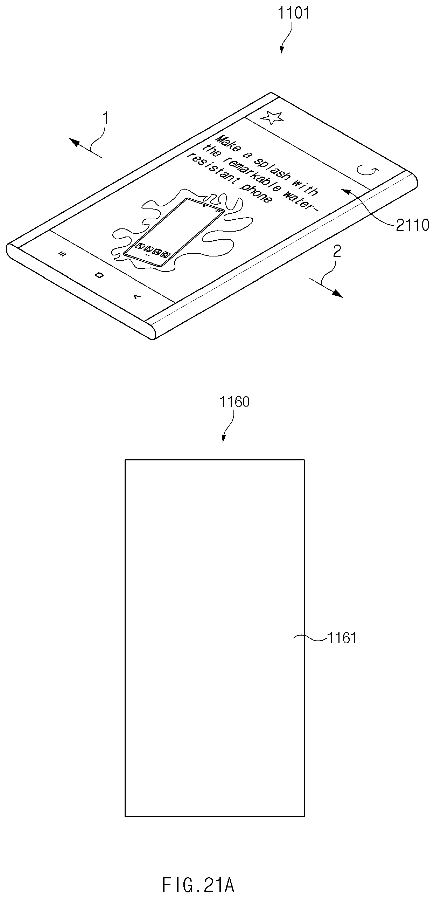

FIG. 21A illustrates the electronic device according to an embodiment.

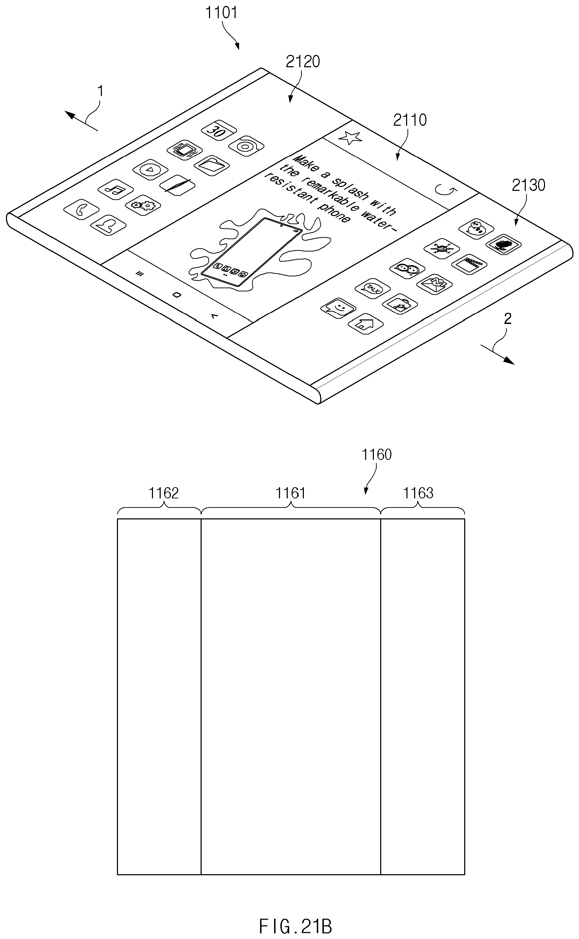

FIG. 21B illustrates the electronic device according to an embodiment.

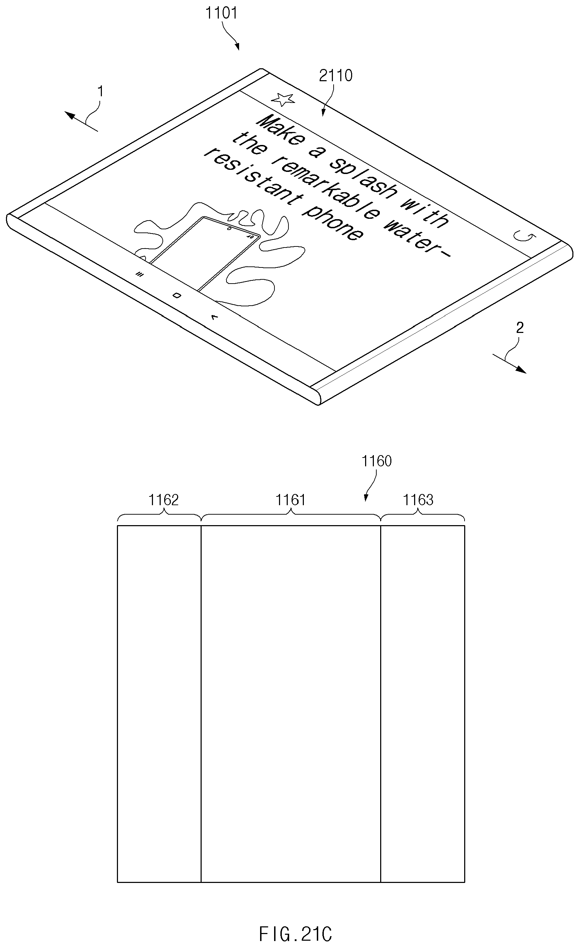

FIG. 21C illustrates the electronic device according to an embodiment.

Referring to FIG. 21A, the electronic device 1101 according to an embodiment may display, on the first region 1161 of the display 1160, a first screen 2110 that is an execution screen of a first application. The first application may include, for example, a web browsing application.

Referring to FIG. 21B, in an embodiment, when the display 1160 is extended in the first direction 1, the electronic device 1101 may maintain the first screen 2110 displayed on the first region 1161 and may display a second screen 2120 different from the first screen 2110 on the second region 1162. In an embodiment, the second screen 2120 may include, for example, a plurality of icons representing applications stored in the electronic device 1101.

In an embodiment, when the display 1160 is extended in the second direction 2 after extended in the first direction 1, the electronic device 1101 may maintain the first screen 2110 displayed on the first region 1161 and the second screen 2120 displayed on the second region 1162 and may display, on the third region 1163, a third screen 2130 different from the first screen 2110 and the second screen 2120. In an embodiment, the third screen 2130 may include a plurality of icons representing specified applications among the applications stored in the electronic device 1101. In an embodiment, a user of the electronic device 1101 may set the specified applications to be displayed on the third screen 2130 among the applications stored in the electronic device 1101.

Referring to FIG. 21C, when the display 1160 is simultaneously extended in the first direction 1 and the second direction 2, the electronic device 1101 according to an embodiment may magnify the first screen 2110 and may display the magnified first screen 2110 on the first region 1161, the second region 1162, and the third region 1163 of the display 1160.

In an embodiment, when the display 1160 is extended in the first direction 1 or the second direction 2 or is sequentially extended in the first direction 1 and the second direction 2, the electronic device 1101 may display the second screen 2120 and/or the third screen 2130 on the second region 1162 and/or the third region 1163 of the display 1160. In an embodiment, when the display 1160 is simultaneously extended in the first direction 1 and the second direction 2, the electronic device 1101 may magnify the first screen 2110 and may display the magnified first screen 2110 on the first region 1161, the second region 1162, and the third region 1163 of the display 1160.

The description given with reference to FIG. 21A may correspond to operation 3102 of FIG. 31.

The descriptions given with reference to FIGS. 21B and 21C may correspond to operation 3106 of FIG. 31.

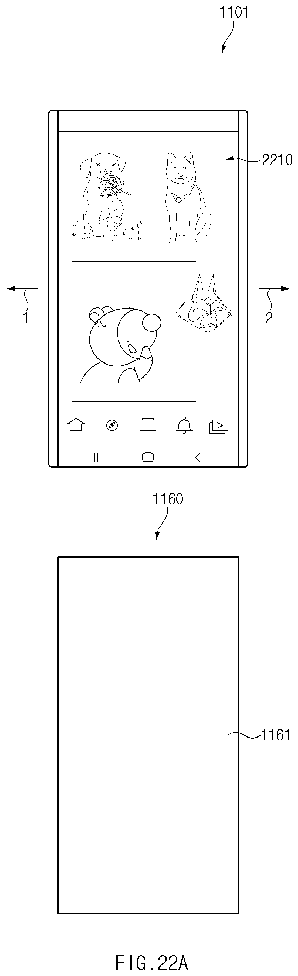

FIG. 22A illustrates the electronic device according to an embodiment.

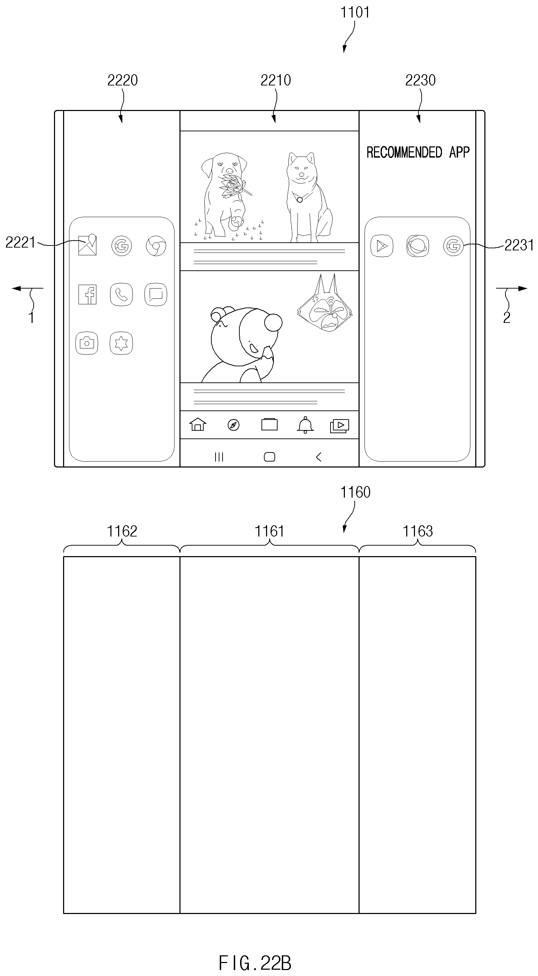

FIG. 22B illustrates the electronic device according to an embodiment.

Referring to FIG. 22A, the electronic device 1101 according to an embodiment may display, on the first region 1161 of the display 1160, a first screen 2210 that is an execution screen of a first application.

Referring to FIG. 22B, when the display 1160 is extended in the first direction 1, the electronic device 1101 according to an embodiment may display a second screen 2220 different from the first screen 2210 on the second region 1162 of the display 1160. In an embodiment, the second screen 2220 may include at least one first icon 2221 representing at least one first specified application among applications stored in the electronic device 1101. In an embodiment, the at least one first specified application may be an application that corresponds to the same category (e.g., game, video player, or the like) as the first application among the applications stored in the electronic device 1101.

In an embodiment, when the display 1160 is extended in the second direction 2, the electronic device 1101 may display a third screen 2230 different from the first screen 2210 on the third region 1163 of the display 1160. In an embodiment, the third screen 2230 may include at least one second icon 2231 representing at least one second specified application among the applications stored in the electronic device 1101. In an embodiment, the at least one second specified application may be determined depending on the number of times that the applications stored in the electronic device 1101 are executed together with the first application. For example, the at least one second specified application may include an application most frequently executed together with the first application among the applications stored in the electronic device 1101.

The description given with reference to FIG. 22A may correspond to operation 3102 of FIG. 31.

The description given with reference to FIG. 22B may correspond to operation 3106 of FIG. 31.

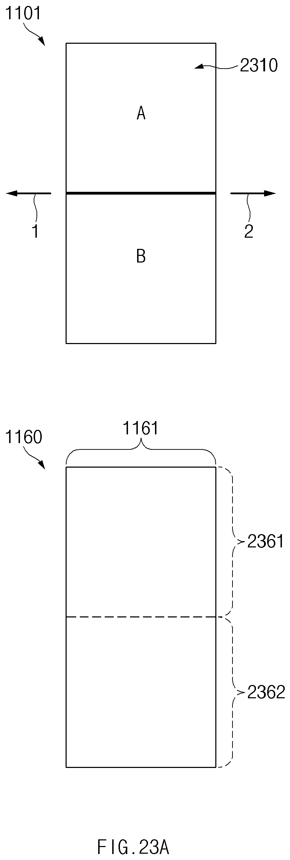

FIG. 23A illustrates the electronic device according to an embodiment.

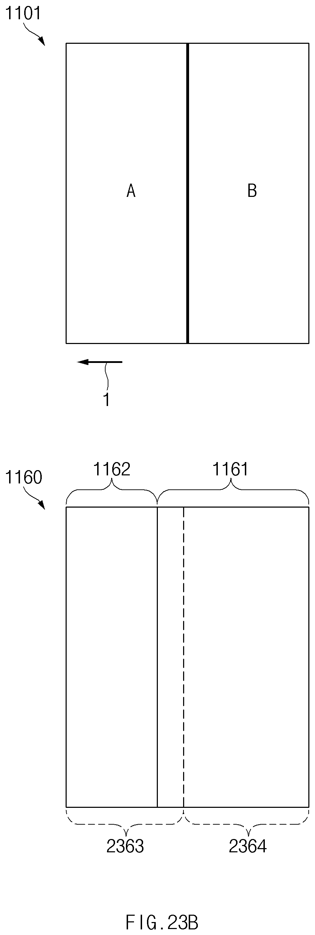

FIG. 23B illustrates the electronic device according to an embodiment.

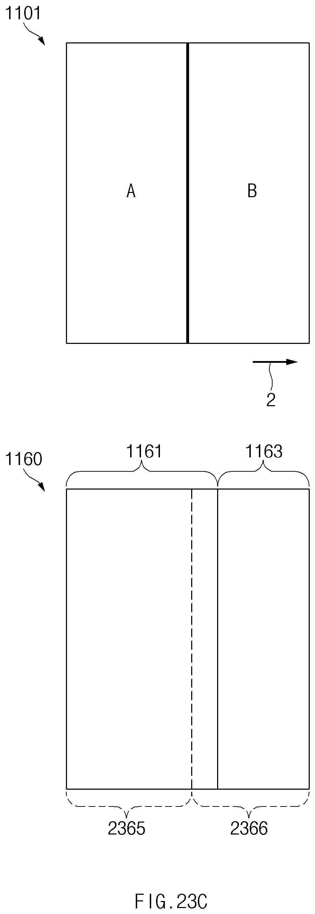

FIG. 23C illustrates the electronic device according to an embodiment.

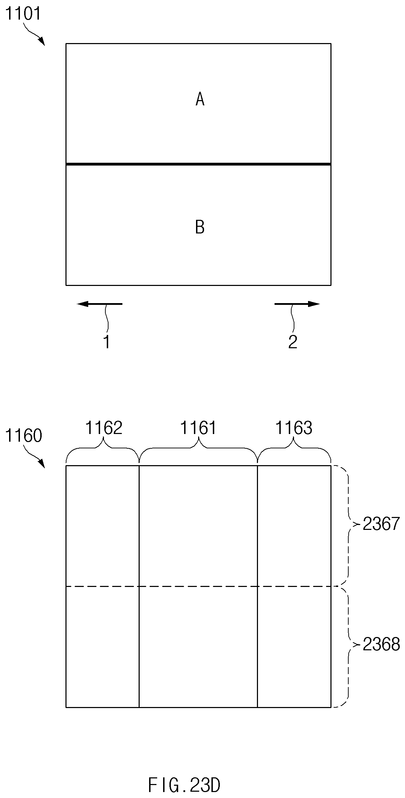

FIG. 23D illustrates the electronic device according to an embodiment.

Referring to FIG. 23A, the electronic device 1101 according to an embodiment may display an execution screen A of a first application and an execution screen B of a second application on a first sub-region 2361 and a second sub-region 2362 of the first region 1161, respectively, as a first screen 2310. In an embodiment, the first sub-region 2361 and the second sub-region 2362 may be regions obtained by dividing the first region 1161 of the display 1160 into upper and lower portions at a first specified ratio. The first specified ratio may be, for example, 1: 1, but is not limited thereto. In an embodiment, based on FIG. 23A, the second sub-region 2362 may be located under the first sub-region 2361.

Referring to FIG. 23B, when the display 1160 is extended in the first direction 1, the electronic device 1101 according to an embodiment may display the execution screen A of the first application on a third sub-region 2363 and may display the execution screen B of the second application on a fourth sub-region 2364. In an embodiment, the third sub-region 2363 and the third sub-region 2364 may be regions obtained by dividing the first and second regions 1161 and 1162 into left and right portions at a second specified ratio in the state in which the display 1160 is extended in the first direction 1. The second specified ratio may be, for example, 1: 1, but is not limited thereto. In an embodiment, based on FIG. 23B, the fourth sub-region 2364 may be located on the right side of the third sub-region 2363.

Referring to FIG. 23C, when the display 1160 is extended in the second direction 2, the electronic device 1101 according to an embodiment may display the execution screen A of the first application on a fifth sub-region 2365 and may display the execution screen B of the second application on a sixth sub-region 2366. In an embodiment, the fifth sub-region 2365 and the sixth sub-region 2366 may be regions obtained by dividing the first and third regions 1161 and 1163 into left and right portions at a third specified ratio in the state in which the display 1160 is extended in the second direction 2. The third specified ratio may be, for example, 1:1, but is not limited thereto. In an embodiment, based on FIG. 23C, the sixth sub-region 2366 may be located on the right side of the fifth sub-region 2365.

Referring to FIG. 23D, when the display 1160 is extended in the first direction 1 and the second direction 2, the electronic device 1101 according to an embodiment may display the execution screen A of the first application on a seventh sub-region 2367 and may display the execution screen B of the second application on an eighth sub-region 2368. In an embodiment, the seventh sub-region 2367 and the eighth sub-region 2368 may be regions obtained by dividing the first to third regions 1161 to 1163 of the display 1160 into upper and lower portions at the first specified ratio. In an embodiment, based on FIG. 23D, the eighth sub-region 2368 may be located under the seventh sub-region 2367.

The description given with reference to FIG. 23A may correspond to operation 3102 of FIG. 31.

The descriptions given with reference to FIGS. 23B, 23C, and 23D may correspond to operation 3106 of FIG. 31.

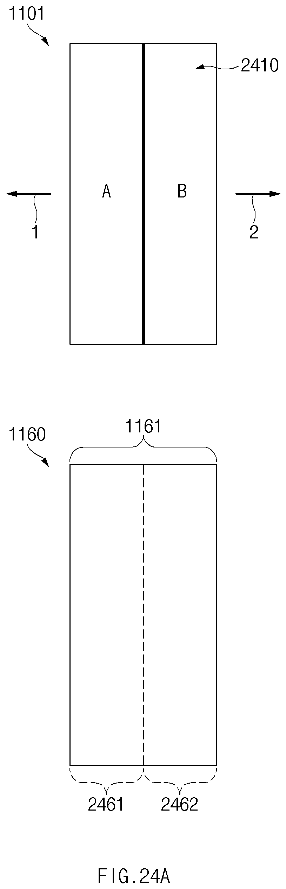

FIG. 24A illustrates the electronic device according to an embodiment.

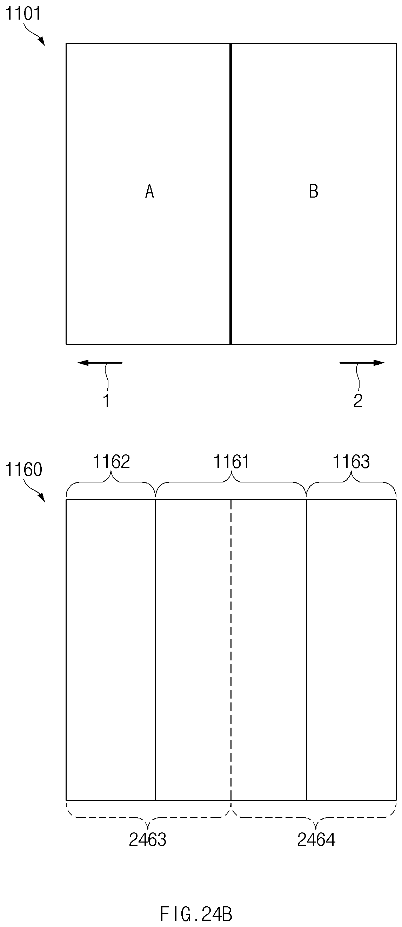

FIG. 24B illustrates the electronic device according to an embodiment.

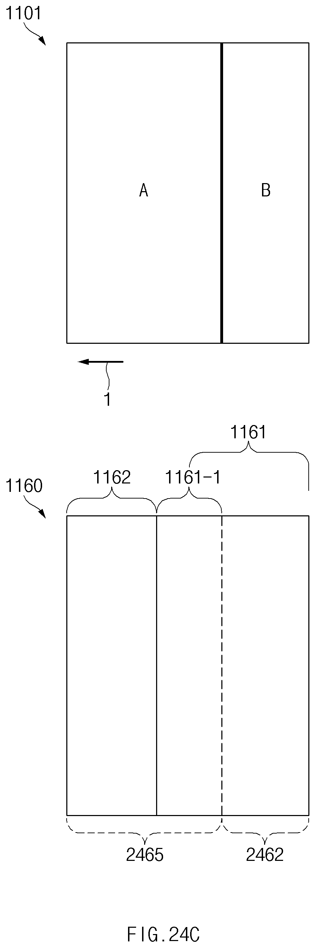

FIG. 24C illustrates the electronic device according to an embodiment.

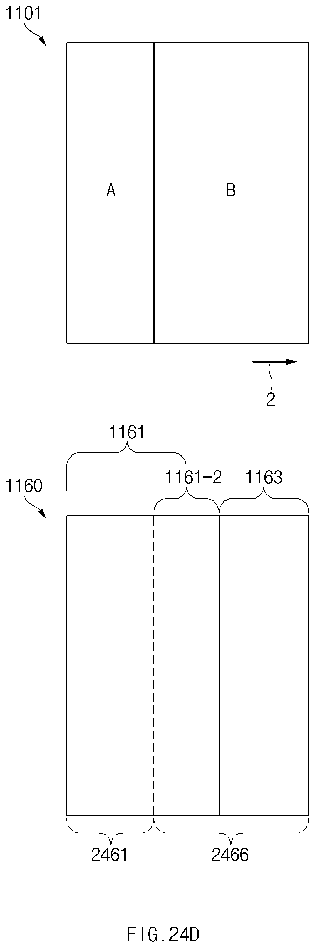

FIG. 24D illustrates the electronic device according to an embodiment.

Referring to FIG. 24A, the electronic device 1101 according to an embodiment may display an execution screen A of a first application and an execution screen B of a second application on a first sub-region 2461 and a second sub-region 2462, respectively, as a first screen 2410. In an embodiment, the first sub-region 2461 and the second sub-region 2462 may be regions obtained by dividing the first region 1161 of the display 1160 into left and right portions at a fourth specified ratio. The fourth specified ratio may be, for example, 1: 1, but is not limited thereto. In an embodiment, based on FIG. 24A, the second sub-region 2462 may be located on the right side of the first sub-region 2461.

Referring to FIG. 24B, when the display 1160 is extended in the first direction 1 and the second direction 2, the electronic device 1101 according to an embodiment may magnify the execution screen A of the first application displayed on the first sub-region 2461 and display the magnified execution screen A on a third sub-region 2463 and may magnify the execution screen B of the second application displayed on the second sub-region 2462 and display the magnified execution screen B on a fourth sub-region 2464. In an embodiment, the third sub-region 2463 and the fourth sub-region 2464 may be regions obtained by dividing the first to third regions 161 to 163 of the display 1160 into left and right portions at the fourth specified ratio. In an embodiment, based on FIG. 24B, the fourth sub-region 2464 may be located on the right side of the third sub-region 2363.

Referring to FIG. 24C, in an embodiment, when the display 1160 is extended in the first direction 1, the electronic device 1101 may maintain the execution screen B of the second application displayed on the second sub-region 2462 and may magnify the execution screen A of the first application displayed on the first sub-region 2461 and display the magnified execution screen A on a first remaining region 2465. In an embodiment, the first remaining region 2465 may include the second region 1162 and a partial region 1161-1 other than the second sub-region 2462 in the first region 1161.

Referring to FIG. 24D, in an embodiment, when the display 1160 is extended in the second direction 2, the electronic device 1101 may maintain the execution screen A of the first application displayed on the first sub-region 2461 and may magnify the execution screen A of the first application displayed on the second sub-region 2462 and display the magnified execution screen A on a second remaining region 2466. In an embodiment, the second remaining region 2466 may include the second region 1162 and a partial region 1161-2 other than the first sub-region 2461 in the first region 1161.

The description given with reference to FIG. 24A may correspond to operation 3102 of FIG. 31.

The descriptions given with reference to FIGS. 24B, 24C, and 24D may correspond to operation 3106 of FIG. 31.

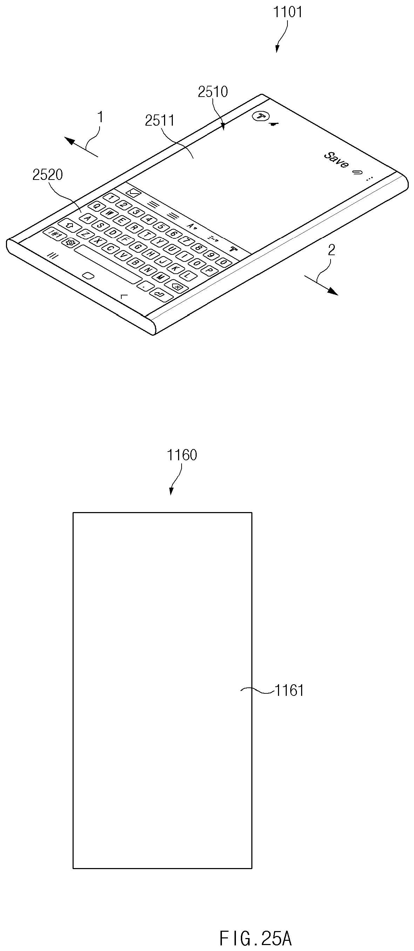

FIG. 25A illustrates the electronic device according to an embodiment.

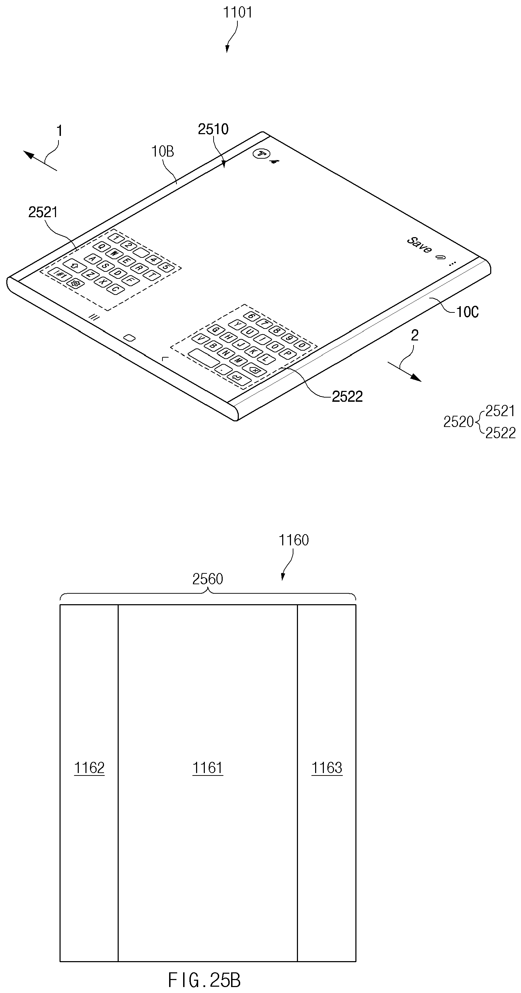

FIG. 25B illustrates the electronic device in which the display is extended by a first distance according to an embodiment.

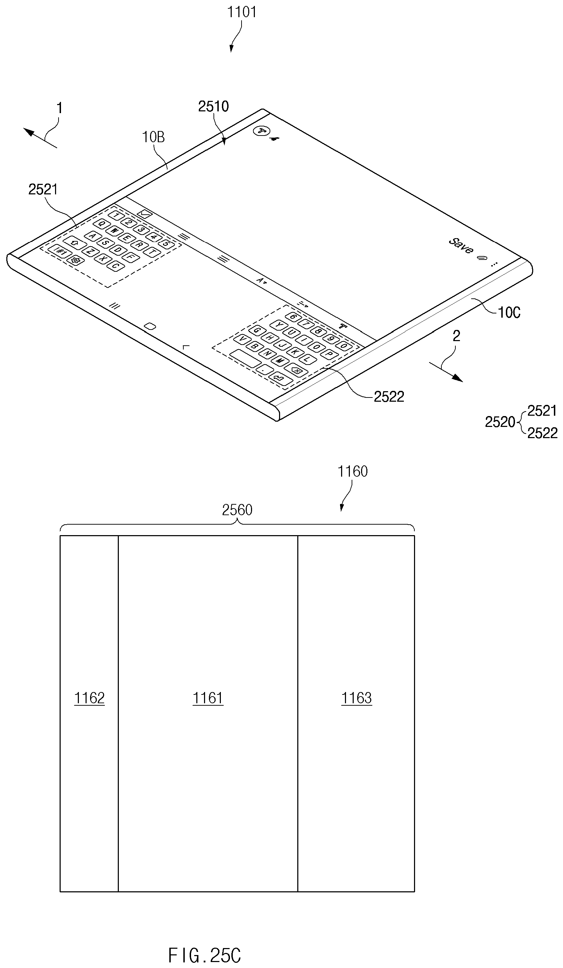

FIG. 25C illustrates the electronic device in which the display is extended by a second distance greater than the first distance according to an embodiment.

Referring to FIG. 25A, the electronic device 1101 according to an embodiment may display a first screen 2510 on the first region 1161 of the display 1160 and may display a keyboard 2520 including a plurality of keys such that the keyboard 2520 overlaps the first screen 2510. In an embodiment, the first screen 2510 may include a text entry area 2511, and text input through the keyboard 2520 may be displayed on the text entry area 2511.

Referring to FIGS. 25B and 25C, in an embodiment, when the display 160 is extended in the first direction 1 and/or the second direction 2, the electronic device 1101 may magnify the first screen 2510 and may display the magnified first screen 2510 on an extended display region 2560. In an embodiment, when the distance by which the display 1160 is extended exceeds a threshold value, the electronic device 1101 may display a first portion 2521 of the keyboard 2520 such that the first portion 2521 is aligned in the first direction 1 in the extended display region 1170 of the display 1160 and may display a second portion 2522 of the keyboard 2520 such that the second portion 2522 is aligned in the second direction 2 in the extended display region 1170 of the display 1160. For example, when the distance by which the display 1160 is extended exceeds the threshold value, the electronic device 1101 may display the first portion 2521 of the keyboard 2520 in a position adjacent to a first side surface 10B in the extended display region 2560 of the display 1160 and may display the second portion 2522 of the keyboard 2520 in a position adjacent to a second side surface 10C in the extended display region 2560 of the display 1160. In an embodiment, the first portion 2521 of the keyboard 2520 may include a first group of keys among the plurality of keys, and the second portion 2522 may include a second group of keys among the plurality of keys.

In an embodiment, as the distance by which the display 1160 of the electronic device 1101 is extended increases, the distance between the first portion 2521 aligned in the first direction 1 and the second portion 2522 aligned in the second direction 2 may increase.

The description given with reference to FIG. 25A may correspond to operation 3102 of FIG. 31.

The descriptions given with reference to FIGS. 25B and 25C may correspond to operation 3106 of FIG. 31.

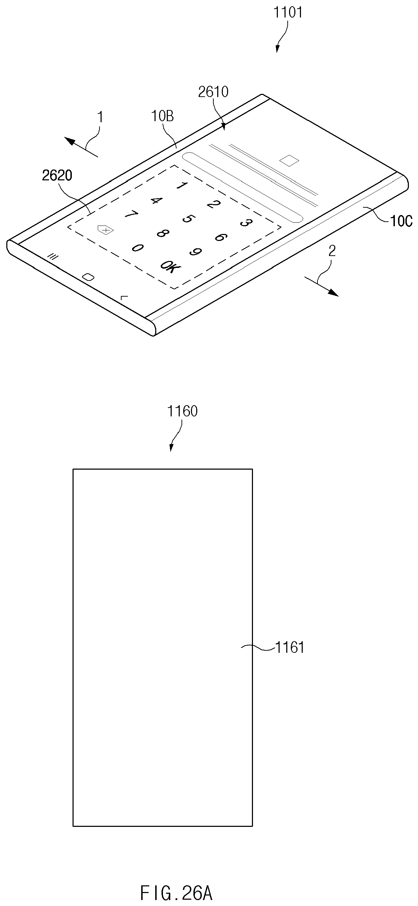

FIG. 26A illustrates the electronic device according to an embodiment.

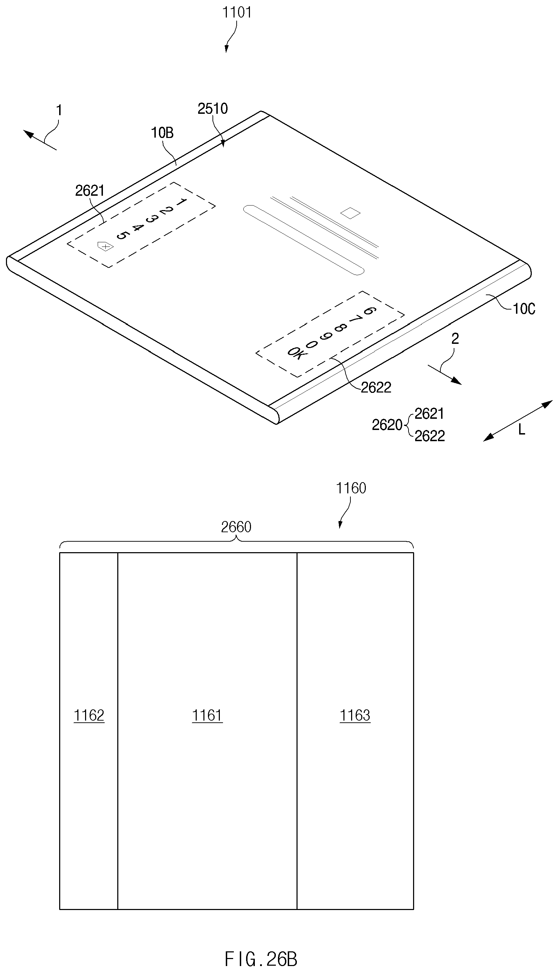

FIG. 26B illustrates the electronic device according to an embodiment.

Referring to FIG. 26A, the electronic device 1101 according to an embodiment may display a first screen 2610 on the first region 1161 of the display 1160 and may display a keyboard 2620 including a plurality of keys on the first region 1161 such that the keyboard 2620 overlaps the first screen 2610. In an embodiment, the first screen 2610 may be a lock screen of the electronic device 1101.

Referring to FIG. 26B, when the display 1160 is extended in the first direction 1 and/or the second direction 2, the electronic device 1101 according to an embodiment may display the first screen 2610 on an extended display region 2660 of the display 1160. In an embodiment, when the distance by which the display 1160 is extended exceeds a threshold value, the electronic device 1101 may display a first group of keys 2621 among the plurality of keys such that each of the first group of keys 2621 is aligned in the first direction 1 in the extended display region 2660 of the display 160 and may display a second group of keys 2622 among the plurality of keys such that each of the second group of keys 2622 is aligned in the second direction 2 in the extended display region 2660 of the display 160. For example, when the distance by which the display 1160 is extended exceeds the threshold value, the electronic device 110 may arrange the first group of keys 2621 in a lengthwise direction L of the display 1160 and may display the arranged first group of keys 2621 in a position adjacent to the first side surface 10B in the extended display region 2660. For example, when the distance by which the display 1160 is extended exceeds the threshold value, the electronic device 110 may arrange the second group of keys 2622 in the lengthwise direction L of the display 1160 and may display the arranged second group of keys 2622 in a position adjacent to the second side surface 10C in the extended display region 2660.

The description given with reference to FIG. 26A may correspond to operation 3102 of FIG. 31.

The description given with reference to FIG. 26B may correspond to operation 3106 of FIG. 31.

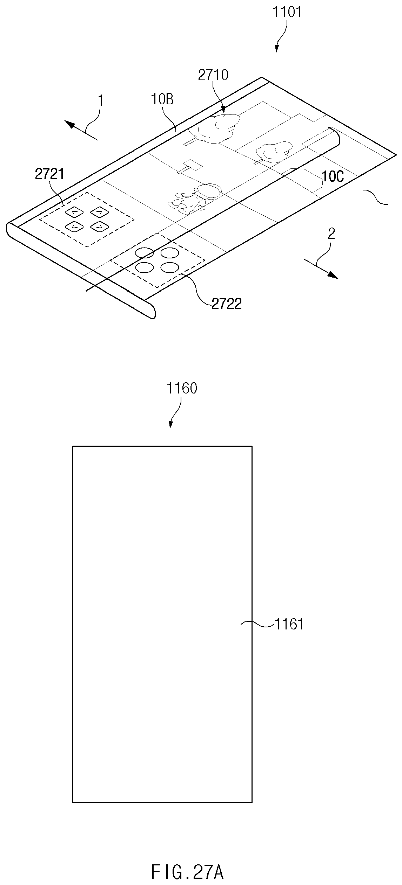

FIG. 27A illustrates the electronic device according to an embodiment.

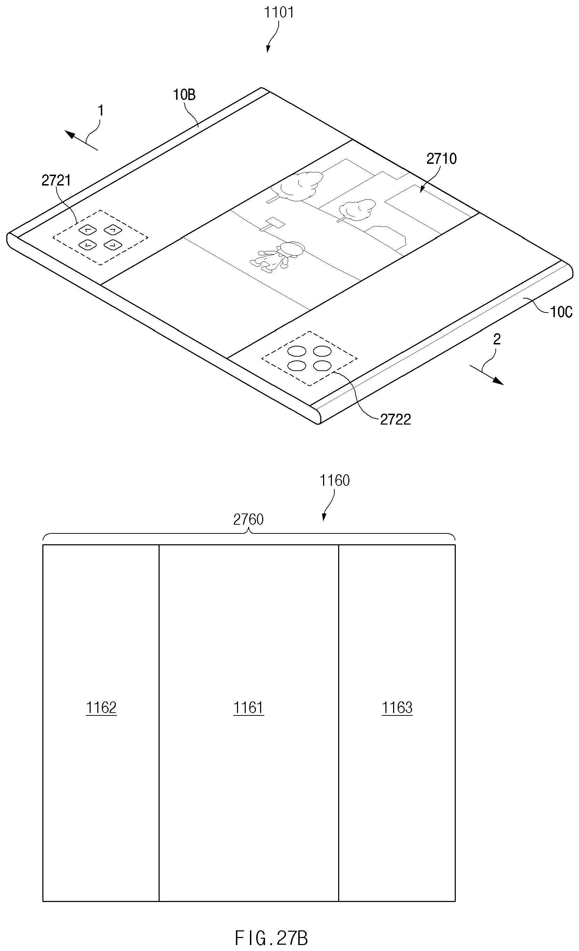

FIG. 27B illustrates the electronic device according to an embodiment.

Referring to FIG. 27A, the electronic device 1101 according to an embodiment may display a first screen 2710 on the first region 1161 of the display 1160 and may display a first keyboard 2721 and a second keyboard 2722 on the first region 1161 such that the first keyboard 2721 and the second keyboard 2722 overlap the first screen 2710. In an embodiment, the first keyboard 2721 may be displayed in a position adjacent to the first side surface 10B of the electronic device 1101, and the second keyboard 2722 may be displayed in a position adjacent to the second side surface 10C of the electronic device 1101. In an embodiment, the first screen 2710 may be an execution screen of a game application.

Referring to FIG. 27B, when the display 1160 is extended in the first direction 1 and/or the second direction 2, the electronic device 1101 according to an embodiment may display the first screen 2710 on an extended display region 2760 of the display 1160. For example, as illustrated, the electronic device 1101 may display, on the extended display region 2560, the first screen 2710 displayed on the first region 1161 of the display 1160 in a state in which the size and/or resolution is maintained. In another example, unlike that illustrated in the drawings, the electronic device 1101 may magnify the first screen 2710 and may display the magnified first screen 2710 on the extended display region 2760.

In an embodiment, when the distance by which the display 1160 is extended exceeds a threshold value, the electronic device 1101 may display the first keyboard 2721 such that the first keyboard 2721 is aligned in the first direction 1 in the extended display region 2760 of the display 160 and may display the second keyboard 2722 such that the second keyboard 2722 is aligned in the second direction 2 in the extended display region 2760 of the display 160. For example, when the distance by which the display 1160 is extended exceeds the threshold value, the electronic device 1101 may display the first keyboard 2721 in a position adjacent to the first side surface 10B in the extended display region 2760. For example, when the distance by which the display 1160 is extended exceeds the threshold value, the electronic device 1101 may display the second keyboard 2722 in a position adjacent to the second side surface 10C in the extended display region 2760.

The description given with reference to FIG. 27A may correspond to operation 3102 of FIG. 31.

The description given with reference to FIG. 27B may correspond to operation 3106 of FIG. 31.

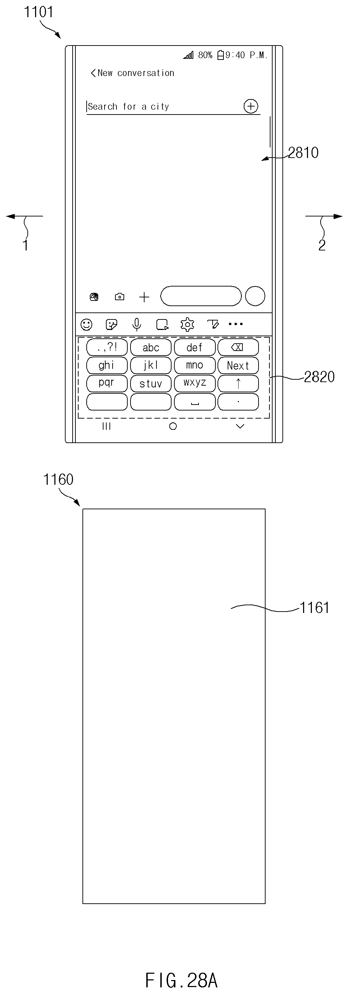

FIG. 28A illustrates the electronic device according to an embodiment.

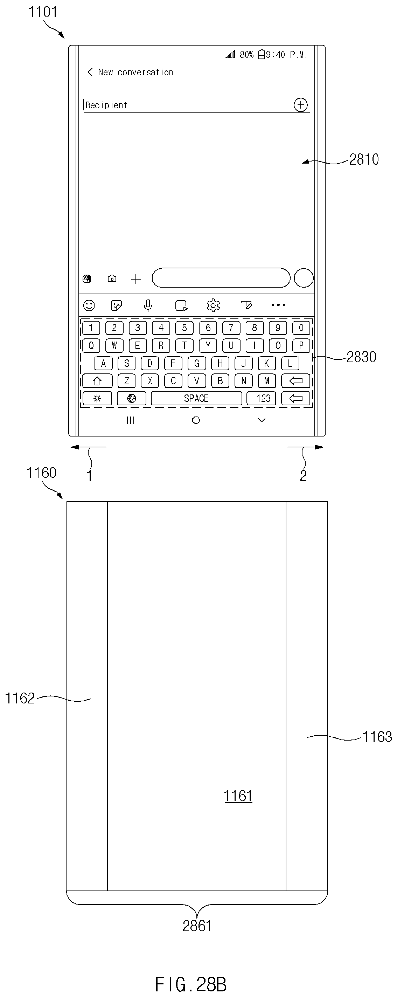

FIG. 28B illustrates the electronic device according to an embodiment.

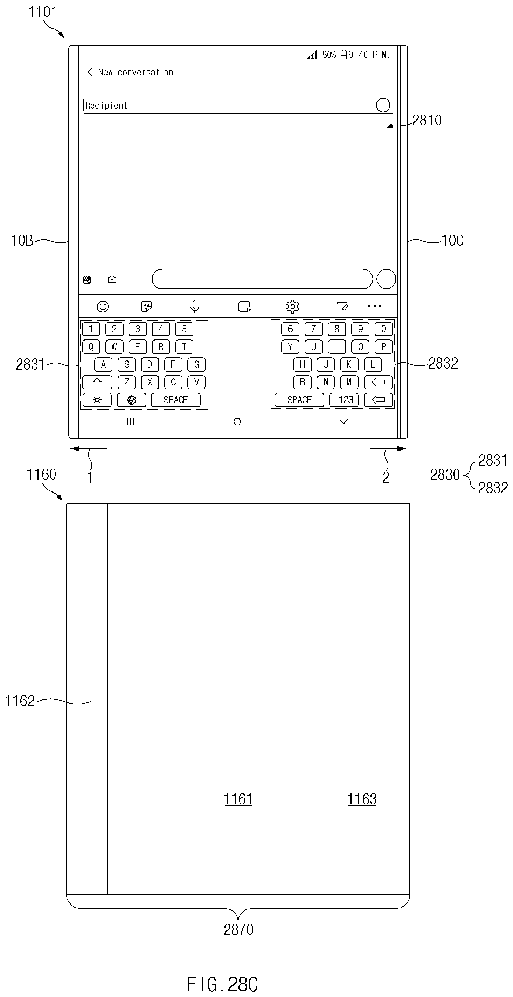

FIG. 28C illustrates the electronic device according to an embodiment.

Referring to FIG. 28A, the electronic device 1101 according to an embodiment may display a first screen 2810 on the first region 1161 of the display 1160. In an embodiment, the electronic device 1101 may display a first keyboard 2820 including a first number of keys on the first region 1161 of the display 1160 such that the first keyboard 2820 overlaps the first screen 2810. In an embodiment, the first keyboard 2820 may be, for example, a keyboard having a 4x4 array, but is not limited thereto.

Referring to FIG. 28B, when the display 1160 is extended in the first direction 1 and/or the second direction 2, the electronic device 1101 according to an embodiment may magnify the first screen 2810 and may display the magnified first screen 2810 on a first extended display region 2861 of the display 1160. When the distance by which the display 1160 is extended exceeds a first threshold value, the electronic device 1101 according to an embodiment may change the keyboard displayed on the display 1160. For example, when the distance by which the display 1160 is extended exceeds the first threshold value, the electronic device 1101 may replace the first keyboard 2820 with a second keyboard 2830 and may display the second keyboard 2830 on the first extended display region 2861 of the display 1160. In an embodiment, the electronic device 1101 may display the second keyboard 2830 such that the second keyboard 2830 overlaps the first screen 2810. In an embodiment, the second keyboard 2830 may include a second number of keys being more than the first number of keys. For example, the second keyboard 2830 may include a qwerty keyboard including more keys than the first keyboard 2820, but is not limited thereto.

Referring to FIG. 28C, when the distance by which the display 1160 is extended exceeds a second threshold value greater than the first threshold value, the electronic device 1101 according to an embodiment may display a first portion 2831 of the second keyboard 2830 such that the first portion 2831 is aligned in the first direction 1 in a second extended display region 2870 of the display 1160 and may display a second portion 2832 of the second keyboard 2830 such that the second portion 2832 is aligned in the second direction 2 in the second extended display region 2870 of the display 1160. For example, when the distance by which the display 1160 is extended exceeds the second threshold value, the electronic device 1101 may display the first portion 2831 of the keyboard 2830 in a position adjacent to the first side surface 10B in the second extended display region 2870 of the display 1160 and may display the second portion 2832 of the second keyboard 2830 in a position adjacent to the second side surface 10C in the second extended display region 2870 of the display 1160. In an embodiment, the first portion 2831 of the second keyboard 2831 may include a first group of keys among the plurality of keys, and the second portion 2832 may include a second group of keys among the plurality of keys. In an embodiment, as the distance by which the display 1160 of the electronic device 1101 is extended increases, the distance between the first portion 2831 of the second keyboard 2830 aligned in the first direction 1 and the second portion 2832 of the second keyboard 2830 aligned in the second direction 2 may increase.

The description given with reference to FIG. 28A may correspond to operation 3102 of FIG. 31.

The descriptions given with reference to FIGS. 28B and 28C may correspond to operation 3106 of FIG. 31.

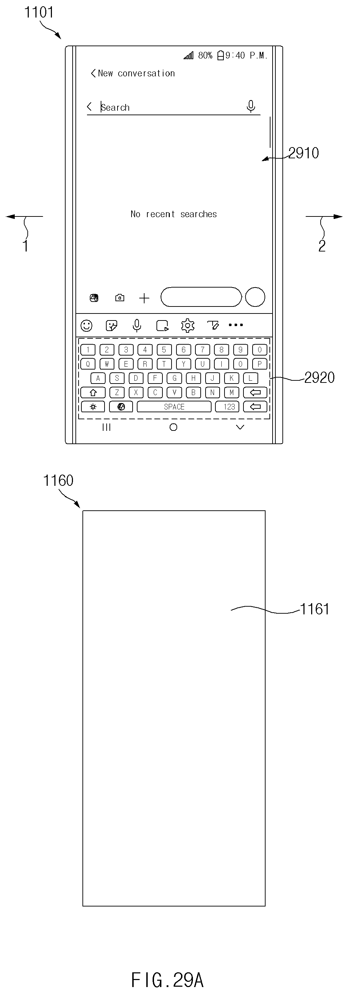

FIG. 29A illustrates the electronic device according to an embodiment.

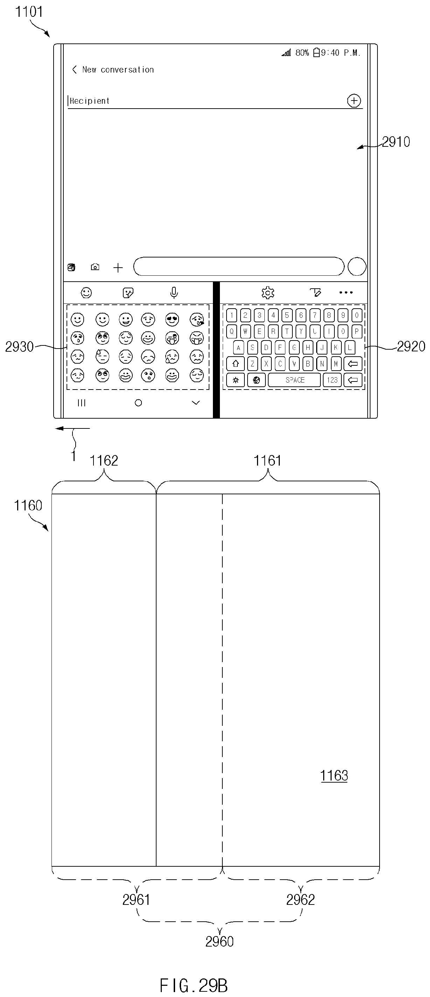

FIG. 29B illustrates the electronic device according to an embodiment.

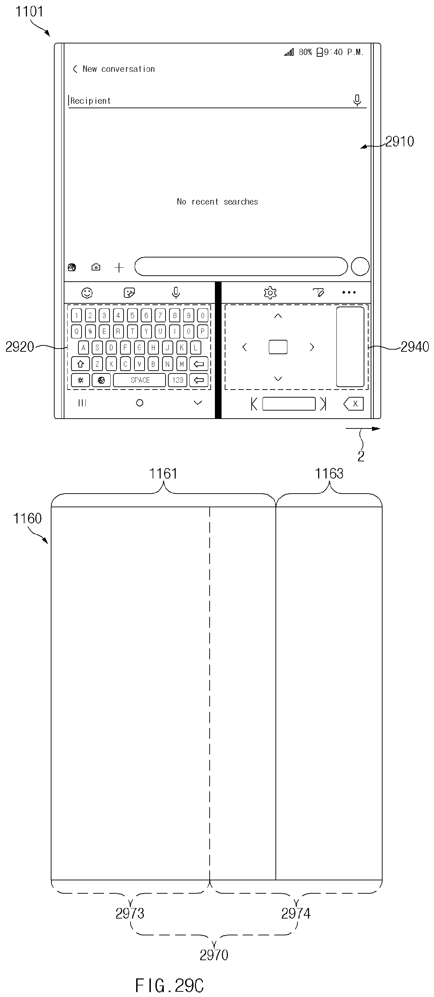

FIG. 29C illustrates the electronic device according to an embodiment.

Referring to FIG. 29A, the electronic device 1101 according to an embodiment may display a first screen 2910 on the first region 1161 of the display 1160 and may display a first keyboard 2920 such that the first keyboard 2920 overlaps the first screen 2910 In an embodiment, the first keyboard 2920 may include a plurality of keys. For example, the plurality of keys of the first keyboard 2920 may be arranged in a qwerty format, but is not limited thereto.

Referring to FIG. 29B, in an embodiment, when the display 1160 is extended in the first direction 1, the display 1160 may include a first extended region 2960. In an embodiment, the first extended region 2960 may include the first region 1161 and the second region 1162. In an embodiment, the first extended region 2960 may include a first sub-region 2961 located on the left side (e.g., in the first direction 1) with respect to the center of the first extended region 2960 and a second sub-region 2962 located on the right side of the first sub-region 2961.

In an embodiment, when the display 1160 is extended in the first direction 1, the electronic device 1101 may display the first keyboard 2920 on the second sub-region 2962 of the first extended region 2960 and may display a second keyboard 2930 different from the first keyboard 2920 on the first sub-region 2961. The second keyboard 2930 may include, for example, a plurality of keys for inputting emoticons.

Referring to FIG. 29C, in an embodiment, when the display 1160 is extended in the second direction 2, the display 1160 may include a second extended region 2970. In an embodiment, the second extended region 2970 may include the first region 1161 and the third region 1163. In an embodiment, the second extended region 2970 may include a third sub-region 2973 located on the left side with respect to the center of the second extended region 2970 and a fourth sub-region 2974 located on the right side of the third sub-region 2973.

In an embodiment, when the display 1160 is extended in the second direction 2, the electronic device 1101 may display the first keyboard 2920 on the third sub-region 2973 and may display a third keyboard 2940 different from the first keyboard 2920 on the fourth sub-region 2974. The third keyboard 2940 may include, for example, keys for moving a cursor indicating the position of text input through the first keyboard 2940 and keys for performing editing functions (e.g., copy, cut, and paste) of input text.

The description given with reference to FIG. 29A may correspond to operation 3102 of FIG. 31.

The descriptions given with reference to FIGS. 29B and 29C may correspond to operation 3106 of FIG. 31.

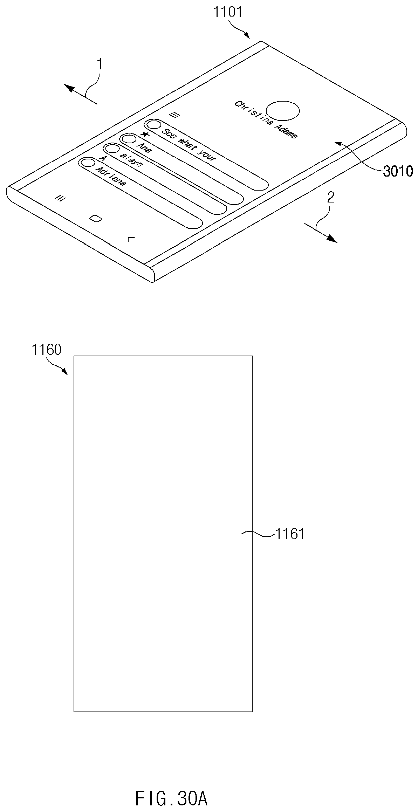

FIG. 30A illustrates the electronic device according to an embodiment.

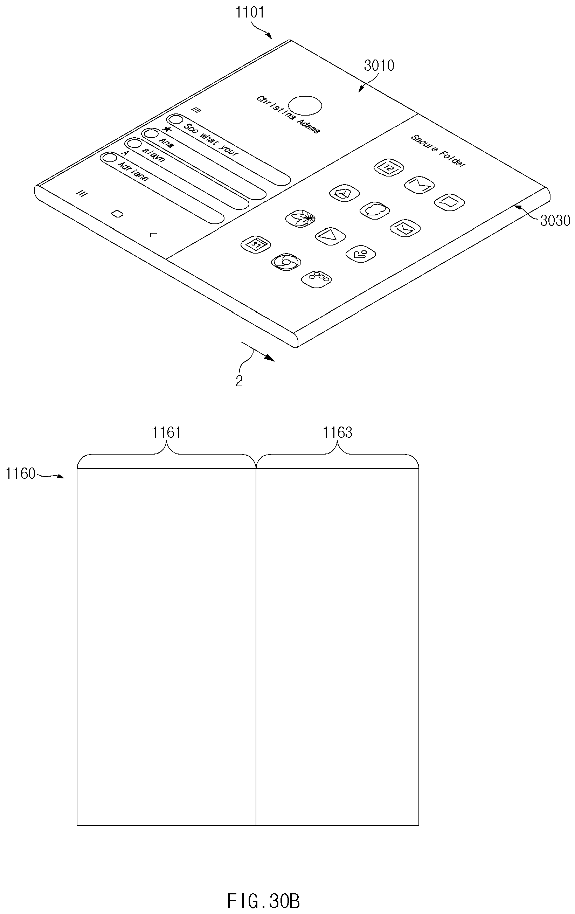

FIG. 30B illustrates the electronic device according to an embodiment.

Referring to FIG. 30A, the electronic device 1101 according to an embodiment may display a first screen 3010 on the first region 1161 of the display 1160.

Referring to FIG. 30B, the electronic device 1101 according to an embodiment may obtain biometric information (e.g., fingerprint information) of the user 1100 using the sensor module 1176. In an embodiment, the electronic device 1101 may authenticate the user 1100, based on the obtained biometric information. In an embodiment, when the user 1100 is authenticated and the display 1160 is extended in the second direction 2, the electronic device 1101 may display a UI 3030 representing security information on the third region 1163 of the display 1160. For example, the UI 3030 may be an execution screen of a security application that is not accessed without an authentication procedure.

The description given with reference to FIG. 30A may correspond to operation 3102 of FIG. 31.

The description given with reference to FIG. 30B may correspond to operation 3106 of FIG. 31.

FIG. 31 is a flowchart illustrating operations performed by the electronic device according to an embodiment.

Referring to FIG. 31, in operation 3102, the electronic device 1101 according to an embodiment may display a first screen on the first region 1161 of the display 1160.

In operation 3104, the electronic device 1101 according to an embodiment may determine a direction in which the display 1160 is extended and a distance by which the display 1160 is extended, based on a value obtained by the sensor module 1176.

In operation 3106, the electronic device 1101 according to an embodiment may display a screen different from the first screen on the second region 1162 and/or the third region 1163 of the display 1160, based on the determination.

An electronic device according to various embodiments (e.g., the electronic device 101 of FIG. 1) may include a first housing (the first housing 110 of FIG. 1), a second housing (e.g., the second housing 120 of FIG. 1) at least partially disposed in the first housing and coupled to the first housing so as to be movable in a first direction (e.g., the first direction 1 of FIG. 1), a third housing (e.g., the third housing 130 of FIG. 1) at least partially disposed in the first housing and coupled to the first housing so as to be movable in a second direction (e.g., the second direction 2 of FIG. 1), a flexible display (e.g., the display 160 of FIG. 1) that is extendable in the first direction and/or the second direction as the second housing and the third housing move and that includes a first region (e.g., the first region 161 of FIG. 1) that is disposed in the first housing and that forms a first surface (e.g., the front surface 10A of FIG. 1) exposed outside the electronic device, a second region (e.g., the second region 162 of FIG. 1) that extends from the first region and that is at least partially located in the second housing or forms the first surface together with the first region as the second housing moves, and a third region (e.g., the third region 163 of FIG. 1) that extends from the first region and that is at least partially located in the third housing or forms the first surface together with the first region as the third housing moves, at least one sensor (e.g., the sensor module 1176 of FIG. 11), and at least one processor (e.g., the processor 1120 of FIG. 11) operationally connected with the at least one sensor. The at least one processor may display a first screen on the first region (e.g., operation 3102 of FIG. 31), may determine a direction in which the flexible display is extended and a distance by which the flexible display is extended, based on a value obtained by the at least one sensor (e.g., operation 3104 of FIG. 31), and may display a screen different from the first screen on the second region and/or the third region, based on the determination (e.g., operation 3106 of FIG. 31).

In an embodiment, the electronic device may further include at least one camera (e.g., the camera module 3280 of FIG. 32) operationally connected with the at least one processor. The at least one processor may display an execution screen of a camera application (e.g., the first screen 1210 of FIG. 12A) including a plurality of objects (e.g., the plurality of objects 1220 of FIG. 12A) for control of the at least one camera on the first region as the first screen and may identify that the second housing and/or the third housing is gripped by a user, based on a value obtained by the at least one sensor. When the second housing is gripped by the user and the flexible display is extended in the second direction, the at least one processor may display a second screen (e.g., the second screen 1211 of FIG. 12B) including remaining objects (e.g., the objects 1224 and 1225 of FIG. 12B) other than at least some of the plurality of objects on the third region and a partial region (e.g., the partial region 1261 of FIG. 12B) of the first region that extends from the third region and may display the at least some objects (e.g., the objects 1221, 1222, and 1223 of FIG. 12B) among the plurality of objects on a remaining region (e.g., the remaining region 1262 of FIG. 12B) of the first region.

In an embodiment, the plurality of objects included in the first screen may include a first group of objects and a second group of objects. The at least one processor may display the first group of objects on the second region and the second group of objects on the third region, when the second housing and the third housing are gripped by the user and the flexible display is extended in the first direction and the second direction.

In an embodiment, the electronic device may further include a first camera, a second camera, and a third camera operationally connected with the at least one processor. The at least one processor may display, on the first region, the first screen (e.g., the first screen 1310 of FIG. 13A) including a first preview image (e.g., the first preview image 1351 of FIG. 13A) based on an image obtained from the first camera, may display, on the second region, a second preview image (e.g., the second preview image 1352 of FIG. 13B) based on an image obtained from the second camera, when the flexible display is extended in the first direction, and may display, on the third region, a third preview image (e.g., the third preview image 1353 of FIG. 13C) based on an image obtained from the third camera, when the flexible display is extended in the second direction.

In an embodiment, the electronic device may further include at least one camera (e.g., the camera module 3280 of FIG. 32) operationally connected with the at least one processor. The at least one processor may display, on the first region, the first screen (e.g., the first screen 1410 of FIG. 14A) including a first preview image (e.g., the first preview image 1451 of FIG. 14A) based on at least some of images obtained through the at least one camera, may identify at least one subject (e.g., the subjects 1421, 1422, 1423, and 1424 of FIG. 14A) included in the first preview image, may obtain at least one image (e.g., the images 1441, 1442, 1443, and 1444 of FIG. 14B) corresponding to the at least one subject, based on the identification, and may display the at least one image on the second region (e.g., the second region 1162 of FIG. 14B) and/or the third region (e.g., the third region 1163 of FIG. 14B), when the flexible display is not extended.

In an embodiment, the at least one processor may display, on the first region, the first screen representing first content among contents stored in the electronic device, may display, on the second region, a first UI (e.g., the first UI 1520 of FIG. 15B) representing first information related to the content, when the flexible display is extended in the first direction, and may display, on the third region, a second UI (e.g., the second UI 1530 of FIG. 15B) representing second information related to the first content and different from the first information, when the flexible display is extended in the second direction.

In an embodiment, the at least one processor may magnify the first screen displayed on the first region and may display the magnified first screen on the first region, the second region, and the third region, when the flexible display is simultaneously extended in the first direction and the second direction.

In an embodiment, when the flexible display is extended in the first direction, the at least one processor may maintain the first screen displayed on the first region and may display a second screen (e.g., the second screen 2120 of FIG. 21B) different from the first screen on the second region, and when the flexible display is extended in the second direction after extended in the first direction, the at least one processor may maintain the first screen displayed on the first region and the second screen displayed on the second region and may display a third screen (e.g., the third screen 2130 of FIG. 21B) different from the first screen and the second screen on the third region.

In an embodiment, the at least one processor may execute a first application, may display the first screen (e.g., the first screen 2210 of FIG. 22A) on the first region, the first screen being an execution screen of the first application, may display, on the second region, at least one first icon (e.g., the at least one first icon 2221 of FIG. 22B) representing at least one first specified application among applications stored in the electronic device, when the flexible display is extended in the first direction, and may display, on the third region, at least one second icon (e.g., the at least one second icon 2231 of FIG. 22B) representing at least one second specified application among the applications stored in the electronic device, when the flexible display is extended in the second direction.

In an embodiment, the at least one first specified application may have the same category as the first application, and the at least one second specified application may include an application most frequently executed together with the first application among the applications.

In an embodiment, the flexible display may include a first sub-region (e.g., the first sub-region 2361 of FIG. 23A) and a second sub-region (e.g., the second sub-region 2362 of FIG. 23A) obtained by dividing the first region into upper and lower portions at a first specified ratio, and the second sub-region may be located under the first sub-region. The flexible display may include a third sub-region (e.g., the third sub-region 2363 of FIG. 23B) and a fourth sub-region (e.g., the fourth sub-region 2364 of FIG. 23B) obtained by dividing the first and second regions into left and right portions at a second specified ratio, and the fourth sub-region may be located on a right side of the third sub-region. The at least one processor may display an execution screen of a first application (e.g., the execution screen A of the first application of FIG. 23A) and an execution screen of a second application (e.g., the execution screen B of the second application of FIG. 23A) on the first sub-region and the second sub-region, respectively, as the first screen and may display the execution screen of the first application (e.g., the execution screen A of the first application of FIG. 23B) and the execution screen of the second application (e.g., the execution screen B of the second application of FIG. 23B) on the third sub-region and the fourth sub-region, respectively, when the flexible display is extended in the first direction.

In an embodiment, the flexible display may include a fifth sub-region (e.g., the seventh sub-region 2367 of FIG. 23D) and a sixth sub-region (e.g., the eighth sub-region 2368 of FIG. 23D) obtained by dividing the first to third regions into upper and lower portions at the first specified ratio, and the sixth sub-region is located under the fifth sub-region. The at least one processor may display the execution screen of the first application (e.g., the execution screen A of the first application of FIG. 23D) on the fifth sub-region and the execution screen of the second application (e.g., the execution screen B of the second application of FIG. 23D) on the sixth sub-region, when the flexible display is extended in the first direction and the second direction.

In an embodiment, the flexible display may include a first sub-region (e.g., the first sub-region 2461 of FIG. 24A) and a second sub-region (e.g., the second sub-region 2461 of FIG. 24A) obtained by dividing the first region into left and right portions at a first specified ratio, and the second sub-region may be located on a right side of the first sub-region. The at least one processor may display an execution screen of a first application (e.g., the execution screen A of the first application of FIG. 24A) and an execution screen of a second application (e.g., the execution screen B of the second application of FIG. 24A) on the first sub-region and the second sub-region, respectively, as the first screen. When the flexible display is extended in the first direction, the at least one processor may maintain the execution screen of the second application displayed on the second sub-region, may magnify the execution screen of the first application displayed on the first sub-region, and may display the magnified execution screen of the first application on a remaining region of the flexible display (e.g., the first remaining region 2465 of FIG. 24C). The remaining region of the flexible display may include the second region and a partial region (e.g., the partial region 1161-1 of FIG. 24C) other than the second sub-region in the first region.

In an embodiment, the flexible display may include a third sub-region (e.g., the third sub-region 2463 of FIG. 24B) and a fourth sub-region (e.g., the fourth sub-region 2464 of FIG. 24B) obtained by dividing the first to third regions into left and right portions at the first specified ratio, and the fourth sub-region may be located on a right side of the third sub-region. When the flexible display is extended in the first direction and the second direction, the at least one processor may magnify the execution screen of the first application displayed on the first sub-region, may display the magnified execution screen of the first application on the third sub-region, may magnify the execution screen of the second application displayed on the second sub-region, and may display the magnified execution screen of the second application on the fourth sub-region.

In an embodiment, the at least one processor may display a keyboard (e.g., the keyboard 2520 of FIG. 25A) including a plurality of keys on the first region such that the keyboard overlaps the first screen. When the distance by which the flexible display is extended exceeds a threshold distance, the at least one processor may display a first portion of the keyboard (e.g., the first portion 2521 of FIG. 25B) including a first group of keys among the plurality of keys such that the first portion of the keyboard is aligned in the first direction in an extended display region of the flexible display and may display a second portion of the keyboard (e.g., the second portion 2522 of FIG. 25B) including a second group of keys among the plurality of keys such that the second portion of the keyboard is aligned in the second direction in the extended display region.

In an embodiment, the first screen may include an execution screen of a game application or a lock screen of the electronic device.

In an embodiment, the at least one processor may display a first keyboard (e.g., the first keyboard 2820 of FIG. 28A) including a first number of keys on the first region such that the first keyboard overlaps the first screen. When the distance by which the flexible display is extended exceeds a first threshold value, the at least one processor may replace the first keyboard with a second keyboard (e.g., the second keyboard 2830 of FIG. 28B) including a second number of keys being more than the first number of keys and may display the second keyboard on a first extended display region of the flexible display. When the distance by which the flexible display is extended exceeds a second threshold value greater than the first threshold value, the at least one processor may display a first portion of the second keyboard (e.g., the first portion 2831 of FIG. 28C) including a first group of keys among the second number of keys such that the first portion of the second keyboard is aligned in the first direction in a second extended display region and may display a second portion of the second keyboard (e.g., the second portion 2832 of FIG. 28C) including a second group of keys among the second number of keys such that the second portion of the second keyboard is biased in the second direction in the second extended display region.

In an embodiment, the at least one processor may display a first keyboard (e.g., the first keyboard 2920 of FIG. 29A) including a plurality of keys on the first region such that the first keyboard overlaps the first screen. When the flexible display is extended in the first direction, the at least one processor may display a second keyboard (e.g., the second keyboard 2930 of FIG. 29B) different from the first keyboard on a first sub-region (e.g., the first sub-region 2961 of FIG. 29B) located on a left side with respect to the center of a first extended region including the first region and the second region of the flexible display and may display the first keyboard on a second sub-region (e.g., the second sub-region 2962 of FIG. 29B) located on a right side with respect to the center of the first extended region of the flexible display.

In an embodiment, when the flexible display is extended in the second direction, the at least one processor may display the first keyboard on a third sub-region (e.g., the third sub-region 2973 of FIG. 29C) located on a left side with respect to the center of a second extended region including the first region and the second region of the flexible display and may display a third keyboard (e.g., the third keyboard 2940 of FIG. 29C) different from the first keyboard on a fourth sub-region (e.g., the fourth sub-region 2974 of FIG. 29C) located on a right side with respect to the center of the second extended region.

In an embodiment, the at least one processor may obtain biometric information of a user using the at least one sensor, and when the user is authenticated based on the obtained biometric information and the flexible display is extended in the second direction, the at least one processor may display security information (e.g., the UI 3030 of FIG. 30B) on the third region.

Fig. 32 is a block diagram illustrating an electronic device 3201 in a network environment 3200 according to various embodiments. Referring to Fig. 32, the electronic device 3201 in the network environment 3200 may communicate with an electronic device 3202 via a first network 3298 (e.g., a short-range wireless communication network), or at least one of an electronic device 3204 or a server 3208 via a second network 3299 (e.g., a long-range wireless communication network). According to an embodiment, the electronic device 3201 may communicate with the electronic device 3204 via the server 3208. According to an embodiment, the electronic device 3201 may include a processor 3220, memory 3230, an input module 3250, a sound output module 3255, a display module 3260, an audio module 3270, a sensor module 3276, an interface 3277, a connecting terminal 3278, a haptic module 3279, a camera module 3280, a power management module 3288, a battery 3289, a communication module 3290, a subscriber identification module(SIM) 3296, or an antenna module 3297. In some embodiments, at least one of the components (e.g., the connecting terminal 3278) may be omitted from the electronic device 3201, or one or more other components may be added in the electronic device 3201. In some embodiments, some of the components (e.g., the sensor module 3276, the camera module 3280, or the antenna module 3297) may be implemented as a single component (e.g., the display module 3260).

The processor 3220 may execute, for example, software (e.g., a program 3240) to control at least one other component (e.g., a hardware or software component) of the electronic device 3201 coupled with the processor 3220, and may perform various data processing or computation. According to one embodiment, as at least part of the data processing or computation, the processor 3220 may store a command or data received from another component (e.g., the sensor module 3276 or the communication module 3290) in volatile memory 3232, process the command or the data stored in the volatile memory 3232, and store resulting data in non-volatile memory 3234. According to an embodiment, the processor 3220 may include a main processor 3221 (e.g., a central processing unit (CPU) or an application processor (AP)), or an auxiliary processor 3223 (e.g., a graphics processing unit (GPU), a neural processing unit (NPU), an image signal processor (ISP), a sensor hub processor, or a communication processor (CP)) that is operable independently from, or in conjunction with, the main processor 3221. For example, when the electronic device 3201 includes the main processor 3221 and the auxiliary processor 3223, the auxiliary processor 3223 may be adapted to consume less power than the main processor 3221, or to be specific to a specified function. The auxiliary processor 3223 may be implemented as separate from, or as part of the main processor 3221.

The auxiliary processor 3223 may control at least some of functions or states related to at least one component (e.g., the display module 3260, the sensor module 3276, or the communication module 3290) among the components of the electronic device 3201, instead of the main processor 3221 while the main processor 3221 is in an inactive (e.g., sleep) state, or together with the main processor 3221 while the main processor 3221 is in an active state (e.g., executing an application). According to an embodiment, the auxiliary processor 3223 (e.g., an image signal processor or a communication processor) may be implemented as part of another component (e.g., the camera module 3280 or the communication module 3290) functionally related to the auxiliary processor 3223. According to an embodiment, the auxiliary processor 3223 (e.g., the neural processing unit) may include a hardware structure specified for artificial intelligence model processing. An artificial intelligence model may be generated by machine learning. Such learning may be performed, e.g., by the electronic device 3201 where the artificial intelligence is performed or via a separate server (e.g., the server 3208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 3230 may store various data used by at least one component (e.g., the processor 3220 or the sensor module 3276) of the electronic device 3201. The various data may include, for example, software (e.g., the program 3240) and input data or output data for a command related thererto. The memory 3230 may include the volatile memory 3232 or the non-volatile memory 3234.

The program 3240 may be stored in the memory 3230 as software, and may include, for example, an operating system (OS) 3242, middleware 3244, or an application 3246.

The input module 3250 may receive a command or data to be used by another component (e.g., the processor 3220) of the electronic device 3201, from the outside (e.g., a user) of the electronic device 3201. The input module 3250 may include, for example, a microphone, a mouse, a keyboard, a key (e.g., a button), or a digital pen (e.g., a stylus pen).

The sound output module 3255 may output sound signals to the outside of the electronic device 3201. The sound output module 3255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 3260 may visually provide information to the outside (e.g., a user) of the electronic device 3201. The display module 3260 may include, for example, a display, a hologram device, or a projector and control circuitry to control a corresponding one of the display, hologram device, and projector. According to an embodiment, the display module 3260 may include a touch sensor adapted to detect a touch, or a pressure sensor adapted to measure the intensity of force incurred by the touch.

The audio module 3270 may convert a sound into an electrical signal and vice versa. According to an embodiment, the audio module 3270 may obtain the sound via the input module 3250, or output the sound via the sound output module 3255 or a headphone of an external electronic device (e.g., an electronic device 3202) directly (e.g., wiredly) or wirelessly coupled with the electronic device 3201.

The sensor module 3276 may detect an operational state (e.g., power or temperature) of the electronic device 3201 or an environmental state (e.g., a state of a user) external to the electronic device 3201, and then generate an electrical signal or data value corresponding to the detected state. According to an embodiment, the sensor module 3276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 3277 may support one or more specified protocols to be used for the electronic device 3201 to be coupled with the external electronic device (e.g., the electronic device 3202) directly (e.g., wiredly) or wirelessly. According to an embodiment, the interface 3277 may include, for example, a high definition multimedia interface (HDMI), a universal serial bus (USB) interface, a secure digital (SD) card interface, or an audio interface.

A connecting terminal 3278 may include a connector via which the electronic device 3201 may be physically connected with the external electronic device (e.g., the electronic device 3202). According to an embodiment, the connecting terminal 3278 may include, for example, a HDMI connector, a USB connector, a SD card connector, or an audio connector (e.g., a headphone connector).

The haptic module 3279 may convert an electrical signal into a mechanical stimulus (e.g., a vibration or a movement) or electrical stimulus which may be recognized by a user via his tactile sensation or kinesthetic sensation. According to an embodiment, the haptic module 3279 may include, for example, a motor, a piezoelectric element, or an electric stimulator.

The camera module 3280 may capture a still image or moving images. According to an embodiment, the camera module 3280 may include one or more lenses, image sensors, image signal processors, or flashes.

The power management module 3288 may manage power supplied to the electronic device 3201. According to one embodiment, the power management module 3288 may be implemented as at least part of, for example, a power management integrated circuit (PMIC).

The battery 3289 may supply power to at least one component of the electronic device 3201. According to an embodiment, the battery 3289 may include, for example, a primary cell which is not rechargeable, a secondary cell which is rechargeable, or a fuel cell.

The communication module 3290 may support establishing a direct (e.g., wired) communication channel or a wireless communication channel between the electronic device 3201 and the external electronic device (e.g., the electronic device 3202, the electronic device 3204, or the server 3208) and performing communication via the established communication channel. The communication module 3290 may include one or more communication processors that are operable independently from the processor 3220 (e.g., the application processor (AP)) and supports a direct (e.g., wired) communication or a wireless communication. According to an embodiment, the communication module 3290 may include a wireless communication module 3292 (e.g., a cellular communication module, a short-range wireless communication module, or a global navigation satellite system (GNSS) communication module) or a wired communication module 3294 (e.g., a local area network (LAN) communication module or a power line communication (PLC) module). A corresponding one of these communication modules may communicate with the external electronic device via the first network 3298 (e.g., a short-range communication network, such as Bluetooth^{™}, wireless-fidelity (Wi-Fi) direct, or infrared data association (IrDA)) or the second network 3299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 3292 may identify and authenticate the electronic device 3201 in a communication network, such as the first network 3298 or the second network 3299, using subscriber information (e.g., international mobile subscriber identity (IMSI)) stored in the subscriber identification module 3296.

The wireless communication module 3292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 3292 may support a high-frequency band (e.g., the mmWave band) to achieve, e.g., a high data transmission rate. The wireless communication module 3292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 3292 may support various requirements specified in the electronic device 3201, an external electronic device (e.g., the electronic device 3204), or a network system (e.g., the second network 3299). According to an embodiment, the wireless communication module 3292 may support a peak data rate (e.g., 20Gbps or more) for implementing eMBB, loss coverage (e.g., 3264dB or less) for implementing mMTC, or U-plane latency (e.g., 0.5ms or less for each of downlink (DL) and uplink (UL), or a round trip of 32ms or less) for implementing URLLC.

The antenna module 3297 may transmit or receive a signal or power to or from the outside (e.g., the external electronic device) of the electronic device 3201. According to an embodiment, the antenna module 3297 may include an antenna including a radiating element composed of a conductive material or a conductive pattern formed in or on a substrate (e.g., a printed circuit board (PCB)). According to an embodiment, the antenna module 3297 may include a plurality of antennas (e.g., array antennas). In such a case, at least one antenna appropriate for a communication scheme used in the communication network, such as the first network 3298 or the second network 3299, may be selected, for example, by the communication module 3290 (e.g., the wireless communication module 3292) from the plurality of antennas. The signal or the power may then be transmitted or received between the communication module 3290 and the external electronic device via the selected at least one antenna. According to an embodiment, another component (e.g., a radio frequency integrated circuit (RFIC)) other than the radiating element may be additionally formed as part of the antenna module 3297.

According to various embodiments, the antenna module 3297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 3201 and the external electronic device 3204 via the server 3208 coupled with the second network 3299. Each of the electronic devices 3202 or 3204 may be a device of a same type as, or a different type, from the electronic device 3201. According to an embodiment, all or some of operations to be executed at the electronic device 3201 may be executed at one or more of the external electronic devices 3202, 3204, or 3208. For example, if the electronic device 3201 should perform a function or a service automatically, or in response to a request from a user or another device, the electronic device 3201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 3201. The electronic device 3201 may provide the outcome, with or without further processing of the outcome, as at least part of a reply to the request. To that end, a cloud computing, distributed computing, mobile edge computing (MEC), or client-server computing technology may be used, for example. The electronic device 3201 may provide ultra low-latency services using, e.g., distributed computing or mobile edge computing. In another embodiment, the external electronic device 3204 may include an internet-of-things (IoT) device. The server 3208 may be an intelligent server using machine learning and/or a neural network. According to an embodiment, the external electronic device 3204 or the server 3208 may be included in the second network 3299. The electronic device 3201 may be applied to intelligent services (e.g., smart home, smart city, smart car, or healthcare) based on 5G communication technology or IoT-related technology.

Fig. 33 is a block diagram 3300 illustrating the display module 3260 according to various embodiments. Referring to Fig. 33, the display module 3260 may include a display 3310 and a display driver integrated circuit (DDI) 3330 to control the display 3310. The DDI 3330 may include an interface module 3331, memory 3333 (e.g., buffer memory), an image processing module 3335, or a mapping module 3337. The DDI 3330 may receive image information that contains image data or an image control signal corresponding to a command to control the image data from another component of the electronic device 3201 via the interface module 3331. For example, according to an embodiment, the image information may be received from the processor 3220 (e.g., the main processor 3221 (e.g., an application processor)) or the auxiliary processor 3223 (e.g., a graphics processing unit) operated independently from the function of the main processor 3221. The DDI 3330 may communicate, for example, with touch circuitry 3350 or the sensor module 3276 via the interface module 3331. The DDI 3330 may also store at least part of the received image information in the memory 3333, for example, on a frame by frame basis.

The image processing module 3335 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 3310.

The mapping module 3337 may generate a voltage value or a current value corresponding to the image data pre-processed or post-processed by the image processing module 3335. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 3310 may be driven, for example, based at least in part on the voltage value or the current value such that visual information (e.g., a text, an image, or an icon) corresponding to the image data may be displayed via the display 3310.

According to an embodiment, the display module 3260 may further include the touch circuitry 3350. The touch circuitry 3350 may include a touch sensor 3351 and a touch sensor IC 3353 to control the touch sensor 3351. The touch sensor IC 3353 may control the touch sensor 3351 to sense a touch input or a hovering input with respect to a certain position on the display 3310. To achieve this, for example, the touch sensor 3351 may detect (e.g., measure) a change in a signal (e.g., a voltage, a quantity of light, a resistance, or a quantity of one or more electric charges) corresponding to the certain position on the display 3310. The touch circuitry 3350 may provide input information (e.g., a position, an area, a pressure, or a time) indicative of the touch input or the hovering input detected via the touch sensor 3351 to the processor 3220. According to an embodiment, at least part (e.g., the touch sensor IC 3353) of the touch circuitry 3350 may be formed as part of the display 3310 or the DDI 3330, or as part of another component (e.g., the auxiliary processor 3223) disposed outside the display module 3260.

According to an embodiment, the display module 3260 may further include at least one sensor (e.g., a fingerprint sensor, an iris sensor, a pressure sensor, or an illuminance sensor) of the sensor module 3276 or a control circuit for the at least one sensor. In such a case, the at least one sensor or the control circuit for the at least one sensor may be embedded in one portion of a component (e.g., the display 3310, the DDI 3330, or the touch circuitry 3350)) of the display module 3260. For example, when the sensor module 3276 embedded in the display module 3260 includes a biometric sensor (e.g., a fingerprint sensor), the biometric sensor may obtain biometric information (e.g., a fingerprint image) corresponding to a touch input received via a portion of the display 3310. As another example, when the sensor module 3276 embedded in the display module 3260 includes a pressure sensor, the pressure sensor may obtain pressure information corresponding to a touch input received via a partial or whole area of the display 3310. According to an embodiment, the touch sensor 3351 or the sensor module 3276 may be disposed between pixels in a pixel layer of the display 3310, or over or under the pixel layer.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 3240) including one or more instructions that are stored in a storage medium (e.g., internal memory 3236 or external memory 3238) that is readable by a machine (e.g., the electronic device 3201). For example, a processor (e.g., the processor 3220) of the machine (e.g., the electronic device 3201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (110);
a second housing (120) configured to form a first side surface (10B) of the electronic device (101) and coupled to the first housing (110) so as to be movable in a first direction (1) perpendicular to the first side surface (10B), at least a portion of the second housing (120) being located in the first housing (110);
a third housing (130) configured to form a second side surface (10C) of the electronic device (101) and coupled to the first housing (110) so as to be movable in a second direction (2) perpendicular to the second side surface (10C), at least a portion of the third housing (130) being located in the first housing (110);
a first panel support member (126) fixedly disposed in the second housing (120), the first panel support member (126) including a first curved surface (1271A) configured to face toward the first side surface (10B) and a second curved surface (1291A) configured to face toward the second side surface (10C);
a second panel support member (136) fixedly disposed in the third housing (130), the second panel support member (136) including a third curved surface configured to face toward the second side surface and a fourth curved surface configured to face toward the first side surface; and
a flexible display (160),
wherein the flexible display (160) includes:
a first region (161) disposed in the first housing (110) and configured to form a first surface of the electronic device (101);
a second region (162) fully located in the second housing (120) in a normal state, whereby the second housing (120) and the third housing (130) are completely located in the first housing (110), and configured to at least partially form the first surface of the electronic device (101) together with the first region (161) when at least a portion of the second housing is outside the first housing; and
a third region (163) fully located in the third housing (130) in the normal state and configured to at least partially form the first surface of the electronic device (101) together with the first region (161) when at least a portion of the third housing is outside the first housing,
wherein the first panel support member (126) includes a first roll bar (1271) and a second roll bar (1291) configured to form the first curved surface and the second curved surface respectively and a first extension (1272) configured to extend from the first roll bar toward the second roll bar and a second extension (1292) configured to extend from the second roll bar toward the first roll bar, the second roll bar being spaced apart from the first roll bar,
wherein the second panel support member (136) includes a third roll bar and a fourth roll bar configured to form the third curved surface and the fourth curved surface respectively,
wherein when the electronic device is in the normal state, the second region of the flexible display at least partially surrounds the first curved surface and the second curved surface of the first panel support member and the third region of the flexible display at least partially surrounds the third curved surface and the fourth curved surface of the second panel support member;
wherein when the at least portion of the second housing is outside the first housing, the second region of the flexible display at least partially surrounds the first curved surface or at least partially surrounds the first curved surface and the second curved surface of the first panel support member; and
wherein when the at least portion of the third housing is outside the first housing, the third region of the flexible display at least partially surrounds the third curved surface or at least partially surrounds the third curved surface and the fourth curved surface of the second panel support member.

2. The electronic device (101) of claim 1,
wherein in the normal state, the second region (162) of the flexible display (160) includes:
a first portion configured to extend in the counterclockwise direction along the first curved surface of the first roll bar;
a second portion configured to extend from the first portion to the second roll bar;
a third portion configured to extend from the second portion in the counterclockwise direction along the second curved surface of the second roll bar; and
a fourth portion configured to extend from the third portion toward the first roll bar.

3. The electronic device (101) of claim 2, wherein in the normal state, the second portion and the third portion of the second region and the first region (161) overlap each other.

4. The electronic device (101) of claim 2, wherein in the normal state, the second portion of the second region (162) extends under the second extension to the second roll bar, and the fourth portion of the second region extends under the first extension toward the first roll bar.

5. The electronic device (101) of claim 1, further comprising:
a first multi-bar attached to a rear surface of the second region (162) of the flexible display (160); and
a second multi-bar attached to a rear surface of the third region of the flexible display (160),
wherein the first multi-bar at least partially surrounds the first roll bar and the second roll bar, and
wherein the second multi-bar at least partially surrounds the third roll bar and the fourth roll bar.

6. The electronic device (101) of claim 5, further comprising:
first guide members coupled to opposite ends of the first roll bar and opposite ends of the second roll bar,
wherein opposite ends of the first multi-bar are accommodated in guide rails formed in the first guide members, and
wherein the first multi-bar pulls the second region of the flexible display while moving in the guide rails.

7. The electronic device (101) of claim 1, further comprising:
a first actuator disposed in the first housing so as to be adjacent to the second housing and a second actuator disposed in the first housing so as to be adjacent to the third housing,
wherein the first actuator applies a force to the second housing in the first direction, and
wherein the second actuator applies a force to the third housing in the second direction.

8. The electronic device (101) of claim 7, wherein the first extension extends beyond the second roll bar and wherein the first panel support member includes a first support part configured to extend from the first extension into a space between the second roll bar and the first actuator, and
wherein the first actuator applies a force to the first support part in the first direction.

9. The electronic device (101) of claim 7, further comprising:
at least one sensor; and
at least one processor operationally connected with the first actuator, the second actuator, and the at least one sensor,
wherein the at least one processor is configured to:
detect movement of the second housing and the third housing using the at least one sensor;
control the first actuator to apply a force to the second housing in the first direction in response to detection of movement of the second housing in the first direction; and
control the second actuator to apply a force to the third housing in the second direction in response to detection of movement of the third housing in the second direction.

10. The electronic device (101) of claim 1, further comprising:
a first variable magnet member disposed on the first roll bar;
a first magnet member disposed on a rear surface of the second region of the flexible display;
a second variable magnet member disposed on the second roll bar; and
a second magnet member disposed on a rear surface of the third region of the flexible display,
wherein the first magnet member moves away from the first variable magnet member as the second housing moves, and
wherein the second magnet member moves away from the second variable magnet member as the third housing moves.

11. The electronic device (101) of claim 10, further comprising:
at least one sensor; and
at least one processor operationally connected with the first variable magnet member, the second variable magnet member, and the at least one sensor,
wherein the electronic device includes a normal state in which the second region of the flexible display is located in the second housing and the third region of the flexible display is located in the third housing, and
wherein the at least one processor is configured to:
detect whether the electronic device is in the normal state, by using the at least one sensor;
control the first variable magnet member such that opposite poles of the first magnet member and the first variable magnet member face each other; and
control the second variable magnet member such that opposite poles of the second magnet member and the second variable magnet member face each other while the electronic device is in the normal state.

12. The electronic device (101) of claim 1, wherein the first housing (110) includes a back plate configured to form a rear surface of the electronic device (101), and
wherein the back plate includes a first specified region and a second specified region formed to be substantially transparent.

13. The electronic device (101) of claim 12, wherein the electronic device (101) includes a normal state in which the second region (162) of the flexible display (160) is located in the second housing (120) and the third region (163) of the flexible display (160) is located in the third housing (130),
wherein in the normal state, the first specified region at least partially overlaps the second region (162) of the flexible display (160), and
wherein in the normal state, the second specified region at least partially overlaps the third region (163) of the flexible display (160).

## Patentansprüche

1. Elektronische Vorrichtung (101), die Folgendes umfasst:
ein erstes Gehäuse (110);
ein zweites Gehäuse (120), das so konfiguriert ist, dass es eine erste Seitenfläche (10B) der elektronischen Vorrichtung (101) bildet und mit dem ersten Gehäuse (110) so gekoppelt ist, dass es in eine erste Richtung (1) senkrecht zu der ersten Seitenfläche (10B) bewegbar ist, wobei sich zumindest ein Teil des zweiten Gehäuses (120) in dem ersten Gehäuse (110) befindet;
ein drittes Gehäuse (130), das so konfiguriert ist, dass es eine zweite Seitenfläche (10C) der elektronischen Vorrichtung (101) bildet und mit dem ersten Gehäuse (110) so gekoppelt ist, dass es in eine zweite Richtung (2) senkrecht zu der zweiten Seitenfläche (10C) bewegbar ist, wobei sich zumindest ein Teil des dritten Gehäuses (130) in dem ersten Gehäuse (110) befindet;
ein erstes Plattenstützelement (126), das fest in dem zweiten Gehäuse (120) angeordnet ist, wobei das erste Plattenstützelement (126) eine erste gekrümmte Oberfläche (1271A) enthält, die so konfiguriert ist, dass sie zur ersten Seitenfläche (10B) hin ausgerichtet ist, und eine zweite gekrümmte Oberfläche (1291A), die so konfiguriert ist, dass sie zur zweiten Seitenfläche (10C) hin ausgerichtet ist;
ein zweites Plattenstützelement (136), das fest in dem dritten Gehäuse (130) angeordnet ist, wobei das zweite Plattenstützelement (136) eine dritte gekrümmte Oberfläche enthält, die so konfiguriert ist, dass sie zur zweiten Seitenfläche hin ausgerichtet ist, und eine vierte gekrümmte Oberfläche, die so konfiguriert ist, dass sie zur ersten Seitenfläche hin ausgerichtet ist; und
ein flexibles Display (160),
wobei das flexible Display (160) Folgendes enthält:
einen ersten Bereich (161), der in dem ersten Gehäuse (110) angeordnet und so konfiguriert ist, dass er eine erste Oberfläche der elektronischen Vorrichtung (101) bildet;
einen zweiten Bereich (162), der sich im Normalzustand vollständig in dem zweiten Gehäuse (120) befindet, wobei sich das zweite Gehäuse (120) und das dritte Gehäuse (130) vollständig in dem ersten Gehäuse (110) befinden und so konfiguriert sind, dass sie zusammen mit dem ersten Bereich (161) zumindest teilweise die erste Oberfläche der elektronischen Vorrichtung (101) bilden, wenn sich zumindest ein Teil des zweiten Gehäuses außerhalb des ersten Gehäuses befindet; und
einen dritten Bereich (163), der sich im Normalzustand vollständig in dem dritten Gehäuse (130) befindet und so konfiguriert ist, dass er zusammen mit dem ersten Bereich (161) zumindest teilweise die erste Oberfläche der elektronischen Vorrichtung (101) bildet, wenn sich zumindest ein Teil des dritten Gehäuses außerhalb des ersten Gehäuses befindet,
wobei das erste Plattenstützelement (126) einen ersten Überrollbügel (1271) und einen zweiten Überrollbügel (1291) enthält, die so konfiguriert sind, dass sie die erste gekrümmte Oberfläche bzw. die zweite gekrümmte Oberfläche bilden, und eine erste Verlängerung (1272), die so konfiguriert ist, dass sie sich von dem ersten Überrollbügel in Richtung des zweiten Überrollbügels erstreckt, und eine zweite Verlängerung (1292), die so konfiguriert ist, dass sie sich von dem zweiten Überrollbügel in Richtung des ersten Überrollbügels erstreckt, wobei der zweite Überrollbügel von dem ersten Überrollbügel beabstandet ist,
wobei das zweite Plattenstützelement (136) einen dritten Überrollbügel und einen vierten Überrollbügel enthält, die so konfiguriert sind, dass sie die dritte gekrümmte Oberfläche bzw. die vierte gekrümmte Oberfläche bilden,
wobei, wenn sich die elektronische Vorrichtung im Normalzustand befindet, der zweite Bereich des flexiblen Displays zumindest teilweise die erste gekrümmte Oberfläche und die zweite gekrümmte Oberfläche des ersten Plattenstützelements umgibt und der dritte Bereich des flexiblen Displays zumindest teilweise die dritte gekrümmte Oberfläche und die vierte gekrümmte Oberfläche des zweiten Plattenstützelements umgibt;
wobei, wenn sich zumindest ein Teil des zweiten Gehäuses außerhalb des ersten Gehäuses befindet, der zweite Bereich des flexiblen Displays zumindest teilweise die erste gekrümmte Oberfläche umgibt oder zumindest teilweise die erste gekrümmte Oberfläche und die zweite gekrümmte Oberfläche des ersten Plattenstützelements umgibt; und
wobei, wenn sich zumindest ein Teil des dritten Gehäuses außerhalb des ersten Gehäuses befindet, der dritte Bereich des flexiblen Displays zumindest teilweise die dritte gekrümmte Oberfläche umgibt oder zumindest teilweise die dritte gekrümmte Oberfläche und die vierte gekrümmte Oberfläche des zweiten Plattenstützelements umgibt.

2. Elektronische Vorrichtung (101) nach Anspruch 1,
wobei im Normalzustand der zweite Bereich (162) des flexiblen Displays (160) Folgendes enthält:
einen ersten Teil, der so konfiguriert ist, dass er sich entgegen dem Uhrzeigersinn entlang der ersten gekrümmten Oberfläche des ersten Überrollbügels erstreckt;
einen zweiten Teil, der so konfiguriert ist, dass er sich von dem ersten Teil bis zu dem zweiten Überrollbügel erstreckt;
einen dritten Teil, der so konfiguriert ist, dass er sich von dem zweiten Teil entgegen dem Uhrzeigersinn entlang der zweiten gekrümmten Oberfläche des zweiten Überrollbügels erstreckt; und
einen vierten Teil, der so konfiguriert ist, dass er sich von dem dritten Teil in Richtung des ersten Überrollbügels erstreckt.

3. Elektronische Vorrichtung (101) nach Anspruch 2, wobei sich im Normalzustand der zweite Teil und der dritte Teil des zweiten Bereichs und der erste Bereich (161) überlappen.

4. Elektronische Vorrichtung (101) nach Anspruch 2, wobei sich im Normalzustand der zweite Teil des zweiten Bereichs (162) unter der zweiten Verlängerung bis zu dem zweiten Überrollbügel erstreckt und der vierte Teil des zweiten Bereichs unter der ersten Verlängerung in Richtung des ersten Überrollbügels erstreckt.

5. Elektronische Vorrichtung (101) nach Anspruch 1, die ferner Folgendes umfasst:
einen ersten Mehrfachbalken, der an einer Rückseite des zweiten Bereichs (162) des flexiblen Displays (160) befestigt ist; und
einen zweiten Mehrfachbalken, der an einer Rückseite des dritten Bereichs des flexiblen Displays (160) befestigt ist,
wobei der erste Mehrfachbalken zumindest teilweise den ersten Überrollbügel und den zweiten Überrollbügel umgibt, und
wobei der zweite Mehrfachbalken zumindest teilweise den dritten Überrollbügel und den vierten Überrollbügel umgibt.

6. Elektronische Vorrichtung (101) nach Anspruch 5, die ferner Folgendes umfasst:
erste Führungselemente, die mit gegenüberliegenden Enden des ersten Überrollbügels und gegenüberliegenden Enden des zweiten Überrollbügels gekoppelt sind,
wobei gegenüberliegende Enden des ersten Mehrfachbalkens in Führungsschienen aufgenommen sind, die in den ersten Führungselementen ausgebildet sind, und
wobei der erste Mehrfachbalken den zweiten Bereich des flexiblen Displays zieht, während er sich in den Führungsschienen bewegt.

7. Elektronische Vorrichtung (101) nach Anspruch 1, die ferner Folgendes umfasst:
einen ersten Aktuator, der in dem ersten Gehäuse so angeordnet ist, dass er an das zweite Gehäuse angrenzt, und einen zweiten Aktuator, der in dem ersten Gehäuse so angeordnet ist, dass er an das dritte Gehäuse angrenzt,
wobei der erste Aktuator eine Kraft auf das zweite Gehäuse in erster Richtung ausübt, und
wobei der zweite Aktuator eine Kraft auf das dritte Gehäuse in zweiter Richtung ausübt.

8. Elektronische Vorrichtung (101) nach Anspruch 7, wobei sich die erste Verlängerung über den zweiten Überrollbügel hinaus erstreckt und wobei das erste Plattenstützelement einen ersten Stützteil enthält, der so konfiguriert ist, dass er sich von der ersten Verlängerung in einen Raum zwischen dem zweiten Überrollbügel und dem ersten Aktuator erstreckt, und
wobei der erste Aktuator eine Kraft auf den ersten Stützteil in erster Richtung ausübt.

9. Elektronische Vorrichtung (101) nach Anspruch 7, die ferner Folgendes umfasst:
mindestens einen Sensor; und
mindestens einen Prozessor, der mit dem ersten Aktuator, dem zweiten Aktuator und dem mindestens einen Sensor wirkverbunden ist,
wobei der mindestens eine Prozessor zu Folgendem konfiguriert ist:
Erkennen einer Bewegung des zweiten Gehäuses und des dritten Gehäuses unter Verwendung des mindestens einen Sensors;
Steuern des ersten Aktuators so, dass er als Reaktion auf die Erkennung einer Bewegung des zweiten Gehäuses in erster Richtung eine Kraft auf das zweite Gehäuse in erster Richtung ausübt; und
Steuern des zweiten Aktuators so, dass er als Reaktion auf die Erkennung einer Bewegung des dritten Gehäuses in zweiter Richtung eine Kraft auf das dritte Gehäuse in zweiter Richtung ausübt.

10. Elektronische Vorrichtung (101) nach Anspruch 1, die ferner Folgendes umfasst:
ein erstes variables Magnetelement, das an dem ersten Überrollbügel angeordnet ist;
ein erstes Magnetelement, das an einer Rückseite des zweiten Bereichs des flexiblen Displays angeordnet ist;
ein zweites variables Magnetelement, das an dem zweiten Überrollbügel angeordnet ist; und
ein zweites Magnetelement, das an einer Rückseite des dritten Bereichs des flexiblen Displays angeordnet ist,
wobei sich das erste Magnetelement von dem ersten variablen Magnetelement wegbewegt, während sich das zweite Gehäuse bewegt, und
wobei sich das zweite Magnetelement von dem zweiten variablen Magnetelement wegbewegt, während sich das dritte Gehäuse bewegt.

11. Elektronische Vorrichtung (101) nach Anspruch 10, die ferner Folgendes umfasst:
mindestens einen Sensor; und
mindestens einen Prozessor, der mit dem ersten variablen Magnetelement, dem zweiten variablen Magnetelement und dem mindestens einen Sensor wirkverbunden ist,
wobei die elektronische Vorrichtung einen Normalzustand enthält, in dem sich der zweite Bereich des flexiblen Displays in dem zweiten Gehäuse befindet und sich der dritte Bereich des flexiblen Displays in dem dritten Gehäuse befindet, und
wobei der mindestens eine Prozessor zu Folgendem konfiguriert ist:
Erkennen unter Verwendung des mindestens einen Sensors, ob sich die elektronische Vorrichtung im Normalzustand befindet;
Steuern des ersten variablen Magnetelements so, dass entgegengesetzte Pole des ersten Magnetelements und des ersten variablen Magnetelements einander zugewandt sind; und
Steuern des zweiten variablen Magnetelements so, dass entgegengesetzte Pole des zweiten Magnetelements und des zweiten variablen Magnetelements einander zugewandt sind, während sich die elektronische Vorrichtung im Normalzustand befindet.

12. Elektronische Vorrichtung (101) nach Anspruch 1, wobei das erste Gehäuse (110) eine Rückplatte enthält, die so konfiguriert ist, dass sie eine Rückseite der elektronischen Vorrichtung (101) bildet, und
wobei die Rückplatte einen ersten bestimmten Bereich und einen zweiten bestimmten Bereich enthält, die so ausgebildet sind, dass sie im Wesentlichen transparent sind.

13. Elektronische Vorrichtung (101) nach Anspruch 12, wobei die elektronische Vorrichtung (101) einen Normalzustand enthält, in dem sich der zweite Bereich (162) des flexiblen Displays (160) in dem zweiten Gehäuse (120) befindet und sich der dritte Bereich (163) des flexiblen Displays (160) in dem dritten Gehäuse (130) befindet,
wobei im Normalzustand der erste bestimmte Bereich zumindest teilweise den zweiten Bereich (162) des flexiblen Displays (160) überlappt, und
wobei im Normalzustand der zweite bestimmte Bereich zumindest teilweise den dritten Bereich (163) des flexiblen Displays (160) überlappt.

## Revendications

1. Dispositif électronique (101) comprenant :
un premier boîtier (110) ;
un deuxième boîtier (120) configuré pour former une première surface latérale (10B) du dispositif électronique (101) et couplé au premier boîtier (110) de manière à être mobile dans une première direction (1) perpendiculaire à la première surface latérale (10B), au moins une portion du deuxième boîtier (120) étant située dans le premier boîtier (110) ;
un troisième boîtier (130) configuré pour former une deuxième surface latérale (10C) du dispositif électronique (101) et couplé au premier boîtier (110) de manière à être mobile dans une deuxième direction (2) perpendiculaire à la deuxième surface latérale (10C), au moins une portion du troisième boîtier (130) étant située dans le premier boîtier (110) ;
un premier élément de support de panneau (126) disposé de manière fixe dans le deuxième boîtier (120), le premier élément de support de panneau (126) incluant une première surface incurvée (1271A) configurée pour faire face à la première surface latérale (10B) et une deuxième surface incurvée (1291A) configurée pour faire face à la deuxième surface latérale (10C) ;
un deuxième élément de support de panneau (136) disposé de manière fixe dans le troisième boîtier (130), le deuxième élément de support de panneau (136) incluant une troisième surface incurvée configurée pour faire face à la deuxième surface latérale et une quatrième surface incurvée configurée pour faire face à la première surface latérale ; et
une unité d'affichage flexible (160),
où l'unité d'affichage flexible (160) inclut :
une première région (161) disposée dans le premier boîtier (110) et configurée pour former une première surface du dispositif électronique (101) ;
une deuxième région (162) entièrement située dans le deuxième boîtier (120) dans un état normal, de sorte que le deuxième boîtier (120) et le troisième boîtier (130) sont entièrement situés dans le premier boîtier (110), et configurée pour former au moins partiellement la première surface du dispositif électronique (101) conjointement avec la première région (161) lorsque au moins une portion du deuxième boîtier est à l'extérieur du premier boîtier ; et
une troisième région (163) entièrement située dans le troisième boîtier (130) dans l'état normal et configurée pour former au moins partiellement la première surface du dispositif électronique (101) conjointement avec la première région (161) lorsque au moins une portion du troisième boîtier est à l'extérieur du premier boîtier,
où le premier élément de support de panneau (126) inclut une première barre de roulement (1271) et une deuxième barre de roulement (1291) configurées pour former respectivement la première surface incurvée et la deuxième surface incurvée et une première extension (1272) configurée pour s'étendre de la première barre de roulement vers la deuxième barre de roulement et une deuxième extension (1292) configurée pour s'étendre de la deuxième barre de roulement vers la première barre de roulement, la deuxième barre de roulement étant espacée de la première barre de roulement,
où le deuxième élément de support de panneau (136) inclut une troisième barre de roulement et une quatrième barre de roulement configurées pour former respectivement la troisième surface incurvée et la quatrième surface incurvée,
où lorsque le dispositif électronique est dans l'état normal, la deuxième région de l'unité d'affichage flexible entoure au moins partiellement la première surface incurvée et la deuxième surface incurvée du premier élément de support de panneau et la troisième région de l'unité d'affichage flexible entoure au moins partiellement la troisième surface incurvée et la quatrième surface incurvée du deuxième élément de support de panneau ;
où lorsque l'au moins une portion du deuxième boîtier est à l'extérieur du premier boîtier, la deuxième région de l'unité d'affichage flexible entoure au moins partiellement la première surface incurvée ou entoure au moins partiellement la première surface incurvée et la deuxième surface incurvée du premier élément de support de panneau ; et
où lorsque l'au moins une portion du troisième boîtier est à l'extérieur du premier boîtier, la troisième région de l'unité d'affichage flexible entoure au moins partiellement la troisième surface incurvée ou entoure au moins partiellement la troisième surface incurvée et la quatrième surface incurvée du deuxième élément de support de panneau.

2. Dispositif électronique (101) selon la revendication 1,
où dans l'état normal, la deuxième région (162) de l'unité d'affichage flexible (160) inclut :
une première portion configurée pour s'étendre dans la direction antihoraire le long de la première surface incurvée de la première barre de roulement ;
une deuxième portion configurée pour s'étendre de la première portion à la deuxième barre de roulement ;
une troisième portion configurée pour s'étendre de la deuxième portion dans la direction antihoraire le long de la deuxième surface incurvée de la deuxième barre de roulement ; et
une quatrième portion configurée pour s'étendre de la troisième portion vers la première barre de roulement.

3. Dispositif électronique (101) selon la revendication 2, où dans l'état normal, la deuxième portion et la troisième portion de la deuxième région et de la première région (161) se chevauchent.

4. Dispositif électronique (101) selon la revendication 2, où dans l'état normal, la deuxième portion de la deuxième région (162) s'étend sous la deuxième extension jusqu'à la deuxième barre de roulement, et la quatrième portion de la deuxième région s'étend sous la première extension vers la première barre de roulement.

5. Dispositif électronique (101) selon la revendication 1, comprenant en outre :
une première barre multiple attachée à une surface arrière de la deuxième région (162) de l'unité d'affichage flexible (160) ; et
une deuxième barre multiple attachée à une surface arrière de la troisième région de l'unité d'affichage flexible (160),
où la première barre multiple entoure au moins partiellement la première barre de roulement et la deuxième barre de roulement, et
où la deuxième barre multiple entoure au moins partiellement la troisième barre de roulement et la quatrième barre de roulement.

6. Dispositif électronique (101) selon la revendication 5, comprenant en outre :
des premiers éléments de guidage couplés à des extrémités opposées de la première barre de roulement et à des extrémités opposées de la deuxième barre de roulement,
où des extrémités opposées de la première barre multiple sont logées dans des rails de guidage formés dans les premiers éléments de guidage, et
où la première barre multiple tire la deuxième région de l'unité d'affichage flexible tout en se déplaçant dans les rails de guidage.

7. Dispositif électronique (101) selon la revendication 1, comprenant en outre :
un premier actionneur disposé dans le premier boîtier de manière à être adjacent au deuxième boîtier et un deuxième actionneur disposé dans le premier boîtier afin d'être adjacent au troisième boîtier,
où le premier actionneur applique une force au deuxième boîtier dans la première direction, et
où le deuxième actionneur applique une force au troisième boîtier dans la deuxième direction.

8. Dispositif électronique (101) selon la revendication 7, où la première extension s'étend au-delà de la deuxième barre de roulement et où le premier élément de support de panneau inclut une première partie de support configurée pour s'étendre de la première extension dans un espace situé entre la deuxième barre de roulement et le premier actionneur, et
où le premier actionneur applique une force à la première partie de support dans la première direction.

9. Dispositif électronique (101) selon la revendication 7, comprenant en outre :
au moins un capteur ; et
au moins un processeur relié fonctionnellement au premier actionneur, au deuxième actionneur, et à l'au moins un capteur,
où l'au moins un processeur est configuré pour :
détecter le mouvement du deuxième boîtier et du troisième boîtier à l'aide de l'au moins un capteur ;
commander le premier actionneur pour appliquer une force au deuxième boîtier dans la première direction en réponse à la détection de mouvement du deuxième boîtier dans la première direction ; et
commander le deuxième actionneur pour appliquer une force au troisième boîtier dans la deuxième direction en réponse à la détection de mouvement du troisième boîtier dans la deuxième direction.

10. Dispositif électronique (101) selon la revendication 1, comprenant en outre :
un premier élément à aimant variable disposé sur la première barre de roulement ;
un premier élément à aimant disposé sur une surface arrière de la deuxième région de l'unité d'affichage flexible ;
un deuxième élément à aimant variable disposé sur la deuxième barre de roulement ; et
un deuxième élément à aimant disposé sur une surface arrière de la troisième région de l'unité d'affichage flexible,
où le premier élément à aimant s'éloigne du premier élément à aimant variable lorsque le deuxième boîtier se déplace, et
où le deuxième élément à aimant s'éloigne du deuxième élément à aimant variable lorsque le troisième boîtier se déplace.

11. Dispositif électronique (101) selon la revendication 10, comprenant en outre :
au moins un capteur ; et
au moins un processeur relié fonctionnellement au premier élément à aimant variable, au deuxième élément à aimant variable, et à l'au moins un capteur,
où le dispositif électronique inclut un état normal dans lequel la deuxième région de l'unité d'affichage flexible est située dans le deuxième boîtier et la troisième région de l'unité d'affichage flexible est située dans le troisième boîtier, et
où l'au moins un processeur est configuré pour :
détecter si le dispositif électronique est dans l'état normal, à l'aide de l'au moins un capteur ;
commander le premier élément à aimant variable de sorte que les pôles opposés du premier élément à aimant et du premier élément à aimant variable se font face ; et
commander le deuxième élément à aimant variable de sorte que les pôles opposés du deuxième élément à aimant et du deuxième élément à aimant variable se font face pendant que le dispositif électronique est dans l'état normal.

12. Dispositif électronique (101) selon la revendication 1, où le premier boîtier (110) inclut une plaque arrière configurée pour former une surface arrière du dispositif électronique (101), et
où la plaque arrière inclut une première région spécifiée et une deuxième région spécifiée formées pour être sensiblement transparentes.

13. Dispositif électronique (101) selon la revendication 12, où le dispositif électronique (101) inclut un état normal dans lequel la deuxième région (162) de l'unité d'affichage flexible (160) est située dans le deuxième boîtier (120) et la troisième région (163) de l'unité d'affichage flexible (160) est située dans le troisième boîtier (130),
où dans l'état normal, la première région spécifiée chevauche au moins partiellement la deuxième région (162) de l'unité d'affichage flexible (160), et
où dans l'état normal, la deuxième région spécifiée chevauche au moins partiellement la troisième région (163) de l'unité d'affichage flexible (160).
